# EUROPEAN PATENT SPECIFICATION

(11) **EP 1 799 674 B1**
(45) Date of publication and mention of the grant of the patent: **05.05.2010**
(21) Application number: 05786765.7
(22) Date of filing: 03.10.2005
(51) Int. Cl.: C07D 409/14, C07D 405/14, C07D 417/14, A61K 31/4709, A61P 31/04

(54) **NEW PIPERIDINE ANTIBIOTICS**
NEUE PIPERIDIN-ANTIBIOTIKA
NOUVEAUX ANTIBIOTIQUES DE PIPERIDINE

(30) Priority: 05.10.2004 WO PCT/EP2004/011087
(43) Date of publication of application: 27.06.2007
(73) Proprietor: Actelion Pharmaceuticals Ltd., 4123 Allschwil (CH)
(72) Inventor: SURIVET, Jean-Philippe, F-68300 Saint-Louis (FR); HUBSCHWERLEN, Christian, F-68480 Durmenach (FR); ZUMBRUNN ACKLIN, Cornelia, CH-4058 Basel (CH)
(74) Representative: Ruhlmann, Eric
(86) International application number: PCT/IB2005/053238
(87) International publication number: WO 2006/038172

(56) References cited:
- WO-A-00/43383
- WO-A-01/25227
- WO-A-2004/002490
- WO-A-2004/024713
- WO-A-2004/035569
- DE-A1- 10 247 233

## Description

The present invention concerns novel antibiotics, pharmaceutical antibacterial compositions containing them and the use thereof in the manufacture of a medicament for the treatment of infections (e.g. a bacterial infection). These compounds are useful antimicrobial agents effective against a variety of human and veterinary pathogens including among others Gram positive and Gram negative aerobic and anaerobic bacteria and mycobacteria.

The intensive use of antibiotics has exerted a selective evolutionary pressure on microorganisms to produce genetically based resistance mechanisms. Modem medicine and socio-economic behaviour exacerbates the problem of resistance development by creating slow growth situations for pathogenic microbes, e.g. artificial joints-related infections, and by supporting long-term host reservoirs, e.g. in immuno-compromised patients.

In hospital settings, an increasing number of strains of *Staphylococcus aureus, Streptococcus pneumoniae, Enterococcus spp*., and *Pseudomonas aeruginosa*, major sources of infections, are becoming multi-drug resistant and therefore difficult if not impossible to treat:
- *S. aureus* is resistant to β-lactam, quinolone and now even to vancomycin;
- *S. pneumoniae* is becoming resistant to penicillin, quinolone and even to new macrolides;
- *Enterococci* are quinolone and vancomycin resistant and β-lactams are inefficacious against these strains;
- *Enterobacteriacea* are cephalosporin and quinolone resistant;
- *P. aeruginosa* are β-lactam and quinolone resistant.

Further new emerging organisms like *Acinetobacter* which have been selected during therapy with the currently used antibiotics are becoming a real problem in hospital settings.

In addition, microorganisms that are causing persistent infections are increasingly being recognized as causative agents or cofactors of severe chronic diseases like peptic ulcers or heart diseases.

A new type of quinoline or naphthridine derivatives having antibacterial activity and therefore useful for treating infections in mammals, particularly in humans have been reported.

WO 99/37635, WO 00/21948, WO 00/21952, WO 00/43383 and WO 03/101138 disclose quinoline, naphthyridine and quinazoline derivatives containing a 4-methylpiperidinyl spacer.

WO 00/78748, WO 02/50040 and WO 02/050061 disclose quinoline and naphthyridine derivatives containing a piperazinyl spacer.

WO 01/07432, WO 01/07433, WO 02/08224, WO 02/056882, WO 03/064421, WO 03/064431, WO 2004/002490 and WO 2004/058144 disclose quinoline, quinoxaline and naphthyridine derivatives containing a 4-aminopiperidinyl spacer.

WO 2004/035569 discloses quinoline and naphthyridine derivatives containing a 3-aminomethylpiperidinyl spacer.

WO 2004/002992, WO 03/087098, WO 2004/014361 1 and WO 2004/035569 disclose quinoline, quinoxaline and naphthyridine derivatives containing a 4-aminocyclohexyl spacer.

WO 01/025227, WO 02/040474, WO 2004/011454, WO 2004/024712 and WO 2004/024713 disclose quinoline derivatives containing a 4-propyl-piperidinyl spacer.

It has now been found that certain novel bicyclic derivatives are useful antimicrobial agents and effective against a variety of multi-drug resistant bacteria. Thus, the present invention relates to novel piperidine derivatives of the general formula 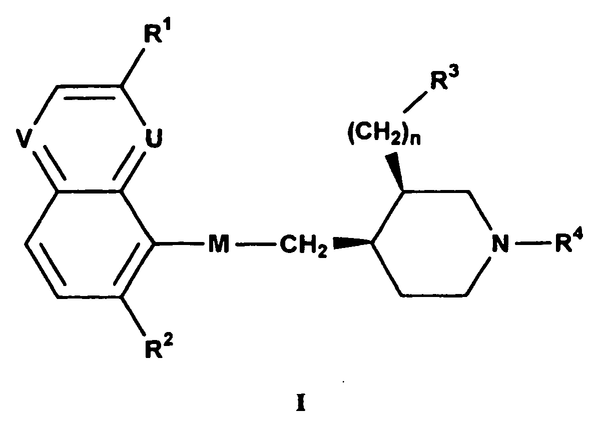 wherein
one of U and V represents N, the other represents N or CH;
M represents CH₂CH₂, CH(OH)CH(OH), CH(OH)CH₂, or OCH₂;
R¹ represents alkyl of one to four carbon atoms, haloalkyl of one to four carbon atoms, alkoxy of one to four carbon atoms, haloalkoxy of one to four carbon atoms, halogen or cyano;
R² represents hydrogen or halogen;
R³ represents carboxy, carboxamido, alkylaminocarbonyl wherein the alkyl group is a (C₁-C₆)alkyl group, hydroxy, aminocarbonyloxy, 2-tetrazolyl or 3-methyl-1,2,4-oxadiazol-5-yl;
R⁴ is selected from the group consisting of heteroarylalkyl wherein the heteroaryl is benzofuran-2-yl and the alkyl is a (C₁-C₂)alkyl group, heteroaryl-S(O)ₘ-alkyl wherein m is 0, the heteroaryl is 2-thienyl and the alkyl is a (C₁-C₂)alkyl group and CH₂-CH=CH-aryl wherein the aryl is phenyl or 2,5-difluorophenyl;
n is an integer from 0 to 3; and
m is 0 or 2 (and preferably 0).

In particular, the compounds of formula I may be compounds of formula I_{CE} 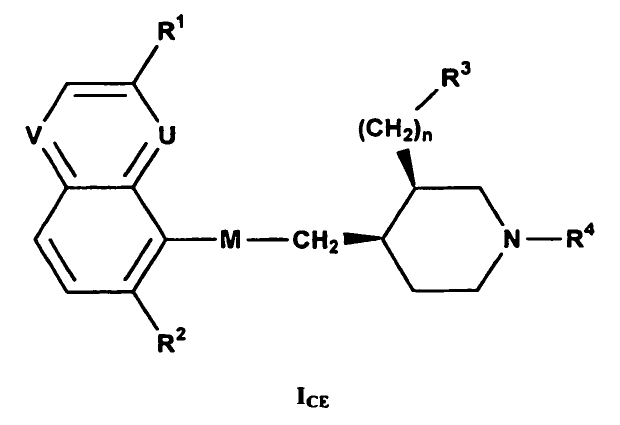 wherein
U represents CH and V represents N or U and V are each N;
M represents CH₂CH₂, CH(OH)CH(OH), CH(OH)CH₂ or OCH₂;
R¹ represents alkoxy;
R² represents hydrogen;
R³ represents carboxy, hydroxy or aminocarbonyloxy;
R⁴ represents heteroarylalkyl, heteroaryl-S(O)ₘ-alkyl or CH₂-C=C-aryl;
n is an integer between 0 and 3; and
m is 0.

A further embodiment of the bicyclic derivatives of the above formula I or I_{CE} relates to their tautomers, their optically pure enantiomers, mixtures of enantiomers, racemates, optically pure diastereoisomers, mixtures of diastereoisomers, diastereoisomeric racemates, mixture of diastereoisomeric racemates, meso forms, pharmaceutically acceptable salts and solvent complexes thereof. Particularly preferred are the optically pure enantiomers, optically pure diastereoisomers, meso forms, pharmaceutically acceptable salts and solvent complexes.

The following paragraphs provide definitions of the various chemical moieties for the compounds according to the invention and are intended to apply uniformly throughout the specification and claims, unless an otherwise expressly set out definition provides a broader or narrower definition:
❖ The term "alkyl" refers to a saturated straight or branched chain alkyl group, containing from one to nine, preferably one to six, in particular one to four carbon atoms, for example methyl, ethyl, propyl, *iso*-propyl, *n*-butyl, *iso*-butyl, *sec*-butyl, *tert*-butyl, *n*-pentyl, iso-pentyl, *n*-hexyl, 2,2-dimethylbutyl, *n*-octyl. The term "(C₁-Cₓ)alkyl" (x being an integer) refers to an alkyl group containing 1 to x carbon atoms.
❖ The term "haloalkyl" refers to a saturated straight or branched chain alkyl group, containing from one to six and preferably one to four carbon atoms, in which at least one hydrogen atom (and possibly all) has been replaced by a halogen atom. Representative examples of haloalkoxy groups include, but are not limited to, trifluoromethyl or 2,2,2-trifluoroethyl. The term "(C₁-Cₓ)haloalkyl" (x being an integer) refers to a straight of branched chain haloalkyl group containing 1 to x carbon atoms.
❖ The term "alkoxy" refers to a saturated straight or branched chain alkoxy group, containing from one to nine, preferably one to six, and in particular one to four carbon atoms. Representative examples of alkoxy groups include, but are not limited to, methoxy, ethoxy, propoxy, *iso*-propoxy, *n*-butoxy, *iso*-butoxy, *sec*-butoxy, *tert*-butoxy or *n*-hexyloxy. The term "(C₁-Cₓ)alkoxy" refers to a straight or branched chain alkoxy group containing 1 to x carbon atoms.
❖ The term "haloalkoxy" refers to a saturated straight or branched chain alkoxy group, containing from one to six and preferably one to four carbon atoms, in which at least one hydrogen atom (and possibly all) has been replaced by a halogen atom. Representative examples of haloalkoxy groups include, but are not limited to, trifluoromethoxy or difluoromethoxy. The term "(C₁-Cₓ)haloalkoxy" (x being an integer) refers to a straight of branched chain haloalkoxy group containing 1 to x carbon atoms.
❖ The term "halogen" refers to fluorine, chlorine, bromine or iodine, and preferably to fluorine or chlorine.
❖ The term "alkylaminocarbonyl" means an alkylaminocarbonyl group wherein the alkyl group is a (C₁-C₆)alkyl group.
❖ The term (C₁-C₄)alkoxy-(C₁-C₄)alkyl refers to a (C₁-C₄)alkyl group as previously defined itself substituted with a (C₁-C₄)alkoxy group as previously defined.
❖ When in the formula 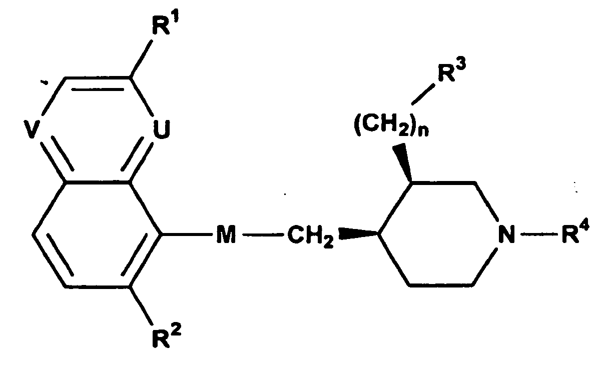 M represents the radical OCH₂, this means specifically that the oxygen atom of the OCH₂ radical is attached to the 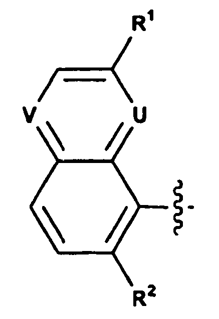 group whereas CH₂ part of the OCH₂ radical is attached to the 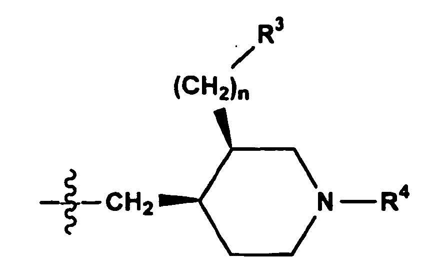 group. The same is applicable *mutatis mutandis* to the other asymmetric meanings of the group M.

As brief examples only, the combinations "alkylaminocarbonyl", "arylalkyl", "heteroarylalkyl", "heteroaryl-S(O)ₘ-alkyl" and "CH₂-CH=CH-aryl" can mean:
- "alkylaminocarbonyl": methylaminocarbonyl or ethylaminocarbonyl;
- "arylalkyl": benzyl, phenethyl, naphthylmethyl, 4-fluorobenzyl, 2,4-dimethoxybenzyl or 2,4-di-trifluoromethyl-phenethyl;
- "heteroarylalkyl": or benzofuran-2-yl-methyl;
- "CH₂-CH=CH-aryl": (2,5-difluoro-phenyl)-allyl.

Compounds of formula I carrying a double bond in M are present as Z/E (cis/trans) isomer mixtures or as Z (cis) or E (trans) isomers. Preferred are the E (trans) isomers.

The combinations for the symbols U and V are evident from the following particular structures:

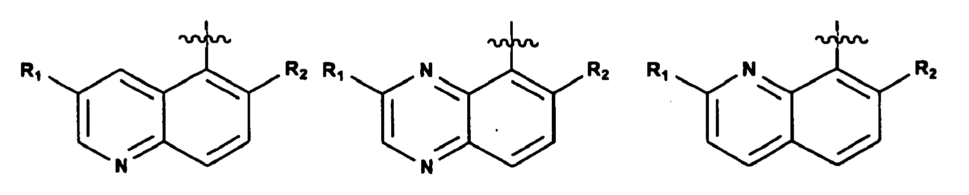

According to a first variant of the invention, the compounds of formula I or I_{CE} will be such that U is CH and V is N.

According to a second variant of the invention, the compounds of formula I or I_{CE} will be such that both U and V are N.

According to a third variant of the invention, the compounds of formula I or I_{CE} will be such that both U is N and V is CH.

Compounds of formula I wherein M is CH₂CH₂, CH(OH)CH₂ or OCH₂ will be preferred.

Also preferred will be compounds of formula I wherein R¹ is C₁-C₃ alkyl, methoxy, ethoxy, trifluoromethyl, trifluoromethoxy or cyano, in particular methyl, methoxy or cyano (and notably methoxy).

Preferably also, R² will be hydrogen or fluorine (and notably hydrogen).

R³ will preferably be carboxy.

R⁴ will preferably be thiophen-2-ylsulfanylethyl, (2,5-difluoro-phenyl)-allyl or benzofuran-2-ylmethyl. More preferably, R⁴ will be thiophen-2-ylsulfanylethyl.

n will preferably be 0, 1 or 2 when R³ is carboxy, carboxamido or alkylaminocarbonyl. n will preferably be 1, 2 or 3 when R³ is hydroxy or aminocarbonyloxy.

m is preferably 0.

Besides, preferred compounds of formula I are those wherein at least one of the following characteristics is present:
❖ U is CH and V is N;
❖ R¹ is (C₁-C₂)alkyl, (C₁-C₂)haloalkyl, (C₁-C₂)alkoxy, (C₁-C₂)haloalkoxy, halogen or cyano;
❖ R² represents hydrogen or fluorine;
❖ R³ represents carboxy, carboxamido, alkylaminocarbonyl, hydroxy or aminocarbonyloxy;
❖ R⁴ is heteroarylalkyl, heteroaryl-S(O)ₘ-alkyl or CH₂-CH=CH-aryl, m representing 0.

More preferred compounds of formula I are those wherein at least one of the following characteristics is present:
❖ U is CH and V is N;
❖ R¹ is methoxy or cyano (and in particular methoxy);
❖ R² represents hydrogen;
❖ R³ represents carboxy and n is 0 or 1 (and in particular 0);
❖ M is CH(OH)CH₂;
❖ R⁴ is selected from the group consisting of:
   o heteroarylalkyl wherein the heteroaryl is benzofuran-2-yl and the alkyl is a (C₁-C₂)alkyl group (in particular methyl);
   o heteroaryl-S(O)ₘ-atkyl wherein m is 0, the heteroaryl is 2-thienyl and the alkyl is a (C₁-C₂)alkyl group (in particular ethyl); and
   o CH₂-CH=CH-aryl wherein the aryl is phenyl or 2,5-difluorophenyl.

The stereochemistry of the piperidine ring derives from the degradation product of quinine and is the following (Tetrahedron Letters (2001), 42, 3235-38):

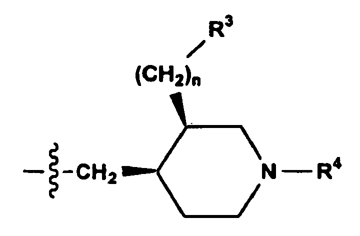

Preferred compounds of the formula I are the following:
- (*3R,4S*)4-[2-(3-methoxy-quinolin-5-yloxy)-ethyl]-1-[2-(thiophen-2-ylsulfanyl)-ethyl]-piperidine-3-carboxylic acid
- 3-{(*3R,4S*)-4-[2-(3-methoxy-quinolin-5-yloxy)-ethyl]-1-[2-(thiophen-2-ylsulfanyl)-ethyl]-piperidin-3-yl}-propionic acid
- (*3R,4R*)-4-[3-(3-methoxy-quinolin-5-yl)-propyl]-1-[2-(thiophen-2-ylsulfanyl)-ethyl]-piperidine-3-carboxylic acid
- 3-{(*3R,4R*)-4-[3-(3-methoxy-quinolin-5-yl)-propyl]-1-[2-(thiophen-2-ylsulfanyl)-ethyl]-piperidin-3-yl}-propionic acid
- (*3R,4R*)-4-[(*3RS*)-3-hydroxy-3-(3-methoxy-quinolin-5-yl)-propyl]-1-[2-(thiophen-2-ylsulfanyl)-ethyl]-piperidine-3-carboxylic acid
- 3-{(*3R,4R*)-4-[(*3RS*)-3-hydroxy-3-(3-methoxy-quinolin-5-yl)-propyl]-1-[2-(thiophen-2-ylsulfanyl)-ethyl]-piperidin-3-yl}-propionic acid
- (*3R,4R*)-4-[(*3RS*)-3-(6-fluoro-3-methoxy-quinolin-5-yl)-3-hydroxy-propyl]-1-[2-(thiophen-2-ylsulfanyl)-ethyl]-piperidine-3-carboxylic acid
- 3-{(*3R,4R*)-4-[(*3RS*)-3-(6-fluoro-3-rnethoxy-quinolin-5-yl)-3-hydroxy-propyl]-1-[2-(thiophen-2-ylsulfanyl)-ethyl]-piperidin-3-yl}-propionic acid
- (*3R,4S*)-4-[2-(6-fluoro-3-methoxy-quinolin-5-yloxy)-ethyl]-1-[2-(thiophen-2-ylsulfanyl)-ethyl]-piperidine-3-carboxylic acid
- 3-{(*3R,4S*)-4-[2-(6-fluoro-3-methoxy-quinolin-5-yloxy)-ethyl]-1-[2-(thiophen-2-ylsulfanyl)-ethyl]-piperidin-3-yl}-propionic acid
- (*3R,4R*)-4-[(*3RS*)-3-hydroxy-3-(2-methoxy-quinolin-8-yl)-propyl]-1-[2-(thiophen-2-ylsulfanyl)-ethyl]-piperidine-3-carboxylic acid
- 3-{(*3R,4S*)4-[(*3RS*)-3-hydroxy-3-(2-methoxy-quinolin-8-yl)-propyl]-1-[2-(thiophen-2-ylsulfanyl)-ethyl]-piperidin-3-yl}-propionic acid
- (*3R,4S*)-4-[2-(2-methoxy-quinolin-8-yloxy)-ethyl]-1-[2-(thiophen-2-ylsulfanyl)-ethyl]-piperidine-3-carboxylic acid
- 3-{(*3R,4S*)-4-[2-(2-methoxy-quinolin-8-yloxy)-ethyl]-1-[2-(thiophen-2-ylsulfanyl)-ethyl]-piperidin-3-yl}-propionic acid
- (*3R,4R*)-4-[(*3RS*)-3-hydroxy-3-(3-methoxy-quinolin-5-yl)-propyl]-1-(3-phenyl-propyl)-piperidine-3-carboxylic acid
- (*3R,4R*)-4-[(*3RS*)-3-hydroxy-3-(3-methoxy-quinolin-5-yl)-propyl]-1-(2-phenylsulfanyl-ethyl)-piperidine-3-carboxylic acid
- (*1R,2R*)-3-{(*3R,4S*)-3-(2-hydroxy-ethyl)-1-[2-(thiophen-2-ylsulfanyl)-ethyl]-piperidin-4-yl}-1-(3-methoxy-quinoxalin-5-yl)-propane-1,2-diol
and in particular the 14 first compounds mentioned in the list hereabove.

Also preferred are the following compounds.
- 3-{(*3R,4S*)-4-[2-(3-methoxy-quinolin-5-yloxy)-ethyl]-1-[2-(thiophen-2-ylsulfanyl)-ethyl]-piperidin-3-yl}-propionic acid;
- 3-{(*3R,4S*)-4-[2-(3-methoxy-quinolin-5-yloxy)-ethyl]-1-[2-(thiophen-2-ylsulfanyl)-ethyl]-piperidin-3-yl}-propan-1-ol;
- (3*R*,4*R*)-4-[3-(3-methoxy-quinolin-5-yl)-propyl]-1-[2-(thiophen-2-ylsulfanyl)-ethyl]-piperidine-3-carboxylic acid;
- (*3R,4S*)-1-benzofuran-2-ylmethyl-4-[3-(3-methoxy-quinolin-5-yl)-propyl]-piperidine-3-carboxylic acid;
- (*3R,4R*)-{4-[3-(3-methoxy-quinolin-5-yl)-propyl]-1-[2-(thiophen-2-ylsulfanyl)-ethyl]-piperidin-3-yl}-acetic acid;
- 2-{(*3R,4S*)-4-[3-(3-methoxy-quinolin-5-yl)-propyl]-1-[2-(thiophen-2-ylsulfanyl)-ethyl]-piperidin-3-yl} -ethanol;
- carbamic acid 2-{(*3R,4R*)-4-[3-(3-methoxy-quinolin-5-yl)-propyl]-1-[2-(thiophen-2-ylsulfanyl)-ethyl]-piperidin-3-yl}-ethyl ester;
- 4-[3-hydroxy-3-(3-methoxy-quinolin-5-yl)-propyl]-1-[2-(thiophen-2-ylsulfanyl)-ethyl]-piperidine-3-carboxylic acid;
- 1-benzofuran-2-ylmethyl-(*3R,4R*)-4-[(*3RS*)-3-hydroxy-3-(3-methoxy-quinolin-5-yl)-propyl]-piperidine-3-carboxylic acid;
- (*3R,4R*)-4-[(*3RS*)-3-hydroxy-3-(3-methoxy-quinolin-5-yl)-propyl]-1-*trans*-(3-phenyl-allyl)-piperidine-3-carboxylic acid;
- (*3R,4R*)-1-[3-(2,5-difluoro-phenyl)-allyl]-4-[(*3RS*)-3-hydroxy-3-(3-methoxy-quinolin-5-yl)-propyl]-piperidine-3-carboxylic acid;
- (*3R,4R*)-4-[(*3RS*)-3-hydroxy-3-(3-methoxy-quinolin-5-yl)-propyl]-1-(thiazol-2-ylcarbamoylmethyl)-piperidine-3-carboylic acid;
- {(*3R,4S*)-4-[(*2R,3R*)-2,3-dihydroxy-3-(3-methoxy-quinolin-5-yl)-propyl]-1-[2-(thiophen-2-ylsulfanyl)-ethyl]-piperidin-3-yl} -acetic acid;
- (*1R,2R*)-[(*3R,4S*)-3-{3-(2-hydroxy-ethyl)-1-[2-(thiophen-2-ylsulfanyl)-ethyl]-piperidin-4-yl}]-1-(3-methoxy-quinolin-5-yl)-propane-1,2-diol;
- (*1R,2R*)-{(*3R,4S*)-3-[1-[3-*trans*-(2,5-difluoro-phenyl)-allyl]-3-(2-hydroxy-ethyl)-piperidin-4-yl]}-1-(3-methoxy-quinolin-5-yl)-propane-1,2-diol;
and the pharmaceutically acceptable salts of the latter.

In particular, the following compounds.
- 3-{(*3R,4S*)-4-[2-(3-methoxy-quinolin-5-yloxy)-ethyl]-1-[2-(thiophen-2-ylsulfanyl)-ethyl]-piperidin-3-yl}-propionic acid;
- 3-{(*3R,4S*)-4-[2-(3-methoxy-quinolin-5-yloxy)-ethyl]-1-[2-(thiophen-2-ylsulfanyl)-ethyl]-piperidin-3-yl}-propan-1-ol;
- (3*R,*4*R*)-4-[3-(3-methoxy-quinolin-5-yl)-propyl]-1-[2-(thiophen-2-ylsulfanyl)-ethyl]-piperidine-3-carboxylic acid;
and their pharmaceutically acceptable salts will be preferred.

Compounds of formula I are suitable for the use as chemotherapeutic active compounds in human and veterinary medicine and as substances for preserving inorganic and organic materials in particular all types of organic materials for example polymers, lubricants, paints, fibres, leather, paper and wood.

These compounds according to the invention are particularly active against bacteria and bacteria-like organisms. They are therefore particularly suitable in human and veterinary medicine for the prophylaxis and chemotherapy of local and systemic infections caused by these pathogens as well as disorders related to bacterial infections comprising pneumonia, otitis media, sinusitis, bronchitis, tonsillitis, and mastoiditis related to infection by *Streptococcus pneumoniae, Haemophilus influenzae, Moraxella catarrhalis, Staphylococcus aureus, Enterococcus faecalis, E. faecium, E. casselflavus, S. epidermidis, S. haemolyticus,* or *Peptostreptococcus* spp.; pharyngitis, rheumatic fever, and glomerulonephritis related to infection by *Streptococcus pyogenes,* Groups C and G streptococci, *Corynebaterium diphtheriae,* or *Actinobacillus haemolyticum;* respiratory tract infections related to infection by *Mycoplasma pneumoniae, Legionella pneumophila, Streptococcus pneumoniae, Haemophilus influenzae,* or *Chlamydia pneumoniae;* blood and tissue infections, including endocarditis and osteomyelitis, caused by *S*. *aureus, S. haemolyficus, E. faecalis, E. faecium, E. durans,* including strains resistant to known antibacterials such as, but not limited to, beta-lactams, vancomycin, aminoglycosides, quinolones, chloramphenicol, tetracyclines and macrolides; uncomplicated skin and soft tissue infections and abscesses, and puerperal fever related to infection by *Staphylococcus aureus,* coagulase-negative staphylococci (i.e., *S*. *epidermidis, S*. *hemolyticus,* etc.), *Streptococcus pyogenes, Streptococcus agalactiae,* Streptococcal groups C-F (minute colony streptococci), viridans streptococci, *Corynebacterium minutissimum, Clostridium* spp., or *Bartonella henselae;* uncomplicated acute urinary tract infections related to infection by *Staphylococcus aureus,* coagulase-negative staphylococcal species, or *Enterococcus* spp.; urethritis and cervicitis; sexually transmitted diseases related to infection by *Chlamydia trachomatis, Haemophilus* □*eglumi, Treponema pallidurn, Ureaplasma urealyticum,* or *Neiserria gonorrheae;* toxin diseases related to infection by *S. aureus* (food poisoning and toxic shock syndrome), or Groups A, B, and C streptococci; ulcers related to infection by *Helicobacter pylori;* systemic febrile syndromes related to infection by *Borrelia recurrentis;* Lyme disease related to infection by *Borrelia burgdorferi;* conjunctivitis, keratitis, and dacrocystitis related to infection by *Chlamydia trachomatis, Neisseria gonorrhoeae, S. aureus, S. pneumoniae, S. pyogenes, H. influenzae,* or *Listeria* spp.; disseminated *Mycobacterium avium* complex (MAC) disease related to infection by *Mycobacterium avium,* or *Mycobacterium intracellulare;* infections caused by *Mycobacterium tuberculosis, M leprae, M paratuberculosis, M kansasii,* or M *chelonei;* gastroenteritis related to infection by *Campylobacter jejuni;* intestinal protozoa related to infection by *Cryptosporidium spp.;* odontogenic infection related to infection by viridans streptococci; persistent cough related to infection by *Bordetella pertussis;* gas gangrene related to infection by *Clostridium perfringens* or *Bacteroides spp.;* and atherosclerosis or cardiovascular disease related to infection by *Helicobacter pylori* or *Chlamydia pneumoniae.*

Compounds of Formula (I) according to the present invention are further useful for the preparation of a medicament for the treatment of infections that are mediated by bacteria such as *E. coli, Klebsiella pneumoniae* and other enterobacteriaceae, *Acinetobacter spp., Stenothrophomonas mallophilia, Neisseria meningitidis, Bacillus cereus, Bacillus anthracis, Corynebacterium spp., Propionibacterium acnes* and bacteroide *spp.*

Compounds of Formula (I) according to the present invention are further useful to treat protozoal infections caused by *Plasmodium malaria, Plasmodium falciparum, Toxoplasma gondii, Pneumocystis carinii, Trypanosoma brucei* and *Leishmania spp*.

The present list of pathogens is to be interpreted merely as examples and in no way as limiting.

As well as in humans, bacterial infections can also be treated in other species like pigs, ruminants, horses, dogs, cats and poultry

The present invention also relates to pharmacologically acceptable salts, or solvates and hydrates, respectively, and to compositions and formulations of compounds of formula I.

Examples of pharmacologically acceptable salts of sufficiently basic compounds of formula I are selected from the group consisting of salts of physiologically acceptable mineral acids like hydrochloric, hydrobromic, sulfuric and phosphoric acid; or salts of organic acids like methanesulfonic, p-toluenesulfonic, lactic, acetic, trifluoroacetic, citric, succinic, fumaric, maleic and salicylic acid. Further, a sufficiently acidic compound of formula I may form alkali or earth alkaline metal salts, for example sodium, potassium, lithium, calcium or magnesium salts; ammonium salts; or organic base salts, for example methylamine, dimethylamine, trimethylamine, triethylamine, ethylenediamine, ethanolamine, choline hydroxide, eglumine, piperidine, morpholine, tris-(2-hydroxyethyl)amine, lysine or arginine salts. Compounds of Formula I may be solvated, especially hydrated. The hydratation can occur during the process of production or as a consequence of the hygroscopic nature of the initially water free compounds of Formula I. The compounds of Formula I contain asymmetric C-atoms and may be present either as achiral compounds, mixtures of diastereomers, mixtures of enantiomers or as optically pure compounds.

The pharmaceutical composition according to the present invention contains at least one compound of formula I as the active agent and optionally carriers and/or diluents and/or adjuvants, and may also contain additional known antibiotics.

The present invention also relates to pro-drugs that are composed of a compound of formula I or I_{CE} having at least one pharmacologically acceptable protective group that will be cleaved off under physiological conditions. Such prodrugs have been reviewed by Beaumont, Kevin; Webster, Robert; Gardner, Iain; Dack, Kevin in Current Drug Metabolism (2003), 4(6), 461-485. Examples of such promoities are, in case the compound of formula I or I_{CE} contains a free carboxylic acid, alkoxy- (e.g. ethoxy), phenalkyloxy- (e.g. benzyloxy), OCH(R^{a})OCOR^{b} (e.g. pivaloyloxymethyloxy), OCH(R^{a})OCO₂R^{b} (*e*.*g*. [[(1-methylethoxy)carbonyl]oxy]ethyl ester; proxetil), OCH(R^{a})OR^{b}, 2-alkyl-, 2-cycloalkyl-, or 2-cycloalkylalkyl-oxycarbonyl-2-alkylidene-ethoxy groups, 5-alkyl[1,3]dioxol-2-one-4yl-methyloxy, dialkylamino-alkoxy or acyloxy wherein R^{a} is hydrogen or (C₁-C₄)alkyl and R^{b} is hydrogen, (C₁-C₆)alkyl, (C₂-C₆)alkenyl, (C₁-C₆)alkoxy-(C₁-C₆)alkyl, (C₁-C₆)haloalkoxy-(C₁-C₆)alkyl, (C₃-C₆)cycloalkyl or (C₃-C₆)cycloalkylmethyl. Furthermore, if a free hydroxy group is present on a compound of formula I or I_{CE}, it can be protected as a prodrug of the type sulfate (OSO₃H), phosphate (OPO₃H₂), oxymethylene phosphate (OCH₂OPO₃H₂), succinate (OCOCH₂CH₂COOH), ester of dimethylaminoglycine or of a naturally occurring amino acid, or as an inorganic salt of one of the latter.

As mentioned above, therapeutically useful agents that contain compounds of Formula (I), their solvates, salts or formulations are also comprised in the scope of the present invention. In general, compounds of Formula (I) will be administered by using the known and acceptable modes known in the art, either alone or in combination with any other therapeutic agent. Such therapeutically useful agents can be administered by one of the following routes: oral, e.g. as tablets, dragee, coated tablets, pills, semisolids, soft or hard capsules, for example soft and hard gelatine capsules, aqueous or oily solutions, emulsions, suspensions or syrups, parenteral including intravenous, intramuscular and subcutaneous injection, e.g. as an injectable solution or suspension, rectal as suppositories, by inhalation or insufflation, e.g. as a powder formulation, as microcrystal or as a spray (e.g. liquid aerosol), transdermal, for example via an transdermal delivery system (TDS) such as a plaster containing the active ingredient, topical or intranasal. The substance of the present invention can also be used to impregnate or coated devices that are foreseen for implantation like catheters or artificial joints. The pharmaceutically useful agents may also contain additives for conservation, stabilisation, e.g. UV stabilizers, emulsifiers, sweetener, aromatisers, salts to change the osmotic pressure, buffers, coating additives and antioxidants.

Another aspect of the invention concerns a method for the treatment of disease comprising the administration to the patient of a pharmaceutically active amount of a derivative of formula I.

### PREPARATION OF COMPOUNDS OF FORMULA I

### Abbreviations:

The following abbreviations are used throughout the specification and the examples:

| | |
|---|---|
| AcOH | Acetic acid |
| AD-mix α | 1,4-*bis*(dihydroquinine)phthalazine, K₃Fe(CN)₆, K₂CO₃ and K₂OsO₄.2H₂O |
| AD-mix β | 1,4-*bis*(dihydroquinidine)phthalazine, K₃Fe(CN)₆, K₂CO₃ and K₂OsO₄.2H₂O |
| aq. | aqueous |
| atm | atmosphere |
| 9-BBN | 9-borobicyclo[3.3.1]nonane |
| d | day(s) |
| 1,2-DCE | 1,2-dichloroethane |
| DCM | dichloromethane |
| DIAD | diisopropyl azodicarboxylate |
| DIBAH | diisobutyl aluminium hydride |
| DIPEA | *N,N*-diisopropylethylamine |
| DMAP | 4-dimethylaminopyridine |
| 1,2-DME | 1,2-dimethoxyethane |
| DMF | *N,N*-dimethylformamide |
| DMSO | dimethylsulfoxide |
| DMPU | 1,3-dimethyl-3,4,5,6-tetrahydro-2(1*H*)-pyrimidone |
| EA | ethyl acetate |
| ESI | Electron Spray Ionisation |
| Ether | diethyl ether |
| EtOH | ethanol |
| h | hour |
| Hex | *n*-hexane |
| HV | high vacuum |
| LG | Leaving Group |
| MeCN | acetonitrile |
| MeOH | methanol |
| min | minutes |
| MS | Mass Spectroscopy |
| MsCI | mesyl chloride |
| *n*-BuLi | *n*-butyllithium |
| NBS | *N*-bromosuccinimide |
| NMO | *N*-methylmorpholine-*N*-oxide |
| org. | organic |
| PPh₃ | triphenylphosphine |
| PTSA | *p*-toluenesulfonic acid |
| Rf | retention factor |
| SiO₂ | silica gel |
| TBAF | *N*-tetrabutylammonium fluoride |
| TBDMS-Cl | *tert*-butyldimethylsilyl chloride |
| TEA | triethylamine |
| TFA | trifluoroacetic acid |
| THF | tetrahydrofuran |
| TLC | thin layer chromatography |
| TsCl | tosyl chloride |
| rt | room temperature |
| wt% | weight percent |

### General preparation methods:

The novel compounds of formula I can be manufactured in accordance with the present invention by
a) reacting a compound of the general formula II 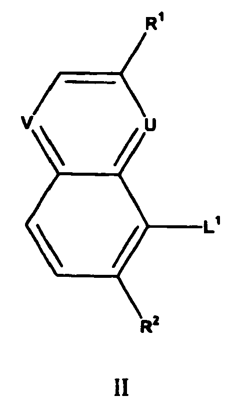 with a compound of the general formula III 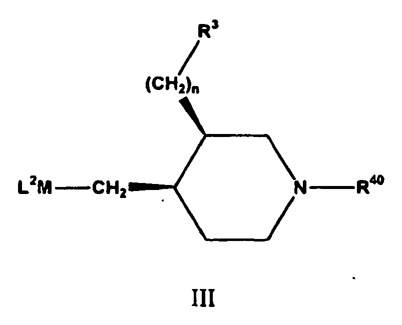 wherein L¹ and L² are reactive atoms or groups functionally modified to connect the moieties of formulas II and III, R⁴⁰ is as R⁴ or is a nitrogen protecting group such as benzyloxycarbonyl, allyloxycarbonyl or t-butyloxycarbonyl, carboxy and/or hydroxy groups present are protected, and the other symbols are as before;
   and, where required, deprotecting such carboxy and/or hydroxy groups and subjecting any nitrogen protecting group R⁴⁰ to the process under b); or
b) *N*-deprotecting a compound of the general formula IV: 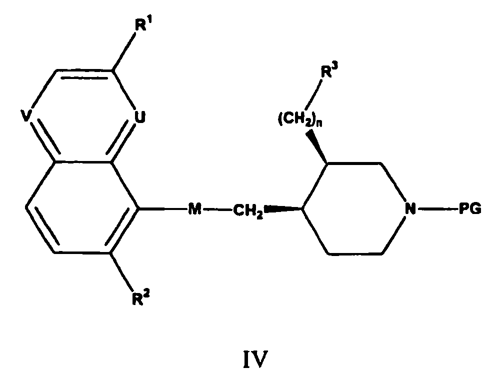 wherein PG is a nitrogen protecting group such as benzyloxycarbonyl, allyloxycarbonyl or t-butyloxycarbonyl, carboxy and/or hydroxy groups present are protected, and the other symbols are as before;
   and, where required, deprotecting such carboxy and/or hydroxy groups
   and treating the N-deprotected product with compounds yielding the group R⁴; or
c) transforming the group R³⁰ of a compound of the general formula V: 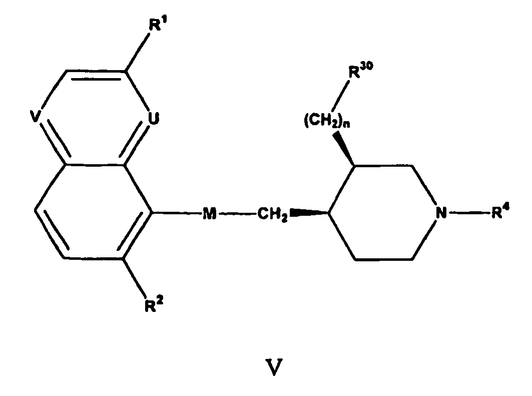 wherein R³⁰ is COOR or OR⁰, R and R⁰ are carboxy and hydroxy protecting groups, respectively, and the other symbols are as before,
   into the group R³; or
d) converting a compound of formula I into a pharmaceutically acceptable salt thereof.

The starting piperidine derivatives of formula III, wherein R⁴⁰ is a nitrogen protecting group, such as benzyloxycarbonyl, allyloxycarbonyl or t-butyloxycarbonyl, are manufactured as follows:

Compounds of formula **III-1** (Scheme 1) are obtained from the corresponding silyl ethers **III-a** like for example *t*-butyldimethylsilyl ethers (compounds of formula III wherein L²M is TBDMSOCH₂) by treatment with fluoride ions like TBAF, aq. hydrofluoric acid or NaF. These ethers **III-a** are prepared starting from compound **III-b** (formula III wherein R⁴ is COOC(CH₃)₃, R³ = CH=CH₂, L²M = HOCH₂ and n = 0) obtained according to Tetrahedron Letters (2001), 42, 3235-3238 after protection of the primary alcohol as t-butyldimethylsilyl ether (TBDMS) by reaction with t-butyldimethylsilylchloride in DMF in presence of imidazole between 0°C and 20°C (see J. Am. Chem. Soc. (1972), 94, 6190).

Compound **III-a** is hydroborated with BH₃ dimethylsulfide complex, or 9-BBN (for a review see Smith, K.; Pelter, A. G. Comprehensive Organic Synthesis, B.M. Trost, I. Fleming, Eds; Pergamon Press: New York (1991), vol. 8, p. 703-731) followed by oxidative workup with aq. NaOH and 30% H₂O₂ (see also Pelter, A.; Smith, K. G. Comprehensive Organic Synthesis, B.M. Trost, I. Fleming, Eds; Pergamon Press: New York (1991), vol. 7, p. 593-611) affording compound **III-b** wherein R⁴ is COOC(CH₃)₃, R³ = OH, L²M = TBDMSOCH₂ and n = 2.

In a further step, compound **III-b** is oxidized into the corresponsing aldehyde **III-c** wherein R⁴ is COOC(CH₃)₃, R³ = CHO, L²M = TBDMSOCH₂ and n = 1 using the Moffat-Swern (see Synthesis (1981), 165), or the Dess-Martin periodinane (see J. Am. Chem. Soc. (1991), 113, 7277) oxidation protocols.

In a further step compound **III-c** is oxidized into the corresponsing acid **III-d** wherein R⁴ is COOC(CH₃)₃, R³ = COOH, L²M = TBDMSOCH₂ and n = 1 using potassium permanganate in an acetone-water mixture (see Synthesis (1987), 85) or sodium chlorite in 2-methyl-2-propanol in presence of 2-methyl-2-butene (see Tetrahedron (1981), 37, 2091-2096).

Compound **III-a** can also be transformed into the corresponding aldehyde **III-e** wherein R⁴ is COOC(CH₃)₃, R³ = CHO, L²M = TBDMSOCH₂ and n = 0 by ozonolysis in DCM between -40°C and 40°C.

The corresponding aldehyde **III-e** is reduced into the corresponding alcohol **III-f** wherein R⁴ is COOC(CH₃)₃, R³ = OH, L²M = TBDMSOCH₂ and n = 1 using NaBH₄ in methanol or THF between -30°C and 30°C.

Aldehyde **III-e** is oxydised into the corresponding acid **III-g** using potassium permanganate in acetone water or the above-mentioned protocole for the preparation of **III-d.**

Aldehyde **III-e** is subjected to Wittig olefination using carbomethoxymethylen-triphenylphosphorane in THF, DCM or toluene between -30°C and 110°C or to Wittig Homer olefination using diethylphosphonoacetic acid methyl ester in THF or DCM between -30°C and 60°C in presence of an alkali base such potassium methoxide or NaH affording compound **III-h** wherein R⁴ = COOC(CH₃)₃, R³ = CH=CHCOOMe, L²M = TBDMSOCH₂ and n = 0 (see Org. Synth. Coll. (1973), 5, 509, 547). Compound **III-h** is further hydrogenated over palladium on charcoal in EA or MeOH at rt affording compound **III-i** wherein R⁴ is COOC(CH₃)₃, R³ = COOMe, L²M = TBDMSOCH₂ and n = 2.

The ester **III-i** is transformed into the corresponding acid **III-j** wherein R⁴ = COOC(CH₃)₃, R³ = COOH, L²M = TBDMSOCH₂ and n = 2 using NaOH or KOH in dioxane/water between 0°C and 100°C.

The ester **III-i** is reduced into the corresponding alcohol **III-k** wherein R⁴ = COOC(CH₃)₃, R³ = OH, L²M = TBDMSOCH₂ and n = 3 using LiBH₄ or DIBAH in THF or DCM between -30°C and 30°C.

For compound of formula III wherein R³ = 2,2-dimethyl-[1,3]dioxolan-4-yl and n = 0, compound **III-a** is transformed into the corresponding diol derivative by treatment either with a catalytic amount of osmium tetroxide in the presence of a co-oxidant such as NMO in aqueous solvent such as acetone or DCM (Cha, J.K., Chem. Rev. (1995), 95, 1761-1795) or with AD mixtures in a water/2-methyl-2-propanol mixture as described in Chem. Rev. (1994), 94, 2483. The diol is then reacted with acetone, acetonedimethylacetal, or 2-methoxypropene in presence of a catalytic amount of acid like PTSA in a solvent like DCM or ether to yield a compound of formula III where R³ = 2,2-dimethyl-[1,3]dioxolan-4-yl and n = 0. This dimethyl[1,3]dioxolan-4-yl group represents a masked acid function which can be transformed into the corresponding acid in a later stage by sequencial treatment for example with PTSA or HCl in a solvent like THF/water or MeOH and followed by sodium periodiate oxidation (see Synthesis, 1974, 229). The resulting aldehyde is further oxidized into the corresponding acid of formula III, i.e. where R³ = COOH and n = 0, using methods mentioned above.

Compounds of the general formula **III-2** are obtained form the corresponding compounds **III-1** using the Moffat-Swern oxidation protocol (cf. above) The resulting aldehyde is further converted to the corresponding alkene using the phosphorane generated from methyltriphenylphosphonium bromide and a base like *n*-BuLi or potassium *tert*-butoxide in a solvent such as THF at a temperature between -80°C and 0°C (see Org. Synth. Coll. (1973), 5, 751). The terminal alkene is hydroborated using methods mentioned above. The resulting alcohol is oxidized using said Moffat- Swem oxidation protocole.

The sulfones of the general formula **III-3** are generated in two steps from the corresponding alcohols. Indeed, a Mitsunobu reaction between the alcohols **III-1** and an appropriate thiol such as 1-phenyl-1*H*-tetrazole-5-thiol in conditions previously described affords the intermediate thiols that can be oxidized to the corresponding sulfones **III-3** using aq. hydrogen peroxide in presence of ammonium heptamolybdate tetrahydrate (see J. Org. Chem. (1963), 28, 1140).

The alkynes of formula **III-4** are obtained from compounds of formula **III-1** in two steps. After oxidation of the free alcohol moiety into an aldehyde using a Moffat-Swern oxidation (see Synthesis (1981), 165), or the Dess-Martin periodinane oxidation (see J. Am. Chem. Soc. (1991), 113, 7277), the resulting aldehyde is transformed to the corresponding alkyne using either the protocol developed by Corey and Fuchs (see Tetrahedron Letters (1972), 3769) or more preferably, the method developed by Bestmann using dimethyldiazomethylphosphonate in presence of K₂CO₃ in MeOH (see Synlett (1996), 521).

The required quinoline and quinoxaline derivatives of formula II are either commercially available or prepared following literature procedures. For example 3-substituted quinoxalin-5-ol (L= OH, U= V= N) are prepared as described by Y. Abe et al. in J. Med Chem. (1998), 41, 4062.

Substituted 5-formylquinoline, 8-formylquinoline, or 5-formylquinoxaline derivatives of formula II are prepared following literature procedures or from the corresponding 5-bromoquinoline, 8-bromoquinoline, or 5-bromoquinoxaline derivatives **II** (L'=Br) are after treatment with an alkylithium such as *n*-BuLi at a temperature ranging between -80°C and -30°C and subsequent quenching of the lithio specie with DMF as described in J. Org. Chem. 1980, 45, 1514.

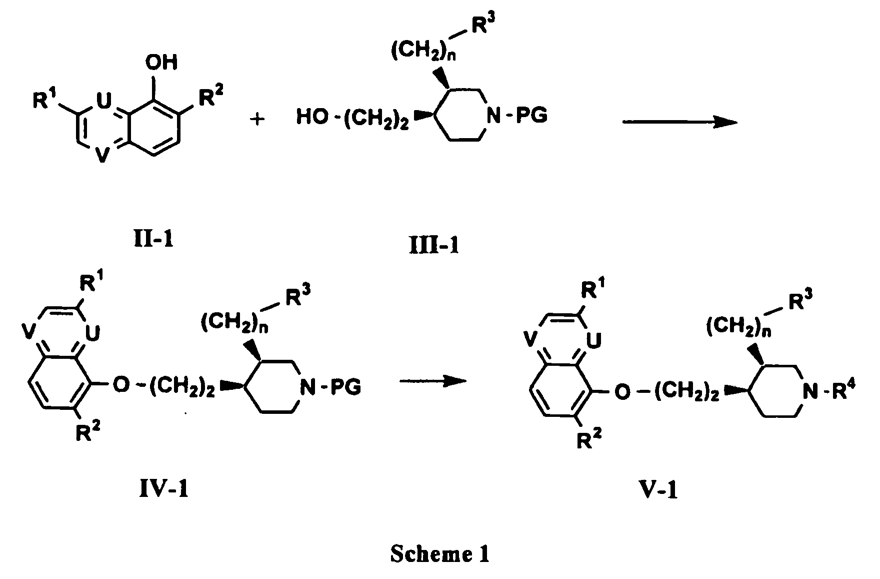

In Scheme 1, **III-1** is the compound of formula **III,** wherein L²M is HOCH₂, R⁴ is a nitrogen protecting group PG and carboxy and/or hydroxy groups are protected; the other symbols have their above meanings.

As shown in Scheme 1, compounds of formula I can be obtained by coupling, for example, a 3-substituted 5-hydroxy quinoline, a 2-substituted 8-hydroxy quinoline, or a 3-substituted 5-hydroxy quinoxaline **II-1** with an alcohol derivative **III-1.** The coupling reaction between **II-1** and **III-1** may be achieved under Mitsunobu conditions (as reviewed in O. Mitsunobu Synthesis (1981), 1). For example, an alcohol **III-1** and a derivative **II-1** are reacted to form the ether **IV-1** in the presence of diethyl or diisopropyl azodicarboxylate and triphenylphosphine. The reaction may be performed in a wide range of solvents such as DMF, THF, DCM and at a wide range of temperatures (between -78°C and 50°C). An alternate route to **IV-1** may require the activation of the alcohol **III-1** as for example a tosylate, a triflate or a mesylate by treatment with TsCl, trifluoromethanesulphonic anhydride or MsCl respectively in the presence of an organic base such as TEA between -40°C and 60°C in a dry aprotic solvent like DCM, MeCN or THF. Once activated, alcohol **III-1** reacts with the anion of the hydroxy derivative **II-1,** generated with a mineral base such as NaH or K₂CO₃ or an organic base such as lithium hexamethyldisilazide, to generate **IV-1** between -20°C and 60°C.

Removal of protecting groups (PG) such as t-butoxycarbonyl or benzyloxycarbonyl on the piperidine nitrogen atom in **IV-1** is carried out under standard acidic conditions to give the corresponding free amine. Alternatively the benzyloxycarbonyl group can be removed under catalytic hydrogenation over palladium on charcoal. The allyloxycarbonyl protecting group is removed by palladium acetate in presence of an allyl scavenger. The use of protecting groups to mask reactive functionality is well known to those of skill in the art, and other protecting groups are listed in reference book such as P.J. Kocienski 'Protecting Groups', Thieme (1994).

The so PG-deprotected amine is then reacted with compounds yielding the group R⁴, e.g. an aldehyde and a suitable reducing agent to provide the homologue **V-1.** The intermediate imine may be formed in a variety of protic or aprotic solvents such as **DMF,** *N,N*-dimethylacetamide, DCM, 1,2-DCE, MeOH, MeCN, in presence or not of a drying agent such as molecular sieves. The imine is reduced subsequently or simultaneously with a suitable reagent such a NaBH₄, sodium triacetoxyborohydride or sodium cyanoborohydride (R.O. and M.K. Hutchins Comprehensive Organic Synthesis, B.M. Trost, I. Fleming, Eds; Pergamon Press: New York (1991), vol. 8, p. 25-78). Alternatively, the PG-deprotected amine may also be alkylated to give product **V-1** by nucleophilic displacement of a suitable alkyl halide, mesylate or tosylate between -20°C and 100°C in a dry aprotic solvent like DCM, MeCN, DMF or THF in presence of a base such as K₂CO₃ or DIPEA.

The introduction of group R⁴ can also be effected before coupling of compounds **II-1** and **III-1.**

Carboxy- and hydroxy-protecting groups present are removed under standard conditions well known to those of skill in the art to yield e.g. a product **V-1** where R³ is carboxy or hydroxy.

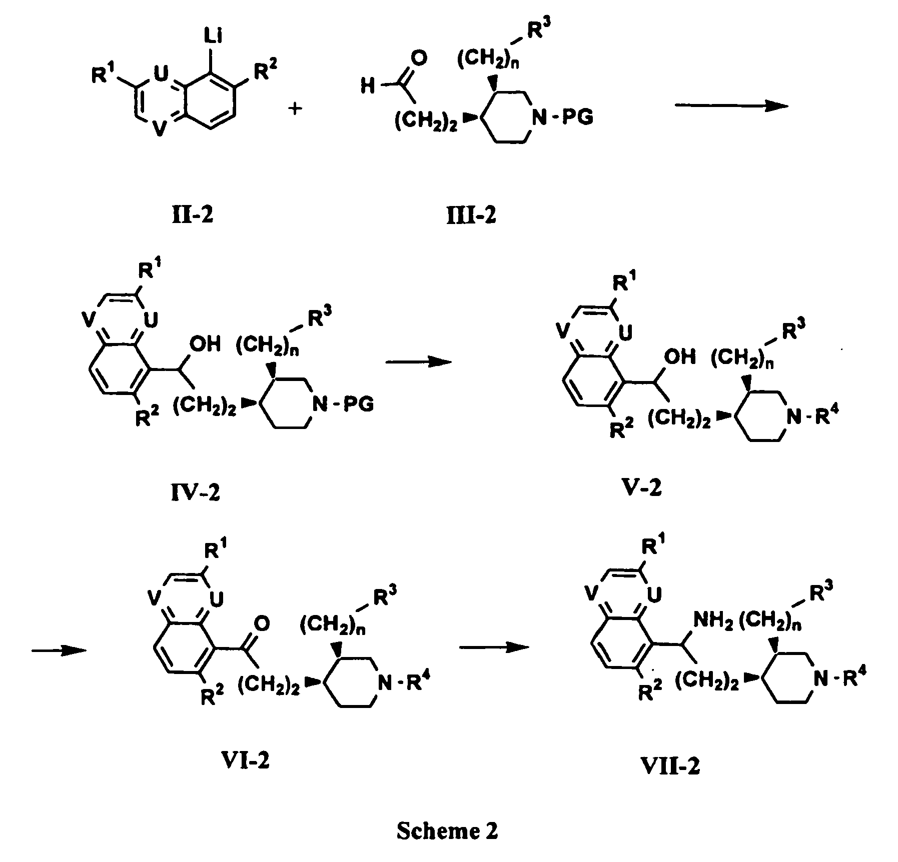

In Scheme 2, **III-2** is the compound of formula **III**, wherein L²M is HC(O)CH₂, R⁴ is a nitrogen protecting group PG and carboxy and/or hydroxy groups are protected; the other symbols have their above meanings.

Compounds of formula (I) can also be obtained by reacting for example a substituted quinolin-5-yl lithium, quinolin-8-yl lithium, or quinoxalin-5-yl lithium derivative **II-2** with an aldehyde derivative **III-2** (Scheme 2). Thus the corresponding 5-bromoquinoline, 8-bromoquinoline, or 5-bromoquinoxaline derivatives **II** (L¹=Br) are treated with an alkylithium such as *n*-BuLi in an inert solvent like THF or ether at a temperature between -100°C and 0°C, preferably between -80°C and -40°C. The resulting organolithium derivative **II-2** is treated with the corresponding aldehydes **III-2** at a temperature between -100°C and 0°C, preferably between -80°C and -10°C. In a subsequent step the nitrogen protecting group is removed and the free amine is reacted with an alkyl halide, mesylate or tosylate or with an aldehyde under reductive condition as previously described. Finally when appropriate, the ester is deprotected and/or further processed as previously described. The introduction of group R⁴ can also be effected before coupling of compounds **II-2** and **III-2.**

Compounds **V-2** can be further transformed into compounds **VI-2** by oxidation of the alcohol function using one the method reviewed by Ley, S.V., Madin, A.; Lee, T.V.; Procter, G. Comprehensive Organic Synthesis, B.M. Trost, I. Fleming, Eds; Pergamon Press: New York (1991), vol. 7, p. 251-327. Compounds **VI-2** can be further transformed into compounds **VII-2** by reductive amination using an excess of ammonium acetate in methanol and sodium cyanoborohydride as a reducing agent (as described in Bioorg & Med Chem. Lett. (2003), 13, 3597-60).

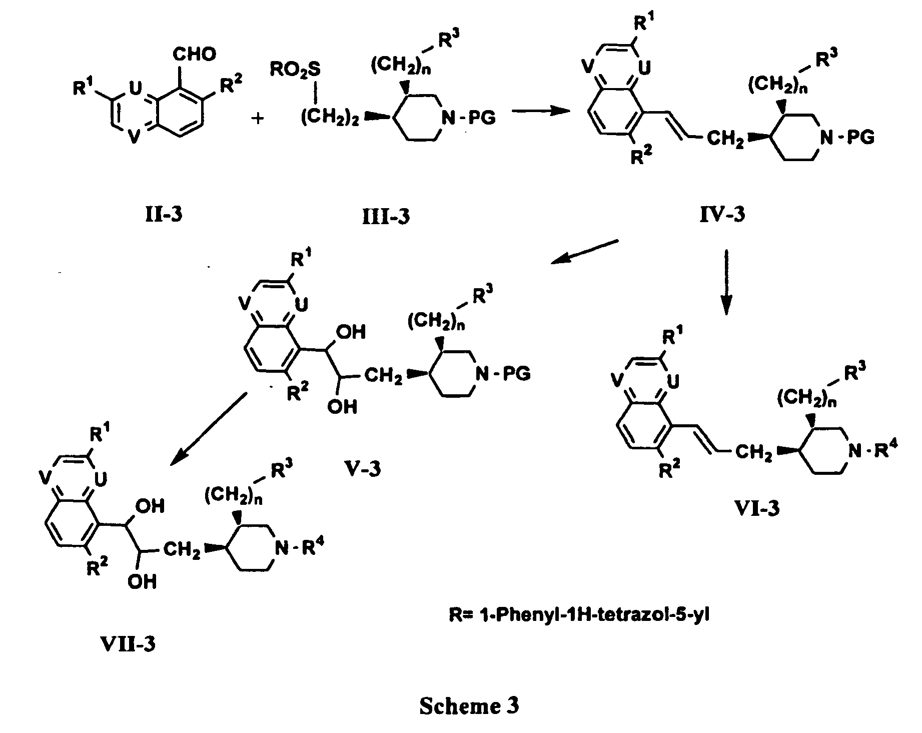

In Scheme 3, all the symbols have their above meanings and carboxy and/or hydroxy groups are protected.

Compounds of formula (I) can also be obtained by reacting for example a substituted 5-formylquinoline, 8-formylquinoline, or 5-formylquinoxaline derivative **II-3** with a sulfone derivative **III-3** in presence of a base such as potassium- or lithium-hexamethyldisilazide in a solvent such as 1,2-DME, DMF or toluene as reviewed by Blakemore, P.R in J. Chem. Soc., Perkin Trans. I (2002), 2563-2585 (Scheme 3). The resulting alkene **IV-3** can be further transformed into the diol derivative **V-3** by treatment with a catalytic amount of osmium tetroxide in presence of a co-oxidant such as NMO in aqueous solvent such as acetone or DCM (Cha, J.K. Chem. Rev. (1995), 95, 1761-1795). Compounds **IV-3** and **V-3** are further transformed as described above. The introduction of group R⁴ can also be effected before coupling of compounds **II-3** and **III-3.**

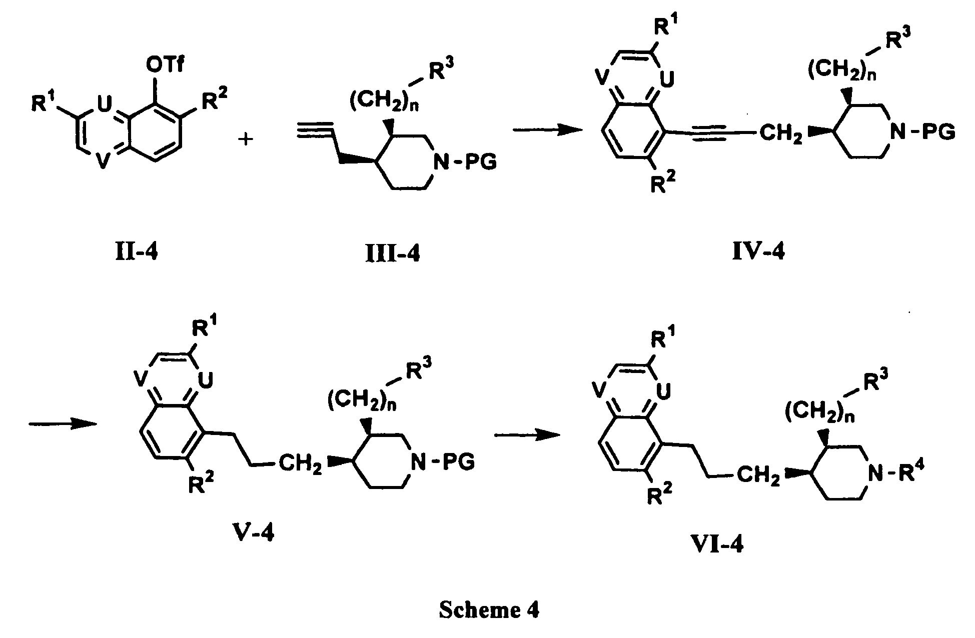

In Scheme 4, all the symbols have their above meanings and carboxy and/or hydroxy groups are protected.

Compounds of formula I can also be obtained by reacting for example a triflate derivative **II-4** with an alkyne derivative **III-4** under Sonogashira conditions using calatytic amount of a palladium salt, a base such as triethylamine and a catalytic amount of a copper derivative (usually copper iodide) in a solvent such a DMF between 20°C to 100°C (see Sonogashira, K. in Metal-Catalyzed Reactions, Diedrich, F., Stang, P.J., Eds; Wiley-VCH: New York (1998)) (Scheme 4). These trifluoromethanesulphonyloxy derivatives are obtained from the phenol **II-1** with trifluoromethanesulphonic anhydride, in the presence of an organic base such as triethylamine, N-ethyl-N,N-disopropylamine or pyridine between -40°C and 80°C in an aprotic solvent like DCM or THF (K. Ritter, Synthesis (1993), 735). The resulting alkyne **IV-4** is hydrogenated to the alkane **V-4** using catalytic system such as platinium oxide in a solvent like EtOH or EA or palladium on charcoal in presence of hydrogen. Other methods may also be suitable as reviewed by Siegel, S.; Takaya, H.; Noyori, R.; Pasto, D. J. G. in Comprehensive Organic Synthesis, B. M. Trost, I. Fleming, Eds; Pergamon Press: New York 1991, vol. 8, p. 417-488. The alkane **V-4** is further transformed into the compounds **VI-4** using procedures previously described. Alternatively, the alkene **IV-3** can also hydrogenated into the alkane **V-4** by hydrogenation over palladium on charcoal. Introduction of group R⁴ is effected, before or after coupling of compounds **II-4** and **III-4,** as previously described.

The transformation of group R³⁰ in compounds V into groups R³ starts with hydrolysis of group COOR or OR⁰ into carboxy or hydroxy, respectively:

### Hydrolysis of carboxy protecting groups

Representative carboxy protecting groups are alkyl *e*.*g*. methyl, ethyl or t-butyl, heteroalkyl, *e*.*g*. trichloroethyl, arylalkyl *e.g.* benzyl or para nitrobenzyl, alkenyl, *e*.*g*. allyl, trialkylsilyl *e*.*g*. trimethylsilyl, t-butyldimethylsilyl or di t-butylmethylsilyl, alkylthioalkyl *e*.*g*. methylthiomethyl (MTM), alkoxyalkoxyalkyl, *e*.*g*. methoxyethoxymethyl (MEM), arylalkoxyalkyl, *e*.*g*. benzyloxymethyl (BOM), trialkylsilylalkoxyalkyl, *e*.*g*. 2-(trimethylsilyl)ethoxymethyl (SEM), trialkylsilylalkyl, *e*.*g*. 2-(trimethylsilyl)ethyl (TMSE). Further examples of protecting groups to mask acids and the conditions to regenerate them are well known to those of skill in the art, and are listed in reference book such as P.J. Kocienski 'Protecting Groups', Thieme, 1994.

### Hydrolysis of hydroxy protecting groups

Representative hydroxy protecting groups to form ethers are alkyl, *e*.*g*. methyl or ethyl, alkoxyalkyl *e*.*g*. methoxymethyl (MOM); alkoxyalkoxyalkyl *e*.*g*. 2-methoxyethoxymethyl (MEM), trialkylsilylalkoxyalkyl *e*.*g*. 2-trimethylsilylethoxymethyl (SEM), tetrahydropyranyl (THP), allyl, triphenylmethyl (trityl), alkyl or arylsilylether *e*.*g*. triisopropylsilyl (TIPS), t-butyldiphenylsilyl (TBDPS), t-butyldimethylsilyl (TBDMS), or esters like acetate, trichloroacetate or pivalate or carbonates like trichloroethylcarbonate (TROC). Further examples of protecting groups to mask alcohols and the conditions to regenerate them are well known to those of skill in the art, and are listed in reference book such as P.J. Kocienski 'Protecting Groups', Thieme, 1994.

The so obtained compounds of formula I, where R³ is carboxy or hydroxy, can be further transformed to introduce other groups R³ as per process step c) as follows:

For compounds of formula I wherein R³ = aminocarbonyloxy, the corresponding alcohols (R³ = OH) is first treated with trichloroacetyl isocyanate in an aprotic solvent such as DCM or THF between -20°C to 40°C, and subsequently hydrolysised with an aqueous solution of a inorganic base such as potassium carbonate in an alcoholic solvent such as 2-methyl-2-propanol or methanol, usually under refluxing conditions (see J. Am. Chem. Soc. (1982), 104, 1109). Chlorosulfonyl isocyanate may also be used to accomplish this transformation (see J. Org. Chem. (1987), 52, 3342)

For compounds of formula I wherein R³ = alkylaminocarbonyl or carbamoyl, the corresponding acids (R³ = OH) are activated with carbonyldiimidazole and subsequently reacted with ammonia or an alkylamine in a solvent such as THF or DCM between -20°C to 40°C (see J. Am . Chem. Soc. (1995), 117, 7379)

For compounds of formula I wherein R³ = 2-tetrazolyl the corresponding alcohols (R³ = OH) are activated as mesylate, tosylate or triflate by substitution with sodium cyanide in a solvent like DCM, THF or DMF. The resulting nitriles (R³=CN) are reacted with sodium azide in the presence of NH₄Cl as described in J. Med Chem. (1967), 10, 149-154 to yield compound of formula III with R³ = 2-tetrazolyl.

For compounds of formula I wherein R³ = 3-methyl-1,2,4-oxadiazol-5-yl the corresponding acids (R³ = COOH) are reacted with acetamide oxime in the presence of 1-hydroxy pyridin-2(1H)-one and dicyclohexylcarbondiimide in THF between 0°C and 20°C followed by thermal cyclisation in a solvent like THF or toluene as described in J. Med. Chem. 2004, 47, 1487-1513.

The esters can be reduced into the corresponding alcohol using a suitable reagent such as diisobutyl aluminium hydride in a solvent like THF or ether between -20°C and 40°C.

The following examples illustrate the preparation of pharmacologically active compounds of the invention but do not at all limit the scope thereof.

### EXAMPLES

All temperatures are stated in °C. All analytical and preparative HPLC investigations on non-chiral phases are performed using RP-C18 based columns. Analytical HPLC investigations are performed on two different instruments with cycle-times of -2.5 min and ∼3.5 min respectively.

### Example 1: 3-{(3R,4S)-4-[2-(3-methoxy-quinolin-5-yloxy)-ethyl]-1-[2-(thiophen-2-ylsulfanyl)-ethyl]-piperidin-3-yl}-propionic acid:

### 1.i. 3,5-dibromoquinoline:

To concentrated sulfuric acid (130 ml) was added dropwise at 0°C, over 80 min, 3-bromoquinoline (50 g) at a rate allowing the internal temperature to be maintained between 0° and 10°C. After the addition was complete, NBS (48 g) was added portionwise and the reaction mixture was stirred at rt overnight. The reaction mixture was poured onto ice (21) and the formed solid was dissolved in DCM (600 ml). The aq. layer was further extracted once with DCM (600 ml) and the combined extracts were washed with 1*M* aq. NaOH (300 ml) and concentrated *in vacuo*. The residue was dispersed in silica gel and the resulting dispersal was loaded on the top of a column and eluted with DCM-Hex (1-1, 3 l) then DCM (3 1) and finally DCM-ether (1-1, 21). The title compound was recovered from the last fraction after evaporation to yield 40 g of a white solid.
¹H NMR (CDCl₃) δ: 8.94 (d, *J* = 2.2 Hz, 1H); 8.73 (d, *J* = 2.2 Hz, 1H); 8.08 (d, *J* = 8.5 Hz, 1H); 7.88 (d, *J* = 7.5 Hz, 1H); 7.62 (dd, *J* = 7.5, 8.5 Hz, 1H).

### 1.ii. 5-bromo-3-methoxyquinoline:

To a mixture of sodium methoxide (14.5 g) in DMPU (350 ml) heated at 125°C, was added in one portion 3,5-dibromoquinoline (34.5 g). The reaction was then heated at the same temperature for 1 h. The reaction mixture was then cooled to rt and poured onto ice (300 g). After the ice melt, the solid was filtered off and dried under vacuum. The filtrate was extracted with ether (4 x 150 ml). The combined extracts were washed with brine and dried over Na₂SO₄. After filtration, the solvent was evaporated and the residue purified over silica gel (Hex-EA 4-1) to afford a material that was pooled with the solid. The material was dissolved in DCM and dried over Na₂SO₄. After filtration and evaporation, the solid was further dried under HV to afford the title compound (24.5 g) as a beige solid.
¹H NMR (CDCl₃) δ: 8.68 (d, *J* = 2.8 Hz, 1H); 8.03 (d, *J* = 8.3 Hz, 1H); 7.80 (d, *J* = 7.5 Hz, 1H); 7.72 (d, *J* = 2.8 Hz, 1H); 7.42 (dd, *J* = 7.5, 8.3 Hz, 1H); 4.02 (s, 3H).
MS (ESI, m/z): 239.7 [M+H⁺].

### 1.iii. 3-methoxy-S-(4,4,5,5-tetramethyl-[1,3,2]dioxaborolan-2-yl)-quinoline:

To a mixture of bis(pinacolato)diboron (5.38 g), 1,1'-bis(diphenylphosphino)ferrocene-palladium(II)dichloride DCM complex (1.5 g) and potassium acetate (5.57 g) was added a solution of intermediate 1.ii (4.5 g) in DMSO (135 ml). The resulting mixture was stirred at 80°C overnight. After cooling, the reaction mixture was diluted with water (300 ml) and EA (300 ml). The two layers were decanted and the aq. layer was extracted twice with EA (2 x 300 ml). The combined organic layers were washed with brine, dried over Na₂SO₄, filtered and concentrated to dryness. The brown residue was chromatographed (EA-Hex 1-4) to afford the title boronate as a white solid (4.81 g).
¹H NMR (CDCl₃) δ: 8.67 (d, *J* = 2.9 Hz, 1H); 8.49 (d, *J* = 2.9 Hz, 1H); 8.12 (m, 2H); 7.55 (m, 1H); 3.97 (s, 3H); 1.42 (s, 12H).
MS (ESI, m/z) : 285.8 [M+H⁺].

### 1.iv. 3-methoxy-quinolin-5-ol:

To an ice-chilled solution of intermediate 1.iii (4.81 g), in THF (125 ml) were added 3M aq. NaOH (15.2 ml) and then 30% aq. hydrogen peroxide (7.2 ml). The reaction mixture was stirred at the same temperature for 1 h. Water (50 ml) and 3N aq. HCl was added until the bright yellow color vanished to leave a colourless reaction mixture (pH 6). The reaction mixture was then diluted with EA (300 ml). The two layers were separated and the aq. layer was extracted twice more (2 x 300 ml). The combined org. layers were washed with brine, dried over Na₂SO₄, filtered and concentrated to dryness. The residue was triturated with ether and the solid filtered to afford after drying the title compound (2.61 g).
¹H NMR (d6-DMSO) δ: 10.34 (s, 1H); 8.60 (d, *J* = 3.0 Hz, 1H); 7.76 (d, *J* = 3.0 Hz, 1H); 7.39 (m, 2H); 6.92 (dd, J= 1.4, 7.2 Hz, 1H); 3.92 (s, 3H).
MS (ESI, m/z) : 175.8 [M+H⁺].

### 1.v. (3R, 45)-4-[2-(tert-butyl-dimethyl-silanyloxy)-ethyl]-3-vinyl-piperidine-1-carboxylic acid tert-butyl ester:

To a solution of (3*R*, 4*S*)-4-(2-hydroxy-ethyl)-3-vinyl-piperidine-1-carboxylic acid *tert-butyl* ester (8.68 g, prepared as described in Tetrahedron Letters (2001), 42, 3235-3238) in DCM (100 ml) were added successively TEA (9.5 ml), DMAP (4.15 g) and TBDMS-Cl (5.12 g). The reaction mixture was stirred at rt for 3 h, and was concentrated to dryness. The residue was purified by chromatography (EA-Hex 4-1) to afford the title compound (12.1 g) as a colourless oil.
¹H NMR (CDCl₃) δ: 5.79 (m, 1H); 5.11 (m, 1H); 5.06 (m, 1H); 4.07 (br s, 1H); 3.93 (m, 1H); 3.62 (t, *J* = 6.3 Hz, 2H); 2.98 (dd, *J* = 3, 12.9 Hz, 1H); 2.81 (br s, 1H); 2.25 (br s, 1H); 1.69 (m, 1H); 1,42 (s, 9H), 1.41 (overlapped m, 4H); 0.89 (s, 9H), 0.03 (s, 6H).
MS (ESI, m/z) : 370.5 [M +H⁺].

### 1.vi. (3R, 4S)-4-[2-(tert-butyl-dimethyl-silanyloxy)-ethyl]-3-(1,2-dihydroxy-ethyl)-piperidine-1-carboxylic acid tert-butyl ester:

To a solution of intermediate 1.v (11.4g) in 2-methyl-2-propanol (150 ml) and water (150 ml) was added AD-mix β (43 g). The reaction mixture was then stirred at rt for 3 days. Sodium bisulfite (45 g) was added portion wise and the resulting mixture was stirred for one hour. The two layers were separated and the aq. layer was extracted three times with EA (3 x 200 ml). The combined extracts were washed with brine and dried over Na₂SO₄. After concentration to dryness, the residue was quickly filtered through a pad of silica gel (EA) to afford the title compound (12.4 g) as a yellowish oil.
MS (ESI, m/z) : 404.5 [M+H⁺].

### 1.vii. (3R,4S)-4-[2-(tert-butyl-dimethyl-silanyloxy)-ethyl]-3-formyl-piperidine-1-carboxylic acid tert-butyl ester:

To a solution of intermediate 1.vi (12.4 g) in acetone (100 ml) was added at rt a solution of sodium periodate (13.5 g) in water (45 ml). The reaction was stirred 1 h and the solids were filtered off. The filtrate was evaporated *in vacuo*. The residue was extracted with EA (3 x 150 ml). The combined extracts were washed with brine, dried over Na₂SO₄, filtered and concentrated to dryness to yield the title aldehyde as a colourless oil (11.4 g).
MS (ESI, m/z) : 372.2 [M +H⁺].

### 1.viii. (3R, 4S)-4-[2-(tert-butyl-dimethyl-silanyloxy)-ethyl]-3-(2-ethoxycarbonyl-vinyl)-piperidine-1-carboxylic acid tert-butyl ester:

To a solution of intermediate 1.vii (11.4 g) in toluene (200 ml) was added (carbethoxymethylene)triphenylphosphorane (12.9 g). The mixture was refluxed for 1 h. After cooling, silica gel (30 g) was added and the solvent was removed under reduced pressure. The residue was purified by chromatography (EA-Hex 1-1) to afford the title unsaturated ester (13.4 g) as a colourless oil.
¹H NMR (CDCl₃) δ: 6.94 (dd, *J* = 8.7, 15.9 Hz, 1H); 5.92 (dd, *J* = 1.2, 15.9 Hz, 1H); 4.19 (q, *J* = 7.2 Hz, 2H); 4.19 (overlapped m, 1H); 4.02 (br d, *J* = 7.9 Hz, 1H); 3.64 (t, *J* = 6.4 Hz, 2H); 2.98 (dd, *J* = 3, 12.9 Hz, 1H); 2.81 (br s, 1H); 2.45 (br s, 1H); 1.89 (m, 1H); 1,46 (s, 9H), 1.44 (overlapped m, 4H); 1.28 (t, *J* = 7.2 Hz, 3H); 0.89 (s, 9H), 0.03 (s, 6H).
MS (ESI, m/z) : 442.5 [M +H⁺].

### 1.ix. (3R, 4S)-4-[2-(tert-butyl-dimethyl-silanyloxy)-ethyl]-3-(2 -ethoxycarbonyl-ethyl)-piperidine-1-carboxylic acid tert-butyl ester:

To a solution of intermediate 1.viii (13.4 g) in EA (300 ml) was added 10% palladium on charcoal (4.3 g). The reaction was stirred for 2 h under 1 atm of hydrogen. The catalyst was removed by filtration and the filtrate was concentrated *in vacuo* to afford the title ester (10.9 g) as a colourless oil.
MS (ESI, m/z) : 444.6 [M +H⁺].

### 1.x. (3R, 4S)-3-(2-ethoxycarbonyl-ethyl)-4-(2-hydroxy-ethyl)-piperidine-1-carboxylic acid tert-butyl ester:

To a solution of intermediate 1.ix (10.9 g) in THF (100 ml) was added TBAF (1*M* in THF, 33 ml). The reaction was stirred at rt for 1h and the solvent was removed under reduced pressure. The residue was chromatographed (EA-Hex 1-1 then 2-1) to afford the title alcohol (6.5 g) as a colourless oil.
¹H NMR (CDCl₃) δ: 4.13 (q, *J* = 7.2 Hz, 2H); 4.07 (br s, 1H); 3.94 (d, *J* = 13.5 Hz, 1H); 3.71 (td, *J* = 2.9, 6.5 Hz, 2H); 2.86 (dd, *J* = 2.2, 13.7 Hz, 1H); 2.81 (br s, 1H); 2.51 (m, 1H); 2.33 (m, 1H); 1.83 (m, 1H); 1.65-1.41 (m, 8H); 1.47 (s, 9H); 1.27 (t, *J* = 7.2 Hz, 3H).
MS (ESI, m/z) : 330.4 [M +H⁺].

### 1.xi. (3R, 4S)-3-(2-ethoxycarbonyl-ethyl)-4-[2-(3-methoxy-quinolin-5-yloxy)-ethyl]-piperidine-1-carboxylic acid tert-butyl ester:

To a solution of intermediate 1.x (1.65 g) in THF (25 ml) were added, at rt, 3-methoxy-quinolin-5-ol (0.875 g), PPh₃ (2.62 g) and DIAD (2 ml). The reaction was stirred overnight at rt. The reaction mixture was then concentrated to dryness and the residue chromatographed over silica gel (EA-Hex 1-2 then 1-1) to afford the title compound (1.4 g) as an oil.
MS (ESI, m/z) : 487.7 [M +H⁺].

### 1.xii. 3-{(3R,4S)-4-[2-(3-methoxy-quinolin-5-yloxy)-ethyl]-piperidin-3-yl}-propionic acid ethyl ester:

A solution of intermediate 1.xi (1.4g) in TFA (8 mL) was stirred at rt for 20 min. The volatiles were removed under reduced pressure and the residue was partitioned between saturated NaHCO₃ (40 ml) and a DCM-MeOH mixture (9-1, 100 ml). The aq. layer was extracted three more times with the same mixture and the combined org. layers were washed with brine and dried over Na₂SO₄. After concentration to dryness, the residue was chromatographed (DCM-MeOH 9-1 containing 1% concentrated NH₄OH) to afford the title compound as a colourless oil (1.18 g).
MS (ESI, m/z): 387.4 [M +H⁺].

### 1.xiii. 3-{(3R,4S)-4-[2-(3-methoxy-quinolin-5-yloxy)-ethyl]-1-[2-(thiophen-2-ylsulfanyl)-ethyl]-piperidin-3-yl}-propionic acid ethyl ester:

To a solution of intermediate 1.xii (1.16 g) in DMF (10 ml) were added 2-(2-bromo-ethylsulfanyl)-thiophene (0.8 g) and DIPEA (1 ml). The reaction mixture was stirred at 80°C for 90 min. The solvent was removed under HV and the residue was chromatographed (DCM-MeOH 19-1 containing 1% aq. concentrated NH₄OH) to afford the title compound (0.58 g) as a colourless oil.
¹H NMR (CDCl₃) δ: 8.68 (d, *J* = 2.9 Hz, 1H); 7.78 (d, *J* = 2.9 Hz, 1H); 7.65 (d, *J* = 8.5 Hz, 1H); 7.45 (dd, *J* = 7.3, 8.5 Hz, 1H); 7.35 (dd, *J* = 1.2, 5.3 Hz, 1H); 7.14 (dd, *J* = 1.2, 3.5 Hz, 1H); 6.98 (dd, *J* = 3.5, 5.3 Hz, 1H); 6.88 (d, *J* = 7.3 Hz, 1H); 4.19 (overlapped m, 2H); 4.13 (q, *J* = 7.1 Hz, 3H); 3.98 (s, 3H); 2.97 (m, 2H); 2.69-2.57 (m, 4H); 2.47 (m, 1H); 2.36-2.17 (m, 3H); 1.95 (m, 4H); 1.71 (m, 4H); 1.25 (t, *J* = 7.1 Hz, 3H).
MS (ESI, m/z) : 529.1 [M +H⁺].

### 1.xiv. 3-{(3R,4S)-4-[2-(3-methoxy-quinolin-5-yloxy)-ethyl]-1-[2-(thiophen-2-ylsulfanyl)-ethyl]-piperidin-3-yl}-propionic acid:

To a solution of intermediate 1.xiii (0.4 g) in dioxane (5 ml) was added 5*N* aq. NaOH (3 ml). The reaction was heated at 98°C overnight. After cooling, 3*N* aq. HCl (5 ml) was added and the mixture was evaporated to dryness. The residue was then directly purified by chromatography (DCM-MeOH 9-1) to afford the title compound (0.23 g) as a grey solid.
¹H NMR (d6-DMSO) δ: 12.05 (br s, 1H); 8.64 (d, *J* = 2.9 Hz, 1H); 7.72 (d, *J* = 2.9 Hz, 1H); 7.62 (m, 1H); 7.50 (m,2H); 7.20 (m, 1H); 7.05 (m, 2H); 4.21 (m, 2H); 3.92 (s, 3H); 2.96 (m, 2H), 2.78-2.45 (m, 4H); 2.43-2.21 (m, 4H); 1.97-1.55 (m, 8H).
MS (ESI, m/z) : 501.5 [M+H⁺].

### Example 2: 3-{(3R,4S)-4-[2-(3-methoxy-quinolin-5-yloxy)-ethyl]-1-[2-(thiophen-2-ylsulfanyl)-ethyl]-piperidin-3-yl}-propan-1-ol:

To an ice-chilled solution of the compound of Example 1 (0.18 g) in THF (5 ml) was added DIBAH (1*M* in toluene, 1 ml). After 30 min, water (0.1 ml) was added. The mixture was stirred 40 min at rt. After dilution with ether (40 ml), the solids were filtered off and the filtrate was concentrated to dryness. The residue was chromatographed (DCM-MeOH 19-1) to afford the title compound as a colourless oil (0.098 g).
¹H NMR (d6-DMSO) δ: 8.68 (d, *J =* 2.9 Hz, 1H); 7.78 (d, *J* = 2.9 Hz, 1H); 7.65 (d, *J* = 8.5 Hz, 1H); 7.45 (dd, *J =* 7.3, 8.5 Hz, 1H); 7.35 (dd, *J =* 1.2, 5.3 Hz, 1H); 7.14 (dd, *J* = 1.2, 3.5 Hz, 1H); 6.98 (dd, *J =* 3.5, 5.3 Hz, 1H); 6.86 (d, *J =* 7.3 Hz, 1H); 4.19 (m, 2H); 3.98 (s, 3H); 3.69 (t, *J* = 6 Hz, 2H); 2.97 (t, *J* = 7.4 Hz, 2H); 2.71-2.55 (m, 4H); 2.23 (m, 2H); 1.96-1.55 (m, 10H); 1.43 (m, 1H).
MS (ESI, m/z): 487.4 [M+H⁺].

### Example 3: (3R,4R)-4-[3-(3-methoxy-quinolin-5-yl)-propyl]-1-[2-(thiophen-2-ylsulfanyl)-ethyl]-piperidine-3-carboxylic acid:

*Note: two synthetic approaches, i.e. Approach A and Approach B described hereafter, have been used for preparing the compound of Example 3.*

### APPROACH A:

### 3.A.i. 3-methoxyquinoline-5-carbaldehyde:

To a solution of 5-bromo-3-methoxyquinoline (10 g) in THF (250 ml) cooled to -78°C, was added *n*-BuLi (22 ml). After 15 min, a solution of DMF (10 ml) in ether (20 ml) was quickly added. The solution was stirred 15 min and ethanol (5 ml), followed with 1*M* NaHSO₄ (40 ml) were added. After warming to rt, the org. layer was diluted with EA (100 ml). The two layers were separated and the aq. layer was extracted once with EA (100ml). The combined org. layers were washed with brine and concentrated to dryness. The residue was chromatographed (EA-Hex 1-2 then 1-1) to afford the title compound (4.75 g) as a yellowish solid.
¹H NMR (CDCl₃) δ: 10.32 (s, 1H); 9.02 (d, *J* =2.9 Hz, 1H); 8.75 (d, *J* = 2.9 Hz, 1H); 8.31 (d, *J =* 8.3 Hz, 1H); 8.02 (d, *J* = 7.1 Hz, 1H); 7.72 (dd, *J =* 7.1, 8.3 Hz, 1H); 4.02 (s, 3H).
MS (ESI, m/z): 187.9 [M+H⁺].

### 3.A.ii. (3R,4S)-4-[2-(1-phenyl-1H-tetrazol-5-ylsulfanyl)-ethyl]-3-vinyl-piperidine-1-carboxylic acid tert-butyl ester:

To an ice-chilled solution of (3*R*, 4*S*)-4-(2-hydroxy-ethyl)-3-vinyl-piperidine-1-carboxylic acid *tert*-butyl ester (5.66 g, prepared as described in Tetrahedron Letters (2001), 42, 3235-3238) in THF (200 ml) were added successively PPh₃ (11.7 g), 1-phenyl-1*H*-tetrazole-5-thiol (5.9 g) and dropwise DIAD (10 ml). The reaction mixture was stirred overnight at rt. The solvent was removed under reduced pressure and the residue chromatographed (Hex-EA 4-1) to afford the title compound (12.9 g) as a white solid. The material was contaminated with a side reaction product.
MS (ESI, m/z): 416.4 [M+H⁺].

### 3.A.iii. (3R,4S)-4-[2-(1-phenyl-1H-tetrazole-5-sulfonyl)-ethyl]-3-vinyl-piperidine-1-carboxylic acid tert-butyl ester:

To a stirred solution of intermediate 3.A.ii (11.9 g, contaminated), in EtOH (230 ml) was added at rt, a solution of ammonium heptamolybdate tetrahydrate (3.5 g) in 30% aq. hydrogen peroxide (30 ml). The reaction mixture was stirred for 3 h, and a saturated sodium thiosulfate solution (100 ml) was added. The solvent was removed under reduced pressure and the residue was extracted with EA (3 x 200 ml). The combined org. extracts were washed with water, dried over Na₂SO₄, filtered and concentrated to dryness. The residue was chromatographed (EA-Hex 1-3 then 1-2) to afford the title sulfone along with some contaminants. The material was dissolved in EA and Hex was added until a white solid formed. The solid was removed by filtration and the filtrate was concentrated *in vacuo* to afford 3 g of the sulfone.
MS (ESI, m/z): 448.5 [M+H⁺].

### 3.A.iv. (3R,4S)-3-(1,2-dihydroxy-ethyl)-4-[2-(1-phenyl-1H-tetrazole-5-ylsulfanyl)-ethyl]-piperidine-1-carboxylic acid tert-butyl ester:

To a stirred solution of intermediate 3.A.iii (6.3 g) in 2-methyl-2-propanol (70 ml) and water (70 ml) was added at rt AD-mix α (30 g). The reaction mixture was stirred overnight and sodium bisulfite (34 g) was added portion wise. The two layers were separated and the aq. layer was extracted with EA (3 x 150 ml). The combined org. extracts were washed with brine and dried over Na₂SO₄. After filtration and evaporation to dryness, the residue was chromatographed (EA-Hex 4-1) to afford the title diol (3.35 g) as a white solid.
MS (ESI, m/z): 482.4 [M+H⁺].

### 3.A.v. 3-(2,2-dimethyl-[1,3]dioxolan-4-yl)-4-[2-(1-phenyl-1H-tetrazole-5-ylsulfanyl)-ethyl]-piperidine-1-carboxylic acid tert-butyl ester:

To a solution of intermediate 3.iv (3.35 g) in DCM (50 ml) was added, at rt, PTSA (0.07 g) and 2,2-dimethoxypropane (1.71 ml). The reaction was stirred at rt for 40 min and 1*M* aq. NaHCO₃ (10 ml) was added. The two layers were separated and the aq. layer was extracted once with DCM (100 ml). The combined organic layers were washed with brine, dried over Na₂SO₄ and filtered. After concentration to dryness, the residue was chromatographed (EA-Hex 1-2) to yield the title acetonide (3.42 g) as a colourless oil.
¹H NMR (CDCl₃) δ: 7.74-7.60 (m, 5H); 4.20 (m, 1H); 4.02 (m, 2H); 3.93-3.61 (m, 4H); 3.23 (br s, 1H); 2.96 (br d, *J* = 12.1 Hz, 1H); 2.29 (m, 1H); 2.16-1.91 (m, 2H); 1.84 (m, 1H); 1.68 (m, 2H); 1.47 (s, 9H); 1.69 (s, 3H); 1.34 (s, 3H).
MS (ESI, m/z): 522.5 [M+H⁺].

### 3.A.vi. (3R,4R)-3-(2,2-dimethyl-[1,3]dioxolan-4-yl)-4-[3-(3-methoxy-quinolin-5-yl)-allyl]-piperidine-1-carboxylic acid tert-butyl ester:

To a solution of intermediate 3.A.v (3.42 g) in 1,2-dimethoxyethane (24 ml) was added 3-methoxyquinoline-5-carbaldehyde (1.1 g). The mixture was cooled to -60°C and a solution of potassium bis(trimethylsilylamide) (0.5*M* in toluene, 20 ml) was added dropwise over 20 min. After the addition was complete, the reaction was stirred 10 min at the same temperature and water (20 ml) was added. The mixture was warmed to rt, and was extracted with EA (3 x 150 ml). The combined extracts were washed with brine, dried over Na₂SO₄, filtered and concentrated to dryness. The residue was chromatographed (EA-Hex 1-2) to afford the title compound (2.52 g) as a white foam. The compound was recovered as a 2:1 mixture of epimers.
¹H NMR (CDCl₃) δ: 8.70 (d, *J* = 2.8 Hz, 1H); 7.97 (app d, *J* = 8.2 Hz, 1H); 7.65-7.50 (m, 3H); 7.02 (d, *J* = 15.2 Hz, 1H); 6.31 (ddd, *J* = 6.0, 8.4, 15.2 Hz, 0.66H); 6.17 (td, *J=* 7.2, 15.2 Hz, 0.33H); 4.16 (m, 2H); 3.72 (m, 1H); 3.69-3.22 (m, 4H); 2.69 (m, 2x0.33H); 2.44 (m, 2x0.66H); 2.19-2.05 (m, 0.66H); 2.03-1.83 (m, 1.33H); 1.69 (m, 2H); 1.49 (s, 9x0.66H); 1.48 (s, 9x0.33H); 1.43 (s, 3x0.66H); 1.42 (s, 3x0.33H); 1.39 (s, 3x0.66H); 1.38 (s, 3x0.33H).
MS (ESI, m/z): 483.3 [M+H⁺].

### 3.A.vii. (3R,4R)-3-(2,2-dimethyl-[1,3]dioxolan-4-yl)-4-[3-(3-methoxy-quinolin-5-yl)-propyl]-piperidine-1-carboxylic acid tert-butyl ester:

To a solution of intermediate 3.A.vi (2.52 g) in EA (40 ml) was added 10% palladium on charcoal (2 g). The reaction mixture was stirred under one hydrogen atm for 90 min. The catalyst was removed by filtration and the filtrate concentrated to dryness. The residue was chromatographed (EA-Hex 1-1) to afford the title compound (2.25 g) as a colourless foam.
¹H NMR (CDCl₃) δ: 8.70 (d, *J* = 2.8 Hz, 1H); 7.97 (app d, *J* = 8.2 Hz, 1H); 7.41-7.34 (m, 2H); 7.14 (m, 1H); 3.88-3.75 (m, 2H); 3.76 (s, 3H); 3.38 (m, 1H); 3.26-2.84 (br m, 4H); 2.80 (m, 2H); 1.60-1.24 (m, 8H); 1.23 (s, 9H); 1.16 (s, 3x0.33H); 1.1 (3x0.66H); 1.09 (3x0.33H); 1.07 (3x0.66H).
MS (ESI, m/z): 485.4 [M+H⁺].

### 3.A.viii. (3R, 4R)-3-(1,2-dihydroxy-ethyl)-4-[3-(3-methoxy-quinolin-5-yl)-propyl]-piperidine-1-carboxylic acid tert-butyl ester:

To a solution of intermediate 3.A.vii (2.25 g) in MeOH (50 ml) was added PTSA (1 g). After stirring for 20 min at rt, the reaction was heated at 60°C for 90 min. The reaction mixture was cooled to rt, and saturated NaHCO₃ (30 ml) was added. The volatiles were removed under reduced pressure and the residue was extracted with EA (3 x 150 ml). The combined extracts were washed with brine, dried over Na₂SO₄, filtered and concentrated to dryness. The residue was chromatographed (EA-Hex 4-1 then EA-MeOH 19-1) to afford the title alcohol (0.72 g) as a white foam.
MS (ESI, m/z): 445.6 [M+H⁺].

### 3.A.ix. (3R, 4R)-3-formyl-4-[3-(3-methoxy-quinolin-5-yl)-propyl]-piperidine-1-carboxylic acid tert-butyl ester:

To a solution of intermediate 3.A.viii (0.72 g) in acetone (15 ml) was added a solution of sodium periodate (1 g) in water (5 ml). The mixture was stirred at rt for 20 min. The reaction mixture was filtered through a pad of celite and the filtrate was concentrated to dryness. The residue was chromatographed (EA-Hex 1-2) to afford the title aldehyde (0.66 g) as a colourless foam.
MS (ESI, m/z): 413.0 [M+H⁺].

### 3.A.x. (3R, 4R)-4-[3-(3-methoxy-quinolin-5-yl)propyl]-piperidine-1,3-dicarboxylic acid 1-tert-butyl ester 3-methyl ester:

To a solution of intermediate 3.A.ix (0.2 g) in acetone (3.5 ml) and water (1.5 ml) was added potassium permanganate (0.766 g). The reaction was stirred at rt for 30 min and the reaction mixture was concentrated to dryness. The residue was chromatographed (EA then EA containing 1% AcOH) to afford the title acid (0.088 g) as a colourless oil.
MS (ESI, m/z): 429.2 [M+H⁺].
A solution of this acid (0.2 g) in benzene (1.8 ml) and MeOH (0.2 ml) was treated dropwise with trimethylsilyldiazomethane (0.2 ml, 2*M* in hexanes). After stirring for 30 min, AcOH (3 drops) was added and the volatiles were removed under reduced pressure. The residue was chromatographed (EA-Hex 1-1) to afford the title ester (0.065 g) as a colourless oil.
¹H NMR (CDCl₃) δ: 8.70 (br s, 1H); 7.93 (br d, *J* = 8.4 Hz, 1H); 7.52-7.45 (m, 2H); 7.34 (d, *J =* 6.3 Hz, 1H); 4.00 (s, 3H); 3.67 (br s, 2H); 3.60 (s, 3H); 3.24 (dd, *J =* 3.3, 13.5 Hz, 1H); 3.05 (overlapped m, 1H); 3.00 (t, *J* = 7.5 Hz, 2H); 2.62 (br s, 1H); 1.88-1.73 (m, 5H); 1.54 n(m, 2H); 1.43 (s, 9H).
MS (ESI, m/z): 429.2 [M+H⁺].

### 3.A.xi. (3R, 4S)-4-[3-(3-methoxy-quinolin-5 yl)-propyl]-1-[2-(thiophen-2-ylsulfanyl)-ethyl]-piperidine-3-carboxylic acid methyl ester:

A solution of intermediate 3.A.x (0.061 g) in TFA (2 ml) was stirred at rt for 20 min. The solvent was evaporated and the residue was co-evaporated twice with toluene. The residue was dissolved in DMF (1 ml). 2-(2-bromo-ethylsulfanyl)-thiophene (0.034 g) and DIPEA (0.048 ml) were added. The residue was heated at 80°C for 1 h and the volatiles were removed under reduced pressure. The residue was purified by preparative TLC (DCM-MeOH 49-1) to afford the title compound (0.021 g) as a colourless oil.
MS (ESI, m/z): 485.4 [M+H⁺].

### 3.A.xii. (3R,4R)-4-[3-(3-methoxy-quinolin-5-yl)propyl]-1-[2-(thiophen-2-ylsulfanyl)-ethyl]-piperidine-3-carboxylic acid:

A solution of intermediate 3.A.xi (0.02 g) in dioxane (0.5 ml) and 3*N* NaOH (0.1 ml) was heated in a screw-capped vial overnight. 3*N* HCl (0.1 ml) was added and the residue was directly purified by preparative TLC (DCM-MeOH 9-1) to afford the title compound (0.004 g) as an oil.
MS (ESI, m/z): 471.4 [M+H⁺].

### APPROACH B:

### 3.B.i. 3-methoxyquinoline-5-carbaldehyde:

To a solution of 5-bromo-3-methoxyquinoline (10 g, 42 mmol) in THF (250 ml) cooled to -78°C, was added *n*-BuLi (2.35N in Hex, 22 ml, 51.7 mmol). After 15 min, a solution of DMF (10 ml) in ether (20 ml) was quickly added. The solution was stirred 15 min and EtOH (5 ml), followed with 1M NaHSO₄ (40 ml) were added. After warming to rt, the org. layer was diluted with EA (100 ml). The two layers were separated and the aq. layer was extracted once with EA (100 ml). The combined org. layers were washed with brine and concentrated to dryness. The residue was chromatographed over SiO₂ (EA-Hex 1-2 then 1-1) to afford the title compound (4.75 g, 25.3 mmol) as a yellowish solid.
¹H NMR (CDCl₃) δ: 10.32 (s, 1H); 9.02 (d, *J* =2.9 Hz, 1H); 8.75 (d, *J* = 2.9 Hz, 1H); 8.31 (d, *J* = 8.3 Hz*,* 1H); 8.02 (d, *J* = 7.1 Hz, 1H); 7.72 (dd, *J* = 7.1, 8.3 Hz, 1H); 4.02 (s, 3H).
MS (ESI, m/z): 187.9 [M+H⁺].

### 3.B.ii. (3R,4S)-4-[2-(1-phenyl-1H-tetrazol-5-ylsulfanyl)-ethyl]-3-vinyl-piperidine-1-carboxylic acid tert-butyl ester:

To an ice-chilled solution of (3*R*,4*S*)-4-(2-hydroxy-ethyl)-3-vinyl-piperidine-1-carboxylic acid *tert*-butyl ester (prepared as described in Tetrahedron Letters (2001), 42, 3235-3238; 5.66 g; 22.1 mmol) in THF (200 ml) were added successively PPh₃ (11.7 g, 2 eq.), 1-phenyl-1*H*-tetrazole-5-thiol (5.9 g, 33.1 mmol) and dropwise DIAD (10 ml, 50.4 mmol). The reaction mixture was stirred overnight at rt. The solvent was removed under reduced pressure and the residue was chromatographed over SiO₂ (Hex-EA 4-1) to afford the title compound (12.9 g) as a white solid. The material was contaminated with a side product reaction.
MS (ESI, m/z): 416.4 [M+H⁺].

### 3.B.iii. (3R,4S)-4-[2-(1-phenyl-1H-tetrazole-5-sufonyl)-ethyl]-3-vinyl-piperidine-1-carboxylic acid tert-butyl ester:

To a stirred solution of intermediate 3.B.ii (11.9 g, contaminated) in EtOH (230 ml) was added, at rt, a solution of ammonium heptamolybdate tetrahydrate (3.5 g, 2.8 mmol) in 30% aq. H₂O₂ (30 ml). The reaction mixture was stirred for 3 h, and a saturated sodium thiosulfate solution (100 ml) was added. The solvent was removed under reduced pressure and the residue was extracted with EA (3 x 200 ml). The combined org. extracts were washed with water, dried over Na₂SO₄, filtered and concentrated to dryness. The residue was chromatographed over SiO₂ (EA-Hex 1-3 then 1-2) to afford the title sulfone along with some contaminants. The material was dissolved in EA and Hex was added until a white solid formed. The solid was removed by filtration and the filtrate was concentrated *in vacuo* to afford the sulfone (3 g, 6.7 mmol) as a colourless oil.
MS (ESI, m/z): 448.5 [M+H⁺].

### 3.B.iv. (3R,4S)-3-(1,2-dihydroxy-ethyl)-4-[2-(1-phenyl-1H-tetrazole-5-ylsulfanyl)-ethyl]-piperidine-1-carboxylic acid tert-butyl ester:

To a stirred solution of intermediate 3.B.iii (6.3 g, 14.0 mmol) in 2-methyl-2-propanol (70 ml) and water (70 ml) was added, at rt, AD-mix α (30 g). The reaction mixture was stirred overnight and NaHSO₃ (34 g) was added portionwise. The two layers were separated and the aq. layer was extracted with EA (3 x 150 ml). The combined org. extracts were washed with brine and dried over Na₂SO₄. After filtration and evaporation to dryness, the residue was chromatographed over SiO₂ (EA-Hex 4-1) to afford the title diol (3.35 g, 6.95 mmol) as a white solid.
MS (ESI, m/z): 482.4 [M+H⁺].

### 3.B.v. (3R, 4S)-3-(2,2-dimethyl-[1,3]dioxolan-4-yl)-4-[2-(1phenyl-1H-tetrazole-5-ylsu/fanyl)-ethyl]-piperidine-1-carboxylic acid tert-buyl ester:

To a solution of intermediate 3.B.iv (3.35 g, 6.95 mmol) in DCM (50 ml) was added, at rt, PTSA (0.07 g, 0.36 mmol) and 2,2-dimethoxypropane (1.71 ml, 13.9 mmol). The reaction was stirred at rt for 40 min and 1*M* aq. NaHCO₃ (10 ml) was added. The two layers were separated and the aq. layer was extracted once with DCM (100 ml). The combined org. layers were washed with brine, dried over Na₂SO₄ and filtered. After concentration to dryness, the residue was chromatographed over SiO₂ (EA-Hex 1-2) to yield the title acetonide (3.42 g, 6.55 mmol) as a colourless oil.
¹H NMR (CDCl₃) δ: 7.74-7.60 (m, 5H); 4.20 (m, 1H); 4.02 (m, 2H); 3.93-3.61 (m, 4H); 3.23 (br s, 1H); 2.96 (br d, *J* = 12.1 Hz, 1H); 2.29 (m, 1H); 2.16-1.91 (m, 2H); 1.84 (m, 1H); 1.68 (m, 2H); 1.47 (s, 9H); 1.69 (s, 3H); 1.34 (s, 3H).
MS (ESI, m/z): 522.5 [M+H⁺].

### 3.B.vi. (3R,4R)-3-(2,2-dimethyl-[1,3]dioxolan-4-yl)-4-[3-(3-methoxy-quinolin-5-yl)-allyl]-piperidine-1-carboxylic acid tert-butyl ester:

To a solution of intermediate 3.B.v (3.42 g, 6.55 mmol) in DME (24 ml) was added 3-methoxyquinoline-5-carbaldehyde (1.1 g, 5.9 mmol). The mixture was cooled to -60°C and a solution of potassium bis(trimethylsilylamide) (0.5*M* in toluene, 20 ml, 10 mmol) was added dropwise over 20 min. After the addition was complete, the reaction was stirred 10 min at the same temperature and water (20 ml) was added. The mixture was warmed to rt, and was extracted with EA (3 x 150 ml). The combined extracts were washed with brine, dried over Na₂SO₄, filtered and concentrated to dryness. The residue was chromatographed over SiO₂ (EA-Hex 1-2) to afford the title compound (2.52 g, 5.22 mmol) as a colourless foam. The compound was recovered as a 2:1 mixture of epimers.
¹H NMR (CDCl₃) δ: 8.70 (d, *J* = 2.8 Hz, 1H); 7.97 (app d, *J* = 8.2 Hz, 1H); 7.65-7.50 (m, 3H); 7.02 (d, *J* = 15.2 Hz, 1H); 6.31 (ddd, *J=* 6.0, 8.4, 15.2 Hz, 0.66H); 6.17 (td, *J=* 7.2, 15.2 Hz, 0.33H); 4.16 (m, 2H); 3.72 (m, 1H); 3.69-3.22 (m, 4H); 2.69 (m, 2x0.33H); 2.44 (m, 2x0.66H); 2.19-2.05 (m, 0.66H); 2.03-1.83 (m, 1.33H); 1.69 (m, 2H); 1.49 (s, 9x0.66H); 1.48 (s, 9x0.33H); 1.43 (s, 3x0.66H); 1.42 (s, 3x0.33H); 1.39 (s, 3x0.66H); 1.38 (s, 3x0.33H).
MS (ESI, m/z): 483.3 [M+H⁺].

### 3.B.vii. (3R,4R)-3-(2,2-dimethyl-[1,3]dioxolan-4-yl)-4-[3-(3-methoxy-quinolin-5-yl)-propyl]-piperidine-1-carboxylic acid tert-butyl ester:

To a solution of intermediate 3.B.vi (2.52 g, 5.22 mmol) in EA (40 ml) was added 10% palladium on charcoal (2 g). The reaction mixture was stirred under hydrogen (1 atm) for 90 min. The catalyst was removed by filtration and the filtrate concentrated to dryness. The residue was chromatographed over SiO₂ (EA-Hex 1-1) to afford the title compound (2.25 g, 4.64 mmol) as a colourless foam.
¹H NMR (CDCl₃) δ: 8.70 (d, *J* = 2.8 Hz, 1H); 7.97 (app d, *J* = 8.2 Hz, 1H); 7.41-7.34 (m, 2H); 7.14 (m, 1H); 3.88-3.75 (m, 2H); 3.76 (s, 3H); 3.38 (m, 1H); 3.26-2.84 (br m, 4H); 2.80 (m, 2H); 1.60-1.24 (m, 8H); 1.23 (s, 9H); 1.16 (s, 3x0.33H); 1.11 (3x0.66H); 1.09 (3x0.33H); 1.07 (3x0.66H).
MS (ESI, m/z): 485.4 [M+H⁺].

### 3.B.viii. (3R,4R)-3-(1,2-dihydroxy-ethyl)-4-[3-(3-methoxy-quinolin-5-yl)propyl]-piperidine-1-carboxylic acid tert-butyl ester:

A solution of intermediate 3.B.vii (2.7 g, 5.57 mmol) in TFA (10 ml) was stirred 5 min at rt. Water (20 ml) was added and the mixture was further stirred 10 min. The volatiles were removed under reduced pressure and the residue was diluted in 1*N* aq. NaOH (20 ml) and THF (20 ml). Solid NaOH (0.5 g) and di-*tert*-butyl dicarbonate (1.8 g, 8.24 mmol) were added. The mixture was stirred 30 min at rt. The volatiles were removed under reduced pressure and the residue was extracted with EA (2 x 150 ml). The combined org. layers were washed with brine and concentrated to dryness. The residue was chromatographed over SiO₂ (Hex-EA 1-1 then EA then EA-MeOH 9-1) to afford the title diol (2.1 g, 4.72 mmol) as a colourless foam.
MS (ESI, m/z): 445.6 [M+H⁺].

### 3.B.ix. (3R,4R)-3-formyl-4-[3-(3-methoxy-quinolin-5-yl)-propyl]-piperidine-1-carboxylic acid tert-butyl ester:

To a solution of intermediate 3.B.viii (2.1 g, 4.72 mmol) in acetone (15 ml) was added a solution of NaIO₄ (3 g, 14 mmol) in water (10 ml). The mixture was stirred at rt for 20 min. The reaction mixture was filtered through a pad of Celite and the filtrate was concentrated to dryness. The residue was chromatographed over SiO₂ (EA-Hex 1-2) to afford the title aldehyde (1.45 g, 3.51 mmol) as a colourless foam.
MS (ESI, m/z): 413.0[M+H⁺].

### 3.B.x. (3R,4R)-4-[3-(3-methoxy-quinolin-5-yl)-propyl]-piperidine-1,3-dicarboxylic acid 1-tert-butyl ester 3-methyl ester:

To a solution of intermediate 3.B.ix (1.45 g, 3.51 mmol) in acetone (35 ml) and water (5 ml) was added KMnO₄ (1.67 g, 10.5 mmol). The reaction mixture was stirred at rt for 30 min. NaHSO₃ (1.5 g) and saturated sodium thiosulfate (10 ml) were added. After stirring 15 min, the reaction mixture was filtered through a pad of celite (eluent: EA containing 1% acetic acid). The filtrate was concentrated *in vacuo* and partitioned between water (30 ml) and EA (100 ml). The aq. layer was extracted twice more (2 x 100 ml) with EA. The combined extracts were washed with brine and dried over Na₂SO₄. After filtration and concentration to dryness, the residue was filtered quickly through a plug of SiO₂ (EA) to afford the title acid (1.5 g, 3.5 mmol) as an oil.
MS (ESI, m/z): 429.4 [M+H⁺].
To a solution this acid (1.5 g) in benzene (25 ml) and MeOH (5 ml) was added dropwise trimethylsilyldiazomethane (4 ml, 2*M* in Hex). The reaction proceeded for 30 min and AcOH (3 ml) was added. After stirring 10 min, the reaction mixture was diluted with EA (100 ml) and 1*M* aq. NaOH (20 ml) was added. The two layers were separated and the aq. layer was extracted once with EA (100 ml). The combined org. extracts were washed with brine and concentrated to dryness. The residue was chromatographed over SiO₂ (EA-Hex 1-1) to afford the title ester (1.16 g, 2.62 mmol) as a colourless oil.
¹H NMR (CDCl₃) δ: 8.70 (d, J = 2.85 Hz, 1H); 7.93 (br d, *J* = 8.4 Hz, 1H); 7.52-7.45 (m, 2H); 7.34 (d, *J* = 6.3 Hz, 1H); 4.00 (s, 3H); 3.99 (overlapped m, 1H); 3.75 (m, 1H); 3.60 (s, 3H); 3.24 (dd, *J* = 3.3, 13.5 Hz, 1H); 3.05 (overlapped m, 1H); 3.00 (t, *J* = 7.5 Hz, 2H); 2.62 (br s, 1H); 1.88-1.73 (m, 5H); 1.54 (m, 2H); 1.43 (s, 9H).
MS (ESI, m/z): 443.5[M+H⁺].

### 3.B.xi. (3R,4R)-4-[3-(3-methoxy-quinolin-5-yl)-propyl]-piperidine-3-carboxylic acid methyl ester:

A solution of intermediate 3.B.x (1.16 g, 2.62 mmol) in TFA (6 ml) was stirred at rt for 20 min. The solvent was evaporated and the residue was partitioned between water (20 ml) and a DCM-MeOH mixture (9-1, 50 ml). The pH was adjusted to 10 adding 1*M* aq. NaOH. The aq layer was extracted three times with the same mixture. The combined extracts were washed with brine, dried over Na₂SO₄, filtered and concentrated to dryness. The residue was chromatographed over SiO₂ (DCM-MeOH 19-1 containing 1% aq. concentrated NH₄OH) to afford the title compound (0.85 g, 2.47 mmol) as a colourless oil.
¹H NMR (CDCl₃) δ: 8.70 (d, *J* = 2.8 Hz, 1H); 7.92 (br d, *J* = 8.3 Hz, 1H); 7.54-7.45 (m, 2H); 7.34 (d, *J=* 7.1 Hz, 1H); 4.00 (s, 3H); 3.58 (s, 3H); 3.24 *(dd, J=* 3.3, 13.4 Hz, 1H); 3.11 (td, *J* = 3.8, 13.4 Hz, 1H); 3.02 (t, *J* = 7.4 Hz, 2H); 2.85 (dd, *J* = 3.7, 13.5 Hz, 1H); 2.69 (overlapped dd, *J* = 3.8, 10.2 Hz, 1H); 2.65 (m, 1H); 2.26 (br s, 1H); 1.82 (m, 3H); 1.69-1.51 (m, 2H); 1.42 (m, 2H).
MS (ESI, m/z): 343.6 [M+H⁺].

### 3.B.xii. (3R,4R)-4-[3-(3-methoxy-quinolin-5-yl)-propyl]-1-[2-(thiophen-2-ylsulfanyl)-ethyl]-piperidine-3-carboxylic acid methyl ester:

To a solution of intermediate 3.B.xi (0.35 g, 1 mmol) in DMF (4 ml) were added 2-(2-bromo-ethylsulfanyl)-thiophene (0.28 g, 1.25 mmol) and DIPEA (0.35 ml, 2mmol). The reaction was heated at 80°C for 1 h. The volatiles were removed under HV and the residue was chromatographed over SiO₂ (DCM-MeOH 19-1) to afford the title compound (0.24 g, 0.5 mmol) as a colourless oil.
¹H NMR (CDCl₃) δ: 8.69 (d, *J* = 2.8 Hz, 1H); 7.91 (br d, J= 8.3 Hz, 1H); 7.48 (m, 2H); 7.34 (m, 2H); 7.12 (dd, *J=* 1.2, 3.5 Hz, 1H); 6.97 (dd, *J=* 3.5, 5.3 Hz, 1H); 3.99 (s, 3H); 3.63 (s, 3H); 2.99 (m, 2H); 2.90 (t, J= 7.5 Hz, 2H); 2.67 (m, 2H); 2.62 (m, 2H); 2.48 (m, 2H); 2.33 (m, 1H); 1.85-1.62 (m, 6H), 1.48 (m, 1H).
MS (ESI, m/z): 485.4 [M+H⁺].

### 3.B.xiii. (3R,4R)-4-[3-(3-methoxy-quinolin-5-yl)-propyl]-1-[2-(thiophen-2-ylsulfanyl)-ethyl]-piperidine-3-carboxylic acid:

To a solution of intermediate 3.B.xii (0.24 g, 0.5 mmol) in dioxane (5 ml) was added 3*M* aq. NaOH (1.5 ml). The reaction mixture was heated at 100°C for 4 h. After cooling, 3*N* aq. HCl (1.5 ml) was added. The volatiles were removed under reduced pressure and the residue was chromatographed over SiO₂ (DCM-MeOH 9-1 containing 1% aq. concentrated NH₄OH) to afford the title acid (0.124 g, 0.26 mmol) as a colourless foam.
¹H NMR (CDCl₃) δ: 8.68 (d, *J* = 2.1 Hz, 1H); 7.92 (d, *J* = 8.3 Hz, 1H); 7.64 (d, *J* = 2.1 Hz, 1H); 7.47 (t, *J =* 7.0 Hz, 1H); 7.37 (m, 2H); 7.19 (dd, *J =* 1.2, 3.5 Hz, 1H); 7.0 (dd, *J =* 3.5, 5.3 Hz, 1H); 4.03 (s, 3H); 3.08 (m, 3H); 2.88 (m, 3H); 2.73 (m, 3H); 2.34 (br d, J= 11.2 Hz, 1H); 2.21 (m, 1H); 2.05 (m, 1H); 1.85-1.45 (m, 7H).
MS (ESI, m/z): 471.4 [M+H⁺].

### Example 4: (3R,4S)-1-benzofuran-2-ylmethyl-4-[3-(3-methoxy-quinolin-5-yl)-propyl]-piperidine-3-carboxylic acid:

### 4.i. (3R,4S)-1-benzofuran-2-ylmethyl-4-[3-(3-methoxy-quinolin-5-yl)propyl]-piperidine-3-carboxylic acid methyl ester:

To a solution of intermediate 3.B.xi (0.25 g, 0.73 mmol) in 1,2-DCE (6 ml) were added benzofuran-2-carbaldehyde (0.118 g, 1.1 eq) and sodium triacetoxyborohydride (0.232 g, 1.5 eq). The reaction was stirred 2 h at rt, and was subsequently filtered through Hydromatrix® (pretreated with water). The filtrate was concentrated to dryness and the residue was purified over SiO₂ (DCM-MeOH 19-1) to afford the title ester (0.32 g, 0.67 mmol) as a colourless oil.
MS (ESI, m/z): 473.2 [M+H⁺].

### 4.ii. (3R,4S)-1-benzofuran-2-ylmethyl-4-[3-(3-methoxy-quinolin-5-yl)propyl]-piperidine-3-carboxylic acid:

Starting from intermediate 4.i (0.32 g, 0.67 mmol), the title compound (0.14 g, 0.3 mmol) was obtained as a colourless foam using the protocol of Example 3, step 3.A.xii. The compound was purified by chromatography over SiO₂ using a DCM-MeOH 9-1 mixture containing 1% aq. NH₄OH as an eluent.
MS (ESI, m/z): 459.1 [M+H⁺].

### Example 5: (3R,4R)-{4-[3-(3-methoxy-quinolin-5-yl)-propyl]-1-[2-(thiophen-2-ylsulfanyl)-ethyl]-piperidin-3-yl}-acetic acid:

### 5.i. (3R,4S)-4-(tert-butyl-dimethyl-silanyloxymethyl)-3-vinyl-piperidine-1-carboxylic acid tert-butyl ester:

To a solution of (3*R*,4*S*)-*tert*-butyl 4-(2-hydroxyethyl)-3-vinylpiperidine-1-carboxylate (11.8 g, 3.99 mmol) in DCM (250 ml), was added under nitrogen TEA (12.88 ml, 2 eq.), DMAP (0.6 g, 1.9 mmol), and TBDMS-Cl (6.97 g, 1 eq.). The reaction mixture was stirred at rt for 4 h. The reaction mixture was washed with saturated NaHCO₃ (150 ml), saturated cooper sulfate (2 x 150 ml) and water (150 ml). After drying over Na₂SO₄ and filtration, the solvent was evaporated to dryness. The residue (16.8 g, 98% yield) was carried on without further purification.
¹H NMR (CDCl₃) δ: 5.78 (1H, m); 5.13 (m, 1H); 5.08 (m, 1H,); 4.03 (br s, 1H); 3.94 (m, 1H); 3.64 (t, 2H, J = 6.6 Hz); 2.95 (dd, 1H, J =3.3, 13.2 Hz); 2.80 (br s, 1H); 2.25 (m, 1H); 1.77 (m, 1H); 1.46-1.32 (overlapped m, 4H), 1.44 (s, 9H); 0.89 (s, 9H); 0.05 (s, 6H).
MS (ESI, m/z): [M+H⁺] 370.5.

### 5.ii. (3R,4S)-4-(tert-butyl-dimethyl-silanyloxymethyl)-3-(2-hydroxy-ethyl)-piperidine-1-carboxylic acid tert-butyl ester:

To an ice-chilled solution of intermediate 5.i (12 g, 32.4 mmol) in THF (150 ml) was added borane-dimethylsulfide complex (3.6 ml, 35.7 mmol). The reaction was then let under stirring overnight with warming. After cooling to 0°C, 3*M* aq. NaOH (60 ml) and 30% aq. H₂O₂ (18.5 ml) were added. The reaction mixture was stirred 1 h. The reaction mixture was diluted with DCM (200 ml). Saturated aq. NaHSO₃ was added until the oxidizing agent was completely destroyed. The two layers were separated and the aq. layer was extracted twice with DCM (2 x 200 ml). The combined org. layers were washed with brine, dried over Na₂SO₄, filtered and concentrated to dryness. The residue was purified by chromatography over SiO₂ (EA-Hex 4-1) to afford the title alcohol (11.34 g. 29.3 mmol) as a colourless oil.
¹H NMR (CDCl₃) δ: 4.17 (m, 2H); 3.75 (td, J =1.8, 6 Hz, 2H); 3.68 (td, J =1.8, 6 Hz, 2H); 2.92-2.51 (m, 2H); 1.77-1.25 (m, 9H); 1.46 (s, 9H); 0.90 (s ,9H); 0.11 (s, 6H).
MS (ESI, m/z): [M+H⁺] 388.4.

### 5.iii. (3R,4S)-4-(tert-butyl-dimethyl-silanyloxymethyl)-3-[2-(tetrahydro-pyran-2-yloxy)-ethyl]-piperidine-1-carboxylic acid tert-butyl ester:

To a solution of intermediate 5.ii (11.34 g, 29.2 mmol) in DCM (230 ml) was added PTSA (0.222 g, 1.1 mmol). The reaction mixture was stirred for 15 min and 3,4-dihydro-2*H*-pyran (5.3 ml, 58.5 mmol) was added dropwise. The reaction mixture was stirred at rt for 90 min. 1M aq. NaHCO₃ (50 ml) was added and the two layers were separated. The org. layer was washed with brine (50 ml), dried over Na₂SO₄ and filtered. The solvent was evaporated and the residue was chromatographed over SiO₂ (EA-Hex 1-4) to afford the title derivative (12 g, 25.4 mmol) as a colourless oil.
¹H NMR (CDCl₃) δ: 4.59 (m, 1H,); 4.02 (br s, 1H); 3.90-3.78 (m, 3H); 3.65 (m, 2H); 3.54-3.43 (m, 2H); 2.90-2.85 (m, 2H); 1.83-1.22 (m, 14H); 1.45 (s, 9H); 0.89 (s, 9H); 0.06 (s, 6H).
MS (ESI, m/z): [M+H⁺] 472.7.

### 5.iv. (3R,4S)-tert-butyl-4-(2-hydroxyethyl)-3-(2-(tetrahydro-2H-pyran-2-yloxy)ethyl)piperidine-1-carboxylate:

To a solution of intermediate 5.iii (11.99 g, 25.4 mmol) in THF (100 ml) was added TBAF (1*M* in THF, 35.7 ml). The reaction mixture was stirred for 1 h. The volatiles were removed under pressure and the residue was chromatographed over SiO₂ (EA-Hex 2-1) to afford the title alcohol (9.2 g, 25.7 mmol) as a thick oil.
¹H NMR (CDCl₃) δ: 4.57 (m, 1H); 4.02 (br s, 1H); 3.91-3.79 (m, 3H); 3.70 (m, 2H); 3.54-3.48 (m, 2H); 2.90-2.80 (m, 2H); 1.83-1.38 (m, 15H); 1.45 (s, 9H).
MS (ESI, m/z): [M+H⁺] 358.5.

### 5.v. (3R,4S)-4-(1-phenyl-1H-tetrazol-5-ylmethylsulfanylmethyl)-3-[2-(tetrahydro-pyran 2-yloxy)- ethyl]-piperidine-1-carboxylic acid tert-butyl ester:

To an iced chilled solution of intermediate 5.iv (9.2 g, 25.7 mmol) in THF (10 ml), were added successively PPh₃ (10.12 g, 38.6 mmol), phenyltetrazole thiol (5.5 g, 30.9 mmol) and dropwise DIAD (7.6 ml, 38.6 mmol). The reaction mixture was stirred overnight at rt. The volatiles were removed under reduced pressure and the residue was chromatographed over SiO₂ (Hex-EA 4-1). The relevant fractions were pooled, concentrated to dryness. Hex (100 ml) was added in order to crystallize the hydrazine side product. The mixture was filtered and solvent was evaporated in vacuum to afford the title compound as a colourless oil (20.1 g) still contaminated with the hydrazine side product.
MS (ESI, m/z): [M+H⁺] 518.5.

### 5.vi. (3R,4S)-3-[2-(tert-butyl-dimethyl-silanyloxy)-ethyl]-4-[2-(1-phenyl-1H-tetrazole-5-sulfonyl)-ethyl] piperidine-1-carboxylic acid tert-butyl ester:

To a stirred solution of intermediate 5.v (20.2 g, 39.02 mmol) in EtOH (400 ml) at rt, was added dropwise ammonium molybdate (6.06 g, 4.904 mmol) in 30% aq. H₂O₂ (51.4 ml). The mixture reaction was stirred vigorously for 4 h. Water (200 ml) was added and the volatiles were evaporated. The aq. layer was extracted twice with EA (2 x 150 ml), and the combined org. phases were washed with water (250 ml), dried over Na₂SO₄, filtered and evaporated to dryness. The residue (9.28 g, 19.93 mmol) was taken up in DCM (100 ml) and TEA (5.5 ml, 39.8 mmol), DMAP (0.3 g, 2 mmol) and TBDMS-Cl (3.5 g, 19.9 mmol) were added. The reaction mixture was stirred at rt for 3 h. The solvent was removed under reduced pressure and the residue was chromatographed over SiO₂ (Hex-EA 2-1) to afford the title compound as a colourless oil (10.33 g, 17.8 mmol).
MS (ESI, m/z): [M+H⁺] 550.5.

### 5.vii. (3R,4R)-3-[2-(tert-butyl-dimethyl-silanyloacy)-ethyl]-4-trans-[3-(3-methoxy-quinolin-5-yl)-allyl]-piperidine-1-carboxylic acid tert-butyl ester:

To a solution of intermediate 5.vi (10.33 g, 17.8 mmol) in 1,2-DME (80 ml) was added 3-methoxy-quinoline-5-carbaldehyde (3 g, 16 mmol). After cooling to -60°C, a solution of potassium bis(trimethylsilyl)amide (0.5*M* in toluene, 60 ml, 30 mmol) was added over 20 min. The reaction proceeded for 30 min. and 10% aq. NaHSO₄ (200 ml) was added. After warming to rt, the two layers were separated. The aq. layer was extracted twice with EA (2 x 200 ml). The combined org. layers were washed with brine, dried over Na₂SO₄, filtered and concentrated to dryness. The residue was chromatographed over SiO₂ (Hex-EA 3-1) to afford the title alkene (7.85 g, 14.5 mmol) as a viscous oil.
MS (ESI, m/z): [M+H⁺] 541.3.

### 5.viii. (3R,4R)-3-(2-hydroxy-ethyl)-4-trans-[3-(3-methoxy-quinolin-5-yl)-allyl]-piperidine-1-carboxylic acid tert-butyl ester:

To a solution of intermediate 5.vii (7.85 g, 14.5 mmol) in THF (100 ml) was added at rt TBAF (1*M* in THF, 20 ml, 20 mmol). The reaction mixture was let under stirring for 3 h. After concentration to dryness, the residue was chromatographed over SiO₂ (DCM-MeOH 19-1) to afford the title alcohol (6.22 g, 14.6 mmol) as a colourless oil.
MS (ESI, m/z): [M+H⁺] 427.0.

### 5.ix. (3R,4R)-3-(2-hydroxy-ethyl)-4-[3-(3-methoxy-quinolin-5-yl)-propyl]-piperidine-1-carboxylic acid tert-butyl ester:

To a stirred solution of intermediate 5.viii (6.22 g, 14.5 mmol) in EA (100 ml) was added palladium on activated charcoal (3.5 g). The reaction mixture was vigorously stirred for 1 h under hydrogen (1 atm). The residue was diluted with EA, the catalyst was removed by filtration and the solvent was evaporated under HV to yield the title alcohol (5.75 g, 13.4 mmol). It was carried on in the next reaction without further purification.
MS (ESI, m/z): [M+H⁺] 429.2.

### 5.x. (3R,4R)-4-[3-(3-methoxy-quinolin-5-yl)-propyl]-3-(2-oxo-ethyl)-piperidine-1-carboxylic acid tert-butyl ester:

To a solution of oxalyl chloride (3.5 ml, 38.9 mmol) in DCM (25 ml) cooled to -78°C, was added a solution of DMSO (3.5 ml, 46.9 mmol) in DCM (25 ml) over 10 min. After stirring further 15 min, a solution of intermediate 5.ix (5.75 g) in DCM (25 ml) was added and the resulting mixture was stirred 1 h at the same temperature. TEA (15 ml, 134.1 mmol) in DCM (15 ml) was added dropwise and the reaction mixture was stirred at -78°C for 30 min before a slow warming. The reaction mixture was quenched with saturated aq. NaHCO₃ (50 ml). The two layers were separated and the org. layer was concentrated to dryness. The residue was quickly filtered through SiO₂ (Hex-EA 1-4) to afford the title aldehyde (5.08 g, 11.92 mmol) as a colourless oil.
MS (ESI, m/z): [M+H⁺] 427.1.

### 5.xi. (3R,4R)-3-carboxymethyl-4-[3-(3-methoxy-quinolin-5-yl)-propyl]-piperidine-1-carboxylic acid tert-butyl ester:

To a solution of intermediate 5.x (5.08 g, 11.9 mmol) in acetone (120 ml) and water (18 ml) was added KMnO₄ (5.65 g, 35.7 mmol). The reaction mixture was stirred at rt for 30 min. NaHSO₃ (5.3 g) and saturated aq. sodium thiosulfate (35 ml) were added. After stirring 15 min, the reaction mixture was filtered through a pad of Celite. The filtrate was concentrated *in vacuo* and diluted with EA (300 ml) and water (100 ml). The phases were separated and the aq. layer was extracted twice more with EA (2 x 250 ml). The combined org. layers were washed with brine, filtered and dried over Na₂SO₄. After filtration, the residue was concentrated to dryness and the residue was filtered quickly over SiO₂ (EA) to afford the title acid (5.1 g, 11.5 mmol).
MS (ESI, m/z): [M+H⁺] 443.1.

### 5.xii. (3R,4R)-3-methoxycarbonylmethyl-4-[3 -(3-methoxy-quinolin-5-yl)propyl]-piperidine-1-carboxylic acid tert-butyl ester:

To a solution of intermediate 5.xi (5.1 g, 11.17 mmol) in benzene (75 ml) and MeOH (15 ml) was added dropwise trimethylsilyl diazomethane (2*M* in ether, 8 ml, 16 mmol). The reaction mixture was stirred for 1 h. AcOH (3 ml) was added and the mixture was concentrated to dryness. The residue was partitioned between EA (200 ml) and 0.5*N* aq. NaOH (100 ml). The org. layer was washed once more with 0.5*N* NaOH (100 ml), water (100 ml), and brine (100 ml). After drying over Na₂SO₄, filtration and concentration to dryness, the residue was dried under HV to afford the title ester (4 g, 8.76 mmol) as a viscous oil.
MS (ESI, m/z): [M+H⁺] 457.5.

### 5.xiii. (3R,4R)-4-[3-(3-methoxy-quinolin-5-yl)-propyl]-piperidin-3-yl}-acetic acid methyl ester:

A solution of intermediate 5.xii (4 g, 8.761 mmol) in TFA (20 ml) was let under stirring at rt for 20 min. After the volatiles were removed under reduced pressure, the residue was partitioned between DCM-MeOH (9-1, 200 ml) and 0.5*N* NaOH (100 ml). The aq. layer was extracted three more times (3 x 100 ml) and the combined org. extracts were washed with brine (100 ml), dried over Na₂SO₄, filtered and concentrated to dryness. The residue was chromatographed over SiO₂ (DCM-MeOH 9-1 1% NH₄OH) to afford the title amine (2.3 g, 6.45 mmol) as a colourless oil.
¹H NMR (CDCl₃): 8.68 (d, J = 2.7 Hz, 1H); 7.92 (d, J = 8.1 Hz, 1H); 7.53-7.45 (m, 2H); 7.34 (dd; J = 0.9, 7.2 Hz, 1H); 3.98 (s, 3H); 3.67 (s, 3H); 2.99 (m, 3H); 2.91 (dd, J = 3, 12.6 Hz, 1H); 2.70-2.51 (m, 3H); 2.26-2.14 (m, 2H); 1.82 (br s, 1H); 1.81-1.63 (m, 3H); 1.50-1.26 (m, 4H).
MS (ESI, m/z): [M+H⁺] 357.3.

### 5.xiv. {(3R,4R)-4-[3-(3-methoxy-quinolin-5-yl)-propyl]-1-[2-(thiophen-2-ylsulfanyl)-ethyl]-piperidin-3-yl}-acetic acid methyl ester:

To a solution of intermediate 5.xiii (1 g, 2.8 mmol) in DMF (11.4 ml) were added 2-(2-bromo-ethylsulfanyl)-2,5-dihydro-thiophene (1.194 g, 5.35 mmol) and DIPEA (1.241 ml, 7.51 mmol). The reaction mixture was heated at 80°C for 1 h. The volatiles were removed under HV and the residue was chromatographed over SiO₂ (DCM-MeOH 19-1) to afford the title compound (0.836 g, 1.67 mmol) as a colourless oil.
¹H NMR (CDCl₃): 8.69 (d, J = 3 Hz, 1H), 7.92 (d, J = 8.4 Hz, 1H); 7.52-7.45 (m, 2H); 7.35-7.32 (m, 2 H), 7.12 (d, J = 2.7 Hz, 1H), 6.96 (dd, J = 3.6, 5.4 Hz., 1H); 3.98 (s, 3H); 3.64 (s, 3H); 2.98 (m, 2H); 2.88 (m, 2H); 2.71-2.43 (m, 4H); 2.22 (m, 2H); 2.03 (m, 2H); 1.74 (m, 2H); 1.62-1.32 (m, 6H).
MS (ESI, m/z): [M+H⁺] 499.4.

### 5.xv. (3R,4R)-{4-[3-(3-methoxy-quinolin-5-yl)-propyl]-1-[2-(thiophen-2-ylsulfanyl)-ethyl]-piperidin-3-yl}-acefic acid:

To a solution of intermediate 5.xiv (0.836 g, 1.67 mmol) in dioxane (10 ml) was added 3*M* NaOH (8.1 ml, 24.3 mmol). The reaction mixture was heated at 100°C overnight. After cooling, 3*M* HCl (8.1 ml) was added. The volatiles were removed under reduced pressure and the residue was chromatographed over SiO₂ (DCM-MeOH 9-1 to 6-1 1% NH₄OH) to afford the title compound (0.634 g, 1.30 mmol) as a colourless foam.
¹H NMR (CDCl₃): 8.69 (d, J = 3.3 Hz, 1H), 7.92 (d, J = 8.4 Hz, 1H), 7.58-7.45 (m, 2H); 7.38-7.33 (m, 2H); 7.17 (d, J = 2.8 Hz, 1H), 6.98 (m, 1H), 4.8 (br s, 1H), 3.98 (s, 3H); 3.10-2.92 (m, 5H); 2.88-2.71 (m, 3H)); 2.51-2.42 (m, 2H); 2.18 (m, 1H); 2.08 (m, 1H); 1.72-1.32 (m, 8H).
MS (ESI, m/z): [M+H⁺] 485.6.

### Example 6: 2-{(3R,4S)-4-[3-(3-methoxy-quinolin-5-yl)-propyl]-1-[2-(thiophen-2-ylsulfanyl)-ethyl]-piperidin-3-yl}-ethanol:

To an ice-cooled solution of intermediate 5.xiv (0.35 g, 0.75 mmol) in THF (10 ml) was added DIBAH (1.5*M* in toluene, 2 ml). The reaction was stirred 30 min at this temperature and water (0.2 ml) was added. The reaction mixture was diluted with ether (20 ml) and was filtered through a pad of celite. The filtrate was concentrated to dryness and the residue was chromatographed over SiO₂ (DCM-MeOH 9-1) to afford the title alcohol (0.200 g, 0.42 mmol) as a colourless oil.
MS (ESI, m/z): [M+H⁺] 471.4.

### Example 7: carbamic acid 2-{(3R,4R)-4-[3-(3-methoxy-quinolin-5-yl)-propyl]-1-[2-(thiophen-2-ylsulfanyl)-ethyl]-piperidin-3-yl}-ethyl ester:

To an ice-chilled solution of the compound of Example 6 (0.1 g) in DCM (1.5 ml) was added trichloroacetyl isocyanate (0.03 ml). After stirring at rt for 1 h, the reaction mixture was concentrated to dryness. The residue was taken up in 2-methyl-2-propanol (1 ml) and MeOH (0.5 ml). A saturated K₂CO₃ solution (0.5 ml) was added and the mixture was heated at 70°C for 2 h. After concentration *in vacuo,* the residue was directly subjected to chromatography over SiO₂ (DCM-MeOH 19-1 containing 1% aq. NH₄OH) to afford the title compound as a colourless foam.
MS (ESI, m/z): [M+H⁺] 514.5.

### Example 8: 4-[3-hydroxy-3-(3-methoxy-quinolin-5-yl)-propyl]-1-[2-(thiophen-2-ylsulfanyl)-ethyl]-piperidine-3-carboxylic acid:

### 8.i. (3R,4S)-4-[2-(tert-butyl-dimethyl-silanyloxy)-ethyl]-3-(1,2-dihydroxy-ethyl)-piperidine-1-carboxylic acid tert-butyl ester:

To a mixture of intermediate 5.i (16.8 g, 45.4 mmol) in DCM (220 ml) and water (20 ml) were added NMO (16 g, 136 mmol) and potassium osmate dihydrate (0.33 g, 0.9 mmol). The mixture was vigorously stirred at rt overnight. The reaction mixture was diluted with water (100 ml). The two layers were decanted and the org. layer was dried over Na₂SO₄, filtered and concentrated *in vacuo.* The residue was chromatographed over SiO₂ (Hex-EA 1-1 then 1-3) to afford the title alcohol (16 g, 87% yield) as a brown oil.
MS (ESI, m/z): [M+H⁺] 404.1.

### 8.ii. (3R,4S)-4-[2-(tert-butyl-dimethyl-silanyloxy)-ethyl]-3-(2,2-dimethyl-[1,3]dioxolan-4-yl)-piperidine-1-carboxylic acid tert-butyl ester:

To a solution of intermediate 8.i (17.14 g, 42.4 mmol) in DCM (200 ml) was added dropwise at rt PTSA (0.4 g) and 2,2 dimethoxypropane (10.4 ml, 2 eq.). The reaction mixture was stirred at rt for 1 h. 1*M* aq. NaHCO₃ (100 ml) was added and the two phases were separated. The aq. layer was extracted with DCM (200 ml). The combined org. layers were washed with brine, dried over Na₂SO₄, filtered and concentrated to dryness. The acetonide was engaged in the next step without purification.
MS (ESI, m/z): [M+H⁺] 444.2.

### 8.iii. (3S,4R)-3-(2,2-dimethyl-[1,3]dioxolan-4-yl)-4-(2-hydroxy-ethyl)-piperidine-1-carboxylic acid tert-butyl ester:

To a solution of intermediate 8.ii (42.4 mmol theoretically) in THF (200 ml) was added TBAF (1*M* in THF, 55 ml). The reaction was stirred at rt overnight. The reaction was concentrated *in vacuo* and chromatographed over SiO₂ (EA-Hex 3-1) to afford the title alcohol (13.04 g, 39.6 mmol) as a colourless oil.
MS (ESI, m/z): [M+H⁺] 330.2.

### 8.iv. (3R,4S)-3-(2,2-dimethyl-[1,3]dioxolan-4-yl)-4-(2-oxo-ethyl)-piperidine-1-carboxylic acid tert-butyl ester:

To a mixture of oxalyl chloride (10 ml, 114.8 mmol) in DCM (95 ml) cooled to -78°C was added dropwise a solution of DMSO (10 ml, 139 mmol) in DCM (95 ml). The reaction mixture was stirred at this temperature 15 min. Then, a solution of intermediate 8.iii (13.04 g, 39.6 mmol) in DCM (95 ml) was added dropwise at -78°C and the reaction mixture was stirred at this temperature for 1 h. A solution of TEA (33 ml, 237 mmol) was added dropwise at -78°C and the reaction mixture was stirred for 1 h at this temperature and allowed to warm slowly to rt over 1 h. The reaction mixture was quenched with 10% aq. NaHSO₄ (100 ml). The two phases were separated and the org. layer was washed with water (100 ml) and brine (100 ml). The org. layer was dried over Na₂SO₄, filtered and concentrated to dryness. The residue was chromatographed over SiO₂ (EA: Hex 2-1) to afford the title aldehyde (12.16 g, 93% yield) as slightly coloured oil which was directly used in the next step.

### 8.v. (3R,4R)-4-allyl-3-(2,2-dimethyl-[1,3]dioxolan-4-yl)-piperidine-1-carboxylic acid tert-butyl ester:

To a suspension of methyltriphenylphosphonium bromide (21.3 g, 59.5 mmol) in THF (200 ml) cooled to -78°C, was added *n*-BuLi (2.35N in hexanes, 23 ml). The reaction mixture was stirred at this temperature for 15 min. and at 0°C for 45 min. Then, the reaction mixture was cooled to -78°C and a solution of intermediate 8.iv (12.16 g, 37 mmol) in THF (50 ml) was quickly added. The reaction mixture was stirred overnight at rt. The reaction was quenched with EtOH (50 ml) and concentrated to dryness. The residue was dispersed on SiO₂, loaded on the top of a column and purified by chromatography (Hex-EA 9-1) to afford the title alkene (10.74 g, 85% yield) as clear oil. The compound was obtained as a mixture of diastereomers.
MS (ESI, m/z): [M+H⁺] 326.3.

### 8.vi. (3R,4R)-3-(2,2-dimethyl-[1,3]dioxolan-4-yl)-4-(3-hydroxy-propyl)-piperidine-1-carboxylic acid tert-butyl ester:

To a solution of intermediate 8.v (5.64 g, 17.3 mmol) in THF (60 ml) was added 9-BBN (6.35 g, dimer, 26 mmol). The reaction mixture was stirred at rt under nitrogen for 16 h. The reaction mixture was cooled to 0°C and EtOH (50 ml), 3*M* aq. NaOH (100 ml) and 50% aq. H₂O₂ (78 ml) were added carefully. The reaction mixture was stirred vigorously at rt for 1 h.

The reaction mixture was cooled to 0°C and saturated sodium thiosulfate (100 ml) was added carefully. The reaction mixture was stirred at rt 20 min and diluted with EA (200 ml). The two phases were separated and the aq. layer was extracted twice with EA (2 x 200 ml). The combined org. layers were washed with brine, dried over Na₂SO₄, filtered and concentrated under reduced pressure. The residue was chromatographed over SiO₂ (EA-Hex 2-1 to 3-1) to afford the first diasteroisomer (Rf= 0.42 in EA-Hex 2-1 [TLC over SiO₂]), then the second one (Rf = 0.27 in EA-Hex 2-1 [TLC over SiO₂]). The diastereomers were combined to give a clear oil (5.54 g, 92% yield).
**First eluting isomer:**
¹H NMR (CDCl₃): 4.15-4.04 (m, 2H); 3.72-3.63 (m, 3H); 3.45-3.05 (br m, 4H); 1.92-1.82 (m, 2H); 1.70-1.43 (m, 7H); 1.47 (s, 9H); 1.41 (s, 3H); 1.36 (s, 3H).
MS (ESI, m/z): [M+H⁺] 344.3.
**Second eluting isomer:**
¹H NMR (CDCl₃): 4.07-3.99 (m, 2H); 3.69 (br s, 1H); 3.67-3.60 (m, 3H); 3.54 (m, 2H); 3.35 (m, 2H); 1.74-1.40 (m, 8H); 1.47 (s, 9H); 1.40 (s, 3H); 1.35 (s, 3H).
MS (ESI, m/z): [M+H⁺] 344.4.

### 8.vii. (3R,4R)-3-(2,2-dimethyl-[1,3]dioxolan-4-yl)-4-(3-oxo-propyl)-piperidine-1-carboxylic acid tert-butyl ester:

To a mixture of oxalyl chloride (8.5 ml, 97.1 mmol) in DCM (80 ml) cooled to -78°C was added dropwise a solution of DMSO (8.3 ml, 117.2 mmol) in DCM (80 ml). The reaction mixture was stirred at this temperature 15 min. A solution of intermediate 8.vi (11.5 g, 33.5 mmol) in DCM (80 ml) was added dropwise at -78°C and the reaction mixture was stirred at this temperature for 1 h. A solution of TEA (28 ml, 200 mmol) was added dropwise at -78°C and the reaction mixture was stirred for 1h at this temperature before allowing the reaction mixture to reach rt over 30 min. The reaction mixture was quenched adding 10% aq. NaHSO₄ (100 ml). The two phases were separated and the org. layer was washed with water (100 ml) and brine (100 ml). The combined org. layer was dried over Na₂SO₄, filtered and concentrated to dryness. The residue was chromatographed over SiO₂ (EA-Hex 2-1) to afford first isomer of the title aldehyde (7.31 g, 21.4 mmol) and its epimer (3.05 g, 8.79 mmol). Both compounds were obtained as clear oil.
First eluting isomer:
   ¹H NMR (CDCl₃): 9.80 (t, J = 1.7 Hz, 1H); 4.15 (m, 1H); 4.11 (br s, 1H); 3.78 (br s, 1H); 3.63 (t, J = 8.0 Hz, 1H); 3.57 (br s, 1H); 3.08-3.01 (br m, 2H); 2.56-2.50 (m, 2H); 1.93 (m, 1H); 1.82 (m, 2H); 1.73 (m, 1H); 1.59 (m, 2H); 1.46 (s, 9H); 1.38 (s, 3H); 1.34 (s, 3H).
Second eluting isomer:
   ¹H NMR (CDCl₃): 9.80 (t, J = 1.4 Hz, 1H); 4.11-4.02 (m, 2H); 3.60-3.15 (br m, 3H); 3.23 (br s, 2H); 2.56-2.50 (m, 2H); 1.74-1.54 (m, 6H); 1.46 (s, 9H); 1.40 (s, 3H); 1.35 (s, 3H).

### 8.viii. (3R,4R)-3-(2,2-Dimethyl-[1,3]dioxolan-4-yl)-4-[(3RS)-3-hydroxy-3-(3-methoxy-quinolin-5-yl)-propyl]-pipendine-1-carboxylic acid tert-butyl ester:

To a solution of 5-bromo-3-methoxy-quinoline (11.8 g, 50 mmol) in THF (200 ml) was added at -78°C, *n*-BuLi (2.35N in Hex, 22 ml). The mixture was stirred 15 min at this temperature and a solution of intermediate 8.vii (second eluting isomer, 7.3 g, 21.4 mmol) in ether (25 ml) was added. The mixture was stirred 15 min at this temperature and EtOH (5 ml) was added. 10% aq. NaHSO₄ (50 ml) was added. The two layers were decanted and the aq. layer was extracted once with EA (100 ml). The combined org. extracts were washed with brine, dried over Na₂SO₄, filtered and concentrated to dryness. The residue was chromatographed over SiO₂ (Hex-EA 1-1 then 1-3) to afford the title alcohol (3.28 g, 6.47 mmol) as a 1:1 mixture of epimers.
MS (ESI, m/z): [M+H⁺] 501.2.
The same experiment was performed with intermediate 8.vii (first eluting isomer, 3.05 g, 8.79 mmol) to afford the diastereomeric derivative (1.6 g, 3.16 mmol) as a 1:1 mixture of epimers.
MS (ESI, m/z): [M+H⁺] 501.2.

### 8.ix. (3R,4R)-3-formyl-4-[(3RS)-3-hydroxy-3-(3-methoxy-quinolin-5-yl)-propyl]-piperidine-1-carboxylic acid tert-butyl ester:

A solution of intermediate 8.viii (3.28 g, 6.47 mmol) was treated with AcOH (45 ml), water (15 ml) and THF (15 ml) at 65°C overnight. The solvent was removed *in vacuo.* The residue was taken up in EA (200 ml) and saturated NaHCO₃ (150 ml). 1*M* NaOH was added until pH 10 was reached. The two layers were decanted. The aq. layer was washed with brine, dried over Na₂SO₄, filtered and concentrated to dryness. The residue was chromatographed over SiO₂ (DCM-MeOH 19-1) to afford the expected intermediate triol (2.67 g) as a foam. To a solution of the latter (2.67 g, 5.8 mmol) in acetone (100 ml) was added a solution of NalO₄ (3.02 g, 14.1 mmol) in water (30 ml). The mixture was stirred at rt for 30 min. The solvent was evaporated and the residue was partitioned between water (200 ml) and EA (300 ml). The org. layer was washed with brine, dried over Na₂SO₄, filtered and concentrated to dryness to afford the title aldehyde (2.41 g).
MS (ESI, m/z): [M+H⁺] 428.8.

### 8.x. (3R,4R)-4-[(3RS)-3-hydroxy-3-(3-methoxy-quinolin-5-yl)-propyl]-piperidine-1,3-dicarboxylic acid 1-tert-butyl ester:

To a solution of intermediate 8.ix (2.41 g, crude) in acetone (70 ml) and water (10 ml) was added KMnO₄ (3.5 g). The mixture was stirred at rt for 90 min. NaHSO₃ (5 g) was added. The reaction mixture was diluted with acetone (100 ml) and water (50 ml). After stirring 15 min, the solids were filtered off. The pH of the filtrate was adjusted to 5-6 with 1*N* HCl, whereupon a solid formed. The solid was filtered off, washed with water and dried *in vacuo* to afford the title acid (2.16 g, 4.86 mmol) as a colourless solid.
MS (ESI, m/z): [M-H⁺] 443.0.

### 8.xi. (3R,4R)-4-[(3RS)-3-hydroxy-3-(3-methoxy-quinolin-5-yl)-propyl]-piperidine-1,3-dicarboxylic acid 1-tert-butyl ester 3-methyl ester:

To a solution of intermediate 8.x (2.13 g, 4.8 mmol) in benzene (40 ml) and MeOH (8 ml) was added trimethylsilyl diazomethane (4 ml). The mixture was stirred at rt for 30 min. AcOH (1.5 ml) was added and stirring was maintained for 10 min. The reaction mixture was partitioned between saturated NaHCO₃ (50 ml) and EA (100 ml). The org. layer was washed with saturated NaHCO₃ (50 ml) and brine. After drying over Na₂SO₄, filtration and evaporation to dryness, the residue was chromatographed over SiO₂ (EA-Hex 2-1) to afford the title alcohol (1.6 g, 3.49 mmol) as a colourless foam. The compound was obtained as a 1:1 mixture of epimers.
¹H NMR (CDCl₃) mixture of epimers: 8.67 (d, J = 2.8 Hz, 1H); 7.98 (d, J = 8.0 Hz, 1H); 7.77 (m, 1H); 7.61-7.50 (m, 2H); 5.26 (br t, J = 6.4 Hz, 1H); 3.98 (br s, 1H); 3.98 (s, 1.5H); 3.97 (s, 1.5H); 3.85 (br s, 1H); 3.60 (s, 1.5H); 3.56 (s, 1.5H); 3.21 (m, 1H); 3.01 (m, 1H); 2.61 (m, 1H); 2.20 (m, 1H); 2.00-1.93 (m, 2H); 1.85-1.78 (m, 2H); 1.75-1.43 (m, 3H); 1.43 (s, 9H).
MS (ESI, m/z): [M+H⁺] 459.2.

### 8.xii. (3R,4R)-4-[(3RS)-3-hydroxy-3-(3-methoxy-quinolin-5-yl)-propyl]-piperidine-3-carboxylic acid methyl ester:

A solution of intermediate 8.xi (1.6 g, 3.49 mmol) in TFA (6 ml) was stirred at rt for 20 min. The volatiles were removed *in vacuo* and the residue was partitioned between saturated NaHCO₃ (100 ml) and DCM-MeOH (9-1, 100 ml). The pH was adjusted to 9 adding 1*M* NaOH. The aq. layer was further extracted three times. The combined org. layers were washed with brine, dried over Na₂SO₄, filtered and concentrated to dryness. The residue was chromatographed (DCM-MeOH 9-1 1% concentrated NH₄OH) to afford the title piperidine (1.16 g, 94% yield) as a colourless foam. The compound was obtained as a 1:1 mixture of epimers.
¹H NMR (CDCl₃) mixture of epimers: 8.67 (d, J = 2.8 Hz, 1H); 7.98 (d, J = 7.8 Hz, 1H); 7.82 (d, J = 2.8 Hz, 0.5H); 7.78 (d, J = 2.8 Hz, 0.5H); 7.61-7.50 (m, 2H); 5.29 (overlapped t, J = 5.9 Hz, 0.5H); 5.24 (overlapped t, J = 6.1 Hz, 0.5H); 3.98 (s, 1.5H); 3.97 (s, 1.5H); 3.56 (s, 1.5H); 3.52 (s, 1.5); 3.16 (m, 1H); 3.04 (m, 1H); 2.76 (d, J = 3.5 Hz, 0.5H); 2.71 (d, J = 3.7 Hz, 0.5H); 2.60-2.54 (m, 2H); 2.06-1.74 (m, 6H); 1.59-1.26 (m, 3H).
MS (ESI, m/z): 359.2 [M+H⁺].

### 8.xiii. (3R,4R)-4-[(3RS)-3-hydroxy-3-(3-methoxy-quinolin-5-yl)-propyl]-1-[2-(thiophen-2-ylsulfanyl)-ethyl]-piperidine-3-carboxylic acid methyl ester:

To a solution of intermediate 8.xii (0.2 g, 0.55 mmol) in DMF (3 ml) were added DIPEA (0.184 ml) and 2-(2-bromo-ethylsulfanyl)-thiophene (0.186 g, 1.5 eq.). The reaction mixture was heated at 70°C for 3 h. After cooling the solvent was removed *in vacuo* and the residue was purified by chromatography over SiO₂ (DCM-MeOH 9-1) to afford the title compound (0.24g, 85% yield) as a colourless oil.
MS (ESI, m/z): 501.4 [M+H⁺].

### 8.xiv. 4-[3-hydroxy-3-(3-methoxy-quinolin-5-yl)-propyl]-1-[2-(thiophen-2-ylsulfanyl)-ethyl]-piperidine-3-carboxylic acid:

To a solution of intermediate 8.xiii (0.24 g, 0.48 mmol) in dioxane (5 ml) was added 3*M* aq. NaOH (1.5 ml). The mixture was heated at 70°C overnight. The reaction mixture was cooled to rt. The solvent was removed *in vacuo* and the pH of the aq layer was adjusted to 4 adding 3M aq. HCl. The aq. layer was extracted twice with DCM-MeOH mixture (9-1, 2 x 100 ml). The combined extracts were dried over Na₂SO₄, filtered and concentrated to dryness. The residue was chromatographed over SiO₂ (DCM-MeOH 6-1 1% concentrated NH₄OH) to afford the title acid (0.18 g, 77% yield) as a colourless foam. The compound was obtained as a 1:1 mixture of isomers.
¹H NMR (CDCl₃) mixture of epimers: 8.66 (d, J = 2.6 Hz, 1H); 7.96 (d, J = 8.6 Hz, 1H); 7.82 (d, J = 2.6 Hz, 0.5H); 7.68 (m, 1H); 7.60-7.48 (m, 1.5H); 7.38 (dd, J = 1.1, 5.4 Hz, 1H); 7.18 (dd, J = 1.1, 3.5 Hz, 1H); 6.98 (dd, J = 3.5, 5.4 Hz, 1H); 5.36 (dd, J = 3.2, 8.5 Hz, 0.5H); 5.25 (dd, J = 4.4, 8.5 Hz, 1H); 4.03 (s, 1.5H); 3.98 (s, 1.5H); 3.17-3.02 (m, 2H); 2.93 (br t, J = 6.8 Hz, 2H); 2.80-2.69 (m, 3H); 2.36-2.17 (m, 4H); 1.90-1.25 (m, 7H).
MS (ESI, m/z): 487.3 [M+H⁺].

### Example 9: 1-benzofuran-2-ylmethyl-(3R,4R)-4-[(3RS)-3-hydroxy-3-(3-methoxy-quinolin-5-yl)-propyl]-piperidine-3-carboxylic acid:

### 9.i. 1-benzofuran-2-ylmethyl-(3R,4R)-4-[(3RS)-3-hydroxy-3-(3-methoxy-quinolin-5-y/)-propyl]-piperidine-3-carboxylic acid methyl ester:

To a solution of intermediate 8.xii (0.15 g, 0.42 mmol) in 1,2-DCE (3 ml) were added benzofuran-2-carbaldehyde (0.057 ml, 1.1 eq.) and sodium triacetoxyborohydride (0.115 g, 1.3 eq). The reaction proceeded overnight. The reaction mixture was filtered through a pad of Hydromatrix^{®} (pretreated with saturated NaHCO₃). The filtrate was concentrated to dryness and the residue was chromatographed over SiO₂ (DCM-MeOH 19-1 1% concentrated NH₄OH) to afford the title ester (0.167 g, 0.34 mmol) as a colourless oil.
MS (ESI, m/z): 489.3 [M+H⁺].

### 9.ii. 1-benzofuran-2-ylmethyl-(3R,4R)-4-[(3RS)-3-hydroxy-3-(3-methoxy-quinolin-5-yl)-propyl]-piperidine-3-carboxylic acid:

The title compound (0.13 g, 79% yield; 1:1 mixture of epimers) was obtained as a beige solid from intermediate 9.i (0.167 g, 0.34 mmol), using the protocol of Example 1, step 1.xiv.
MS (ESI, m/z): 475.3 [M+H⁺].

### Example 10: (3R,4R)-4-[(3RS)-3-hydroxy-3-(3-methoxy-quinolin-5-yl)-propyl]-1-trans-(3-phenyl-allyl)-piperidine-3-carboxylic acid:

### 10.i. (3R,4R)-4-[(3RS)-3-hydroxy-3-(3-methoxy-quinolin-5-yl)-propyl]-1-trans-(3-phenyl-allyl)-piperidine-3-carboxylic acid methyl ester:

The title ester (0.163 g, 82% yield; 1:1 mixture of epimers) was obtained as a colourless oil, starting from intermediate 8.xii (0.15 g, 0.42 mmol) and *trans*-cinnamaldehyde (0.058 ml, 1.1 eq) and using the protocol of Example 4, step 4.i.
MS (ESI, m/z): 475.2 [M+H⁺].

### 10.ii. (3R,4R)-4-[(3RS)-3-hydroxy-3-(3-methoxy-quinolin-5-yl)-propyl]-1-trans-(3-phenyl-allyl)-piperidine-3-carboxylic acid:

The title compound (0.12 g, 75% yield) was obtained as a beige solid starting from intermediate 10.i (0.167g, 0.34 mmol) and using the protocol of Example 1, step 1.xiv.
MS (ESI, m/z): 461.1 [M+H⁺].

### Example 11: (3R,4R)-1-[3-(2,5-difluoro-phenyl)-allyl]-4-[(3RS)-3-hydroxy-3-(3-methoxy-quinolin-5-yl)-propyl]-piperidine-3-carboxylic acid:

### 11.i. trans-3-(2,5-difluoro-phenyl)-acrylic acid ethyl ester:

To an iced chilled suspension of sodium hydride (1.13 g, 60% in oil dispersion, 28.2 mmol) in THF (32 ml) was added triethylphosphonoacetate (5.6 ml, 28.2mmol). The reaction mixture was stirred at rt for 20 min. 2,5-difluoro-benzaldehyde (3.34 g, 23.5 mol) was added dropwise. After 30 min, 10% aq. NaHSO₄ (100 ml) was added and the mixture was diluted with EA (150 ml). The two phases were separated and the aq. layer was extracted twice (2 x 100 ml). The combined org. layers were washed with brine (100 ml), dried over Na₂SO₄, filtered and concentrated to dryness. The residue was chromatographed over SiO₂ (Hex-EA 19-1) to afford the title unsaturated ester (5.0 g, 100%) as a colourless oil.
¹H NMR (CDCl₃): 7.76 (dd, J = 1, 16.1 Hz, 1H); 7.26-7.21 (m, 1H); 7.13-7.03 (m, 2H); 6.52 (d, J = 16.1 Hz, 1H); 4.29 (q, J = 7.1 Hz, 2H); 1.36 (t, J = 7.1 Hz, 3H).

### 11.ii. trans-3-(2,5-difluoro-phenyl)-prop-2-en-1-ol:

To a solution of intermediate 11.i (5.0 g, 23.5 mmol) in ether (100 ml), cooled to 0°C, was added a DIBAH (1*M* in Hex, 60 ml, 60 mmol). The mixture was stirred at the same temperature for 40 min. Water (6 ml) was added and the mixture was stirred 30 min. The solid was filtered off and thoroughly washed with ether. The filtrate was concentrated to dryness to afford the title alcohol (4.0 g, 98% yield) as a colourless oil.
¹H NMR (CDCl₃): 7.15 (ddd, J = 3.1, 5.9, 9.0 Hz, 1H); 7.00 (td, J = 4.6, 9.0 Hz, 1H); 6.95-6.87 (m, 1H); 6.75 (dd, J = 1.3, 16.1 Hz, 1H); 6.45 (td, J = 5.3, 16.1 Hz, 1H); 4.38 (br d, J = 5.3 Hz, 2H); 1.63 (s, 1H).

### 11.iii. trans-3-(2,5-difluoro-phenyl)-propenal:

To a solution of intermediate 11.ii (1.70 g, 10 mmol) in DCM (20 ml) was added, at rt, a solution of Dess-Martin periodinane (15wt% in DCM, 20 ml). The mixture was stirred at rt for 3 h. After concentration to dryness, the residue was chromatographed over SiO₂ (Hex-EA 9-1) to afford the title aldehyde (1.06 g, 63% yield) as a white solid.
¹H NMR (d6-DMSO): 9.74 (d, J = 7.6 Hz, 1H); 7.88-7.81 (m, 1H); 7.79 (overlapped dd, J = 1.4, 16.0 Hz, 1H); 7.46-7.37 (m, 2H); 6.67 (dd, J = 7.6, 16.0 Hz, 1H).

### 11.iv. (3R,4R)-1-trans-[3-(2,5-difluoro-phenyl)-allyl]-4-[(3RS)-3-hydroxy-3-(3-methoxy-quinolin-5-yl)-propyl]-piperidine-3-carboxylic acid methyl ester:

The title ester (0.26 g, 91 % yield; 1:1 mixture of epimers) was obtained as a colourless oil, starting from intermediate 8.xii (0.2 g, 0.56 mmol) and intermediate 11.iii (0.103 g, 1.1 eq.) and using the protocol of Example 4, step 4.i.
MS (ESI, m/z): 511.1 [M+H⁺].

### 11.v. (3R,4R)-1-[3-(2,5-difluoro-phenyl)-allyl]-4-[(3RS)-3-hydroxy-3-(3-methoxy-quinolin-5-yl)-propyl]-piperidine-3-carboxylic acid:

The title compound (0.17g, 67% yield; 1:1 mixture of epimers) was obtained as a beige solid from intermediate 11.iv (0.26 g, 0.51 mmol) using the protocol of Example 1, step 1.xiv.
MS (ESI, m/z): 497.2 [M+H⁺].

### Example 12: (3R,4R)-4-[(3RS)-3-hydroxy-3-(3-methoxy-quinolin-5-yl)-propyl]-1-(thiazol-2-ylcarbamoylmethyl)-piperidine-3-carboylic acid:

### 12.i. (3R,4R)-4-[(3RS)-hydroxy-3-(3-methoxy-quinolin-5-yl)-propyl]-1-(thiazol-2-ylcarbamoylmethyl)-piperidine-3-carboxylic acid methyl ester:

The title ester (0.195 g, 93% yield; 1:1 mixture of epimers) was obtained as a colourless oil, starting from intermediate 8.xii (0.15 g, 0.56mmol) and 2-bromo-*N*-thiazol-2-yl-acetamide (0.138g, 1.5eq) and using the protocol of Example 8, step 8.xiii.
MS (ESI, m/z): 499.2 [M+H⁺].

### 12.ii. (3R,4R)-4-[(3RS)-3-hydroxy-3-(3-methoxy-quinolin-5-yl)-propyl]-1-(thiazol-2-ylcarbamoylmethyl)-piperidine-3-carboylic acid:

To a solution of intermediate 12.i (0.195 g, 0.39 mmol) in dioxane (5 ml) was added 3*M* NaOH (0.5 ml). The mixture was stirred at rt for 2 h, then overnight at 60°C. After cooling, water was added and the volatiles were removed *in vacuo.* The aq. layer was then washed twice with EA and the pH was adjusted to 7 by addition of 1*N* HCl. The aq. layer was extracted four times with DCM-MeOH 9-1 (4 x 100 ml). The combined extracts were washed with brine (30 ml) and dried over Na₂SO₄, filtered and concentrated to dryness to leave a semi-solid residue was further triturated in ether to afford the title acid (0.135 g, 71% yield; 1:1 mixture of epimers) as a light beige solid.
MS (ESI, m/z): 485.3 [M+H⁺].

### Example 13: {(3R,4S)-4-[(2R,3R)-2,3-dihydroxy-3-(3-methoxy-quinolin-5-yl)-propyl]-1-[2-(thiophen-2-ylsulfanyl)-ethyl]-piperidin-3-yl}-acetic acid:

### 13.i. (3R,4S)-3-[2-(tert-butyl-dimethyl-silanyloxy)-ethyl]-4-[(2R,3R)-2,3-dihydroxy-3-(3-methoxy-quinolin-5-yl)-propyl]-piperidine-1-carboxylic acid tert-butyl ester:

To a solution of intermediate 5.vii (4.1 g, 7.58 mmol) in 2-methyl-2-propanol (40 ml) and water (40 ml) were added successively at rt with AD-mix β (10.6g) and methanesulfonamide (0.793 g, 1.1 eq.). The reaction was vigorously stirred for 3 d. NaHSO₃ (12 g) was added portion wise. The two layers were decanted. The aq. layer was extracted twice with EA (2 x 150 ml). The combined org. layers were washed with brine, dried over Na₂SO₄, filtered and concentrated to dryness. The residue was chromatographed over SiO₂ (Hex-EA 1-4) to afford the title diol (3.5 g, 80% yield) as colourless foam.
¹H NMR (CDCl₃): 8.68 (d, J = 2.7 Hz, 1H); 8.02 (d, J = 8.1 Hz, 1H); 7.68-7.66 (m, 2H); 7.55 (dd, J = 7.5, 8.1 Hz, 1H); 5.12 (d, J = 6.9 Hz, 1H); 4.72 (br s, 1H); 4.11 (m, 1H); 4.03 (s, 3H); 4.02 (overlapped m, 1H); 3.66-3.50 (m, 2H); 2.83-2.60 (m, 4H), 1.85 (m, 2H); 1.45-0.95 (m, 6H); 1.41 (s, 9H); 0.83 (s, 9H); 0.01 (s, 3H); -0.01 (s, 3H).
MS (ESI, m/z): 575.3 [M+H⁺].

### 13.ii. (3R,4S)-3-(2-hydroxy-ethyl)-4-[(4R,5R)-5-(3-methoxy-quinolin-5-yl)-2,2-dimethyl-[1,3]dioxolan-4-ylmethyl]-piperidine-1-carboxylic acid tert-butyl ester:

To a solution of intermediate 13.i (3.5 g, 6.0 mmol) in THF (30 ml) were added 2,2-dimethoxypropane (3.74 ml, 5 eq.) and PTSA (1.39 g, 1.2 eq.). The reaction proceeded at rt for 4 h and saturated NaHCO₃ (50 ml) and EA (100 ml) were added. The two layers were decanted and the aq. layer was further extracted with EA (100 ml). The combined org. layers were washed with brine, dried over Na₂SO₄, filtered and concentrated to dryness. The residue was chromatographed over SiO₂ (EA-Hex 1-1) to afford (*3R*,*4S*)-3-[2-(1-methoxy-1-methyl-ethoxy)-ethyl]-4-[(*4R*,*5R*)-5-(3-methoxy-quinolin-5-yl)-2,2-dimethyl-[1,3]dioxolan-4-ylmethyl]-piperidine-1-carboxylic acid *tert*-butyl ester (0.7 g, 20% yield) as a colourless solid.
¹H NMR (CDCl₃): 8.71 (d, J = 2.8 Hz, 1H); 8.05 (d, J = 8.3 Hz, 1H); 7.85 (d, J = 2.8 Hz, 1H); 7.67 (d, J = 7.2 Hz, 1H); 7.54 (dd, J = 7.2, 8.5 Hz, 1H); 5.15 (d, J = 8.4 Hz, 1H); 4.27 (m, 1H); 4.10 (br s, 1H); 3.97 (s, 3H); 3.93 (m, 1H); 3.37 (m, 1H); 3.27 (m, 1H); 2.97 (s, 3H); 2.80-2.65 (m, 2H); 1.87-1.78 (m, 2H); 1.67-1.53 (m, 2H); 1.65 (s, 3H); 1.60 (s, 3H); 1.42 (s, 9H); 1.42-1.22 (m, 4H); 1.11 (s, 3H); 1.08 (s, 3H).
Elution was then performed using EA to afford the title alcohol (2.0 g, 65% yield) as colourless foam.
¹H NMR (CDCl₃): 8.71 (d, J = 2.8 Hz, 1H); 8.06 (d, J = 8.1 Hz, 1H); 7.91 (d, J = 2.8 Hz, 1H); 7.54-7.64 (m, 2H); 5.13 (d, J = 8.5 Hz, 1H); 4.26 (td, J = 2.5, 8.5 Hz, 1H); 3.85-4.10 (br m, 2H); 3.98 (s, 3H); 3.52 (br s, 2H); 2.68-2.72 (m, 2H); 1.80-1.59 (m, 5H); 1.63 (br s, 3H); 1.59 (s, 3H); 1.53-1.40 (m, 2H); 1.42 (s, 9H); 1.29 (m, 2H).
MS (ESI, m/z): 501.5 [M+H⁺].

### 13.iii. (3R,4S)-3-methoxycarbonylmethyl-4-[(4R,5R)-5-(3-methoxy-quinolin-5-yl)-2,2-dimethyl-[1,3]dioxolan-4-ylmethyl]-piperidine-1-carboxylic acid tert-butyl ester:

Starting from intermediate 13.ii (2.0 g, 4 mmol), the title ester (1.5 g, 71%) was obtained as a colourless foam using a three-step sequence (oxidation to the aldehyde, oxidation to the acid and esterification) according to the protocols reported respectively in steps 5.x, 5.xi and 5.xii of Example 5.
MS (ESI, m/z): 529.0 [M+H⁺].

### 13.iv. {(3R,4S)-4-[(2R,3R)-2,3-dihydroxy-3-(3-methoxy-quinolin-5-yl)-propyl]-piperidin-3-yl}-acetic acid methyl ester:

A solution of intermediate 13.iii (1.5 g, 2.83 mmol) in TFA (10 ml) was stirred at rt for 15 min. Water (6 ml) was added and the mixture was further stirred for 2 h. After evaporation to dryness, the residue was partioned between 2*N* NaOH (20 ml) and DCM-MeOH (9-1, 100 ml). The aq. layer was extracted four more times with the same mixture. The combined org. layers were dried over Na₂SO₄, filtered and concentrated to dryness. The title diol (0.26 g, 23% yield) was obtained as colourless oil.
MS (ESI, m/z): 389.1 [M+H⁺].

### 13.v. {(3R,4S)-4-[(2R,3R)-2,3-Dihydroxy-3-(3-methoxy-quinolin-5-yl)-propyl]-1-[2-(thiophen-2-ylsulfanyl)-ethyl]-piperidin-3-yl}-acetic acid methyl ester:

Starting from intermediate 13.iv (0.224 g, 1.5 eq.), the title ester (0.2 g, 56%) was obtained as a colourless foam according to the protocol reported in Example 8, step 8.xiii. The compound was purified by chromatography over SiO₂ (DCM-MeOH 19-1 containing 1% NH₄OH).
¹H NMR (CDCl₃): 8.68 (d, J = 2.7 Hz, 1H); 8.02 (dd, J = 1.8, 7.5 Hz, 1H); 7.80 (d, J = 2.7 Hz, 1H); 7.59-7.51 (m, 2H); 7.30 (dd, J = 1.2, 5.4 Hz, 1H); 7.07 (dd, J = 1.2, 3.6 Hz, 1H); 6.94 (dd, J = 3.6, 5.4 Hz, 1H); 5.05 (d, J = 6.6 Hz, 1H); 4.15 (m, 1H); 3.97 (s, 3H); 3.57 (s, 3H); 2.88 (overlapped m, 1H); 2.83 (t, J = 7.2 Hz, 2H); 2.58-2.73 (m, 3H); 2.36-2.55 (m, 3H); 2.17 (m, 1H); 2.03-1.96 (m, 2H); 1.55 (m, 1H); 1.53 (overlapped dd, J = 2.7, 16.2 Hz, 1H); 1.43-1.20 (m, 3H); 1.17 (m, 1H).
MS (ESI, m/z): 531.2 [M+H⁺].

### 13.vi. {(3R,4S)-4-[(2R,3R)-2,3-dihydroxy-3-(3-methoxy-quinolin-5-yl)-propyl]-1-[2-(thiophen-2-ylsulfanyl)-ethyl]-piperidin-3-yl}-acetic acid:

Starting from intermediate 13.v (0.2 g, 0.377 mmol), the title compound (0.106 g, 54% yield) was obtained as a colourless solid using the protocol of Example 1, step 1.xiv. The compound was purified by chromatography over SiO₂ (DCM-MeOH 4-1 containing 1% NH₄OH) and further triturated in ether.
¹H NMR (d6-DMSO): 8.62 (d, J = 2.6 Hz, 1H); 7.92 (d, J = 2.5 Hz, 1H); 7.85 (d, J = 7.7 Hz, 1H); 7.50-7.60 (m, 3H); 7.13 (dd, J =1.2, 3.4 Hz, 1H); 7.02 (dd, J = 3.4, 5.2 Hz, 1H); 5.41 (br s, 1H); 5.08 (d, J = 4.3 Hz, 1H); 4.65 (br s, 1H); 3.91 (s, 3H); 3.81 (m, 1H); 2.79 (t, J = 7.2 Hz, 2H); 2.62 (m, 2H); 2.30-2.50 (m, 4H); 2.03 (m, 1H); 1.89-1.93 (m, 2H); 1.73-1.60 (m, 2H); 1.19-1.05 (m, 4H).
MS (ESI, m/z): 517.3 [M+H⁺].

### Example 14: (1R,2R)-[(3R,4S)-3-{3-(2-hydroxy-ethyl)-1-[2-(thiophen-2-ylsulfanyl)-ethyl]-piperidin-4-yl}]-1-(3-methoxy-quinolin-5-yl)-propane-1,2-diol:

### 14.i. (1R,2R)-{(3R,4S)-3-[3-(2-hydroxy-ethyl)-piperidin-4-yl]}-1-(3-methoxy-quinolin-5-yl)-propane-1, 2-diol:

Starting from (*3R*,*4S*)-3-[2-(1-methoxy-1-methyl-ethoxy)-ethyl]-4-[(4R,SR)-5-(3-methoxy-quinolin-5-yl)-2,2-dimethyl-[1,3]dioxolan-4-ylmethyl]-piperidine-1-carboxylic acid *tert*-butyl ester (side product of Example 13, step ii; 0.7 g, 1.22 mmol), the title piperidine (0.24 g, 0.66 mmol) was obtained as a colourless foam using the protocol of Example 13, step 13.iv.
MS (ESI, m/z): 361.3 [M+H⁺].

### 14.ii. (1R,2R)-[(3R,4S)-3-{3-(2-hydroxy-ethyl)-1-[2-(thiophen-2-ylsulfanyl)-ethyl]-piperidin-4-yl}]-1-(3-methoxy-quinolin-5-yl)-propane-1,2-diol:

Starting from intermediate 14.i (0.112 g, 1.5 eq.), the title alcohol (0.078 g, 46% yield) was obtained as a beige solid using the protocol of Example 1, step 1.xiii. This compound was purified by chromatography over SiO₂ (DCM-MeOH 8-1 containing 1% NH₄OH).
¹H NMR (CDCl₃): 8.68 (d, J = 2.8 Hz, 1H); 8.02 (d, J = 7.8 Hz, 1H); 7.75 (d, J = 2.7 Hz, 1H); 7.63-7.52 (m, 2H); 7.33 (dd, J = 1.2, 5.3 Hz, 1H); 7.10 (dd, J = 1.2, 3.5 Hz, 1H); 6.96 (dd, J = 3.5, 5.3 Hz, 1H); 5.09 (d, J = 6.5 Hz, 1H); 4.06 (m, 1H); 3.96 (s, 3H); 3.39 (m, 2H); 3.03 (br s, 1H); 2.90-2.64 (m, 5H); 2.64 (m, 2H); 2.05-1.86 (m, 2H); 1.80-1.61 (m, 4H); 1.48-1.38 (m, 3H); 1.29 (m, 1H); 1.12 (m, 1H).
MS (ESI, m/z): 503.1 [M+H⁺].

### Example 15: (1R,2R)-{(3R,4S)-3-[1-[3-trans-(2,5-difluoro-phenyl)-allyl]-3-(2-hydroxyethyl)-piperidin-4-yl]}-1-(3-methoxy-quinolin-5-yl)-propane-1,2-diol:

Starting from intermediate 14.i (0.1 g, 0.27 mmol) and intermediate 11.iii (0.051 g, 1.1 eq.), the title alcohol (0.056 g, 39% yield) was obtained as a beige solid using the protocol of Example 4, step 4.i. The compound was purified by chromatography over SiO₂ (DCM-MeOH 8-1 containing 1% NH₄OH).
MS (ESI, m/z): 513.1 [M+H⁺].

### Example 16: (3R,4R)-4-[(3RS)-3-hydroxy-3-(3-methoxy-quinolin-5-yl)-propyl]-1-(3-phenyl-propyl)-piperidine-3-carboxylic acid:

### 16.i. (3R,4R)-4-[(3RS)-3-hydroxy-3-(3-methoxy-quinolin-5-yl)-propyl]-1-(3-phenyl-propyl)-piperidine-3-carboxylic acid methyl ester:

This ester (1:1 mixture of epimers; 0.170 g, 98% yield) was obtained as a colourless oil, starting from intermediate 8.xii (0.13 g, 0.36 mmol) and 3-phenyl-propionaldehyde (0.053 ml, 1.1 eq.) and using the protocol of Example 9, step 9.i.
MS (ESI, m/z): 477.1 [M+H⁺].

### 16.ii. (3R,4R)-4-[(3RS)-3-hydroxy-3-(3-methoxy-quinolin-5-yl)-propyl]-1 (3 phenyl-propyl)-piperidine-3-carboxylic acid:

This compound (1:1 mixture of epimers; 0.13 g, 78% yield) was obtained as a colourless solid from intermediate 16.i (0.170 g, 0.357 mmol) using the protocol of Example 8, step 8.xiv.
MS (ESI, m/z): 463.1 [M+H⁺].

### Example 17: (3R,4R)-4-[(3RS)-3-hydroxy-3-(3-methoxy-quinolin-5-yl)-propyl]-1-(2-phenylsulfanyl-ethyl)-piperidine-3-carboxylic acid:

### 17.i. (3R,4R)-4-[(3RS)-3-hydroxy-3-(3-methoxy-quinolin-5-yl)-propyl]-1-(2-phenylsulfanyl-ethyl)-piperidine-3-carboxylic acid methyl ester:

The title ester (0.112 g, 62% yield; 1:1 mixture of epimers) was obtained as a colourless oil, starting from intermediate 8.xii (0.13 g, 0.36 mmol) and (2-bromo-ethylsulfanyl)-benzene (0.087 g, 1.1 eq.) and using the protocol of Example 8, step 8.xiii.
MS (ESI, m/z): 495.1 [M+H⁺].

### 17.ii. (3R,4R)-4-[(3RS)-3-hydrory-3-(3-methoxy-quinolin-5-yl)-propyl]-1-(2-phenylsulfanyl-ethyl)-piperidine-3-carboxylic acid:

The title compound (0.06 g, 55% yield; 1:1 mixture of epimers) was obtained as a colourless solid from intermediate 17.i (0.112 g, 0.22 mmol) using the protocol of Example 8, step 8.xiv. MS (ESI, m/z): 481.1 [M+H⁺].

### Example 18: (1R,2R)-3-{(3R,4S)-3-(2-hydroxy-ethyl)-1-[2-(thiophen-2-ylsulfanyl)-ethyl]-piperidin-4-yl}-1-(3-methoxy-quinoxalin-5-yl)-propane-1,2-diol:

### 18.i. 2-cyano-N-(2-methyl-6-nitro-phenyl)-acetamide:

To a solution of 2-methyl-6-nitroaniline (25 g, 164.3 mmol) in benzene (200 ml) were added cyanoacetic acid (14.5 g, 170.46 mmol) and PCl₅ (35 g, 168 mmol). The reaction mixture was heated at 60°C for 7 h. After cooling to rt, the reaction mixture was filtered and the solid was washed with benzene and water. The solid was dried under reduced pressure to afford the title acetamide (24 g, 109 mmol) as a yellow solid.
¹H NMR (d6-DMSO) δ: 10.2 (s, 1H); 7.78 (d, J = 8.3 Hz, 1H); 7.65 (d, J = 8.3 Hz, 1H); 7.43 (t, J= 8.3 Hz, 1H); 3.95 (s, 2H); 2.30 (s, 3H).

### 18.ii. 3-hydroxy-5-methyl-1-oxy-quinoxaline-2-carbonitrile:

To a mixture of intermediate 18.i (24 g, 109.5 mmol) and 1*M* aq. NaOH (100 ml) was added pyridine (100 ml). The reaction mixture was stirred at rt for 4 h. The pH was adjusted to 6 by addition of 1*M* aq. HCl. The solid was filtered off and washed with water. The solid was triturated with EtOH. After drying under HV, the title nitrile (17.7 g, 87.9 mmol) was obtained as a yellow solid.
MS (ESI, m/z): 202.1 [M+H⁺].

### 18.iii. 8-methyl-quinoxalin-2-ol:

To a solution of intermediate 18.ii (17.7 g, 87.9 mmol) in water (300 ml) and EtOH (24 ml) was added sodium dithionite (35.4 g, 203.9 mmol). The reaction mixture was heated at 60°C for 1 h. The reaction mixture was filtered till warm, and the pH of the filtrate adjusted to 2 by adding 1*M* aq. HCl. The pH of the solution was subsequently made basic by adding solid NaOH (10 g). EA (150 ml) was added. The aq. layer was extracted twice more with EA (2 x 150 ml). The combined org. extracts were dried over Na₂SO₄, filtered and concentrated to dryness. The residue was dried under HV to afford the title intermediate (11.1 g, 69 mmol) as a yellow solid.
¹H NMR (d6-DMSO) δ: 11.75 (br s, 1H); 8.17 (s, 1H); 7.62 (d, J = 8.4 Hz, 1H); 7.40 (d, J = 8.4 Hz, 1H); 7.21 (t, J = 8.4 Hz, 1H); 2.42 (s, 3H).
MS (ESI, m/z): 161.1 [M+H⁺].

### 18.iv. 2-chloro-8-methyl-quinoxaline:

A solution of intermediate 18.iii (11.1 g, 69.5 mmol) in phosphorus oxychloride (80 ml) was heated at 110°C during 2 h. After cooling to rt, the reaction mixture was poured onto ice (200 g). The aqueous layer was extracted with EA (2 x 200 ml). The combined extracts were washed with brine (100 ml), dried over Na₂SO₄, filtered and concentrated to dryness. The residue was chromatographed over silica gel (Hex-EA 1-1) to afford the title intermediate (12.5 g, 69.5 mmol) as a red solid.
¹H NMR (d6-DMSO) δ: 8.99 (s, 1H); 7.97 (m, 1H); 7.80 (m, 2H); 2.68 (s, 3H).
MS (ESI, m/z): 179.2 [M+H⁺].

### 18.v. 2-methoxy-8-methyl-quinoxaline:

To a solution of intermediate 18.iv (12.5 g, 69.5 mmol) in DMF (80 ml) was added sodium methoxide (9 g, 166 mmol). The reaction mixture was heated at 45°C for 4 h. After cooling to rt, the reaction mixture was partitioned between water (10 ml) and EA (200 ml). The organic layer was washed once with water (100 ml), dried over Na₂SO₄, filtered and concentrated to dryness. The residue was chromatographed over silica gel (Hex-EA 1-4) to afford the title intermediate (10.2 g, 58.55 mmol) as a yellow solid.
¹H NMR (CDCl₃) δ: 8.48 (s, 1H); 7.88 (d, J = 7.9 Hz, 1H); 7.55 (d, J = 7.9 Hz, 1H); 7.47 (t, J = 7.9 Hz, 1H); 4.12 (s, 3H); 2.69 (s, 3H).
MS (ESI, m/z): 175.4 [M+H⁺].

### 18.vi. 8-dibromomethyl-2-methoxy-quinoxaline:

To a solution of intermediate 18.v (10.2 g) in CCl₄ (560 ml) were added AIBN (0.96 g) and NBS (25.9 g, 145.5 mmol). The reaction mixture was heated at 80°C for 3 h. After cooling to rt, the reaction mixture was washed with water (200 ml) and the organic layer was dried over Na₂SO₄, filtered and concentrated *in vacuo.* The residue was triturated with MeOH to give, after drying under HV, the title dibromide (14.4 g, 43.3 mmol) as a slightly beige solid.
¹H NMR (d6-DMSO) δ: 8.69 (s, 1H); 8.25 (dd, J = 1.3, 7.5 Hz, 1H); 8.07 (dd, J = 1.3, 8.3 Hz, 1H); 8.02 (s, 1H); 7.74 (dd, J = 7.5, 8.3 Hz, 1H); 4.14 (s, 3H).
MS (ESI, m/z): 332.8 [M+H⁺].

### 18.vii. 3-methoxy-quinoxaline-5-carbaldehyde:

To a solution of intermediate 18.vi (10.7 g, 32.2 mmol) in EtOH (330 ml) was added, at rt, a solution of silver nitrate (15 g) in water (70 ml). The reaction was stirred at rt for 1 h. The reaction mixture was diluted with MeCN (200 ml) and the solids were filtered off and the filtrate was concentrated *in vacuo.* The residue was filtered over a silica gel pad (eluent: EA) to afford the title aldehyde (6.2 g, 32.2 mmol) as a slightly yellow solid.
¹H NMR (d6-DMSO) δ: 11.15 (s, 1H); 8.74 (s, 1H); 8.36 (dd, J = 1.3, 8.1 Hz, 1H); 8.21 (dd, J = 1.3, 7.9 Hz, 1H); 7.80 (dd, J = 7.9, 8.1 Hz, 1H); 4.14 (s, 3H).
MS (ESI, m/z): 189.2 [M+H⁺].

### 18.viii. 8-(3R,4R)-trans-3-{3-[2-(tert-butyl-dimethyl-silanyloxy)-ethyl]-1-[2-(thiophen-2-ylsulfanyl)-ethyl]-piperidin-4-yl}-propenyl)-2-methoxy-quinoxaline:

This alkene (4.6 g, 74% yield) was obtained as a colourless oil, starting from intermediate 5.vi (6.6 g, 11.38 mmol) and intermediate 18.vii (2.35 g, 1.1 eq) and using the protocol of Example 5, step 5.vii.
MS (ESI, m/z): 542.0 [M+H⁺].

### 18.ix. (1R,2R)-3-{(3R,4S)-3-[2-(tert-butyl-dimethyl-silanyloxy)-ethyl]-1-[2-(thiophen-2-ylsutfanyl)-ethyl]-piperidin-4-yl}-1-(3-methoxy-quinoxalin-5-yl)-propane-1,2-diol:

The title diol (2.5 g, 67% yield) was obtained as a colourless foam, starting from intermediate 18.viii (3.5 g, 6.46 mmol) and using the protocol of Example 13, step 13.i.
MS (ESI, m/z): 576.2 [M+H⁺].

### 18.x. (1R,2R)-3-[(3R,4S)-3-(2-hydroxy-ethyl)-piperidin-4-yl]-1-(3-methoxy-quinoxalin-5-yl)-propane-1,2-diol:

To a solution of intermediate 18.ix (1.8 g, 3.32 mmol) in dioxane (10 ml) was added 5*N* HCl in dioxane (10 ml). After stirring at rt for 1 h, ether (50 ml) was added. The solids were filtered off, taken up in water, and the resulting solution was concentrated to dryness and the residue dried to constant weight to yield the title piperidine (1.44 g, 100% yield) as a dihydrochloride salt.
MS (ESI, m/z): 362.1 [M+H⁺].

### 18.xi. (1R,2R)-3-{(3R,4S)-3-(2-hydroxy-ethyl)-1-[2-(thiophen-2-ylsutfanyl)-ethyl]-piperidin-4-yl}-1-(3-methoxy-quinoxalin-5-yl)-propane-1,2-diol:

To a mixture of intermediate 18.x (1.44 g, 3.31 mmol) and 2-(2-bromo-ethylsulfanyl)-thiophene (1 g, 1.35 eq.) in DMF (15 ml) was added DIPEA (2.3 ml). The mixture was heated at 80°C for 4 h. After concentration to dryness, the residue was partitioned between saturated NaHCO₃ (100 ml) and DCM-MeOH (9-1, 100mL). The aq. layer was extracted once with the same mixture. The combined org. layers were washed with brine, dried over Na₂SO₄, filtered and concentrated to dryness. The residue was purified over silica gel (DCM-MeOH 93-7 containing 1% NH₄OH) to afford the title compound (0.058 g, 3% yield) as a brown foam.
¹H NMR (d6-DMSO) δ: 8.59 (s, 1H); 7.90-7.84 (m, 2H); 7.63 (d, J = 7.7 Hz, 1H); 7.58 (dd, J = 1.2, 5.3 Hz, 1H); 7.16 (dd, J = 1.3, 3.5 Hz, 1H); 7.03 (dd, J = 3.5, 5.3 Hz, 1H); 5.47 (dd, J = 4.0, 5.9 Hz, 1H); 5.17 (d, J = 5.9 Hz, 1H); 4.27 (t, J = 3.3 Hz, 1H); 4.23 (d, J = 6.9 Hz, 1H); 4.02 (s, 3H); 3.73 (m, 1H); 3.40-3.30 (m, 2H); 2.89 (m, 2H); 2.63-2.50 (m, 2H); 2.48-2.37 (m, 2H); 1.99-1.87 (m, 2H); 1.63 (m, 2H); 1.46-1.35 (m, 5H); 1.15 (m, 1H).
MS (ESI, m/z): 504.0 [M+H⁺].

### BIOLOGICAL ASSAYS

### In vitro assay

### Experimental method:

These assays have been performed following the description given in "Methods for dilution Antimicrobial Susceptibility Tests for Bacteria that Grow Aerobically, 4th ed.; Approved standard: NCCLS Document M7-A4; National Committee for Clinical Laboratory Standards: Villanova, PA, USA, 1997". Minimal inhibitory concentrations (MICs; mg/l) were determined in cation-adjusted Mueller-Hinton Broth (BBL) by a microdilution method following NCCLS guidelines (National Committee for Clinical Laboratory Standards. Methods for Dilution Antimicrobial Susceptibility). The pH of the test medium was 7.2-7.3. All Examples were tested against several Gram positive and Gram negative bacteria.

### Results:

Typical antibacterial spectra are given hereafter (MIC in mg/l).

| Example No. | *S. aureus* 29213 | *S. aureus* A798 | *E. faecalis* 29212 | *E. faecium* A949 | *S. Pneunoniae* 49619 | *S. Pneunoniae* A70 |
|---|---|---|---|---|---|---|
| 1 | 0.5 | 0.25 | 8 | 1 | 0.5 | 1 |
| 2 | 1 | 0.25 | 2 | 2 | 0.5 | 1 |
| 10 | 0.5 | 0.25 | 4 | 4 | 1 | 4 |

The compounds predominantly have MIC values of <= 4 mg/l against *S. aureus* 29213, *S. aureus* A798 and *S. pneumoniae* 49619.

## Claims

1. A compound selected from the group consisting of a compound of the formula I 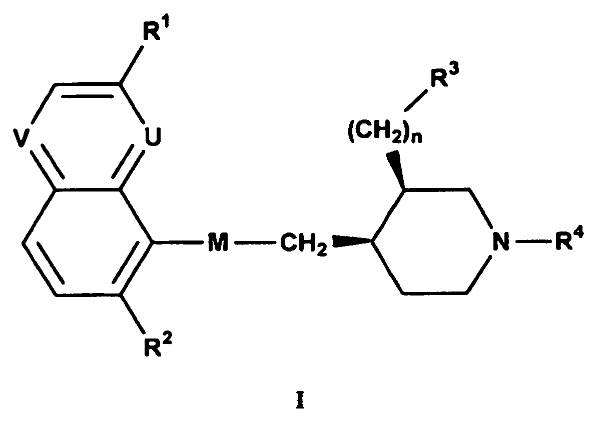 wherein
one of U and V represents N, the other represents N or CH;
M represents CH₂CH₂, CH(OH)CH(OH), CH(OH)CH₂ or OCH₂;
R¹ represents alkyl of one to four carbon atoms, haloalkyl of one to four carbon atoms, alkoxy of one to four carbon atoms, haloalkoxy of one to four carbon atoms, halogen or cyano;
R² represents hydrogen or halogen;
R³ represents carboxy, carboxamido, alkylaminocarbonyl wherein the alkyl group is a (C₁-C₆)alkyl group, hydroxy, aminocarbonyloxy, 2-tetrazolyl or 3-methyl-1,2,4-oxadiazol-5-yl;
R⁴ is selected from the group consisting of heteroarylalkyl wherein the heteroaryl is benzofuran-2-yl and the alkyl is a (C₁-C₂)alkyl group, heteroaryl-S(O)ₘ-alkyl wherein m is 0, the heteroaryl is 2-thienyl and the alkyl is a (C₁-C₂)alkyl group and CH₂-CH=CH-aryl wherein the aryl is phenyl or 2,5-difluorophenyl;
n is an integer from 0 to 3; and
and a tautomer, an optically pure enantiomer, a mixture of enantiomers, a racemate, an optically pure diastereoisomer, a mixture of diastereoisomers, a diastereoisomeric racemate, a mixture of diastereoisomeric racemates, a meso-form, a salt or a solvent complex of such a compound.

2. A compound according to claim 1, wherein U is CH and V is N.

3. A compound according to claim 1, wherein M is CH(OH)CH₂.

4. A compound according to claim 1, wherein R¹ is methoxy or cyano.

5. A compound according to claim 4, wherein R¹ is methoxy.

6. A compound according to claim 1, wherein R² is hydrogen or fluorine.

7. A compound according to claim 1, wherein R³ is carboxy.

8. A compound according to claim 1, wherein R⁴ is thiophen-2-ylsulfanylethyl, (2,5-difluorophenyl)-allyl or benzofuran-2-ylmethyl.

9. A compound according to claim 8, wherein R⁴ is thiophen-2-ylsulfanylethyl.

10. A compound according to claim 1, which is selected from the group consisting of:
• 3-{(*3R*,*4S*)-4-[2-(3-methoxy-quinolin-5-yloxy)-ethyl]-1-[2-(thiophen-2-ylsulfanyl)-ethyl]-piperidin-3-yl}-propionic acid;
• 3-{(*3R*,*4S*)-4-[2-(3-methoxy-quinolin-5-yloxy)-ethyl]-1-[2-(thiophen-2-ylsulfanyl)-ethyl]-piperidin-3-yl}-propan-1-ol;
• (*3R*,*4R*)-4-[3-(3-methoxy-quinolin-5-yl)-propyl]-1-[2-(thiophen-2-ylsulfanyl)-ethyl]-piperidine-3-carboxylic acid;
• (*3R*,*4S*)-1-benzofuran-2-ylmethyl-4-[3-(3-methoxy-quinolin-5-yl)-propyl]-piperidine-3-carboxylic acid;
• (*3R*,*4R*)-{4-[3-(3-methoxy-quinolin-5-yl)-propyl]-1-[2-(thiophen-2-ylsulfanyl)-ethyl]-piperidin-3-yl}-acetic acid;
• 2-{(*3R*,*4S*)-4-[3-(3-methoxy-quinolin-5-yl)-propyl]-1-[2-(thiophen-2-ylsulfanyl)-ethyl]-piperidin-3-yl}-ethanol;
• carbamic acid 2-{(*3R*,*4R*)-4-[3-(3-methoxy-quinolin-5-yl)-propyl]-1-[2-(thiophen-2-ylsulfanyl)-ethyl]-piperidin-3-yl}-ethyl ester;
• 4-[3-hydroxy-3-(3-methoxy-quinolin-5-yl)-propyl]-1-[2-(thiophen-2-ylsulfanyl)-ethyl]-piperidine-3-carboxylic acid;
• 1-benzofuran-2-ylmethyl-(*3R*,*4R*)-4-[(*3RS*)-3-hydroxy-3-(3-methoxy-quinolin-5-yl)-propyl]-piperidine-3-carboxylic acid;
• (*3R*,*4R*)-4-[(*3RS*)-3-hydroxy-3-(3-methoxy-quinolin-5-yl)-propyl]-1-*trans*-(3-phenyl-allyl)-piperidine-3-carboxylic acid;
• (*3R*,*4R*)-1-[3-(2,5-difluoro-phenyl)-allyl]-4-[(*3RS*)-3-hydroxy-3-(3-methoxy-quinolin-5-yl)-propyl]-piperidine-3-carboxylic acid;
• (*3R*,*4R*)-4-[(*3RS*)-3-hydroxy-3-(3-methoxy-quinolin-5-yl)-propyl]-1-(thiazol-2-ylcarbamoylmethyl)-piperidine-3-carboylic acid;
• {(*3R*,*4S*)-4-[(*2R*,*3R*)-2,3-dihydroxy-3-(3-methoxy-quinolin-5-yl)-propyl]-1-[2-(thiophen-2-ylsulfanyl)-ethyl]-piperidin-3-yl}-acetic acid;
• (*1R*,*2R*)-[(*3R*,*4S*)-3-{3-(2-hydroxy-ethyl)-1-[2-(thiophen-2-ylsulfanyl)-ethyl]-piperidin-4-yl}]-1-(3-methoxy-quinolin-5-yl)-propane-1,2-diol;
• (*1R*,*2R*)-{(*3R*,*4S*)-3-[1-[3-*trans*-(2,5-difluoro-phenyl)-allyl]-3-(2-hydroxy-ethyl)-piperidin-4-yl]}-1-(3-methoxy-quinolin-5-yl)-propane-1,2-diol;
• (*3R*,*4R*)-4-[(*3RS*)-3-hydroxy-3-(3-methoxy-quinolin-5-yl)-propyl]-1-(3-phenyl-propyl)-piperidine-3-carboxylic acid;
• (*3R*,*4R*)-4-[(*3RS*)-3-hydroxy-3-(3-methoxy-quinolin-5-yl)-propyl]-1-(2-phenylsulfanyl-ethyl)-piperidine-3-carboxylic acid;
• (*1R*,*2R*)-3-{(*3R*,*4S*)-3-(2-hydroxy-ethyl)-1-[2-(thiophen-2-ylsulfanyl)-ethyl]-piperidin-4-yl}-1-(3-methoxy-quinoxalin-5-yl)-propane-1,2-diol;
and the pharmaceutically acceptable salts of the latter.

11. A compound according to claim 10, which is selected from the group consisting of:
• 3-{(*3R*,*4S*)-4-[2-(3-methoxy-quinolin-5-yloxy)-ethyl]-1-[2-(thiophen-2-ylsulfanyl)-ethyl]-piperidin-3-yl}-propionic acid;
• 3-{(*3R*,*4S*)-4-[2-(3-methoxy-quinolin-5-yloxy)-ethyl]-1-[2-(thiophen-2-ylsulfanyl)-ethyl]-piperidin-3-yl}-propan-1-ol;
• (*3R*,*4R*)-4-[3-(3-methoxy-quinolin-5-yl)-propyl]-1-[2-(thiophen-2-ylsulfanyl)-ethyl]-piperidine-3-carboxylic acid;
and the pharmaceutically acceptable salts of the latter.

12. As a medicament, a compound of formula I as defined in claim 1 or a pharmaceutically acceptable salt thereof.

13. A pharmaceutical composition containing, as active principle, a compound of formula I as defined in claim 1 or a pharmaceutically acceptable salt thereof, and at least one therapeutically inert excipient.

14. A compound of formula I as defined in claim 1, or a pharmaceutically acceptable salt thereof, for the prevention or treatment of infection(s).

## Patentansprüche

1. Verbindung, die ausgewählt ist aus der Gruppe bestehend aus einer Verbindung der Formel I 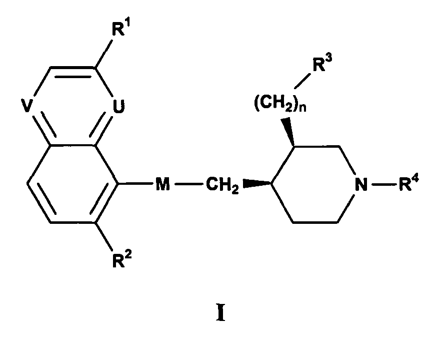 wobei
einer von U und V N repräsentiert und das Andere N oder CH repräsentiert;
M CH₂CH₂, CH(OH)CH(OH), CH(OH)CH₂ oder OCH₂ repräsentiert;
R¹ Alkyl mit ein bis vier Kohlenstoffatomen, Haloalkyl mit ein bis vier Kohlenstoffatomen, Alkoxy mit ein bis vier Kohlenstoffatomen, Haloalkoxy mit ein bis vier Kohlenstoffatomen, Halogen oder Cyano repräsentiert;
R² Wasserstoff oder Halogen repräsentiert;
R³ Carboxy, Carboxamido, Alkylaminocarbonyl, wobei die Alkylgruppe eine (C₁-C₆)Alkylgruppe ist, Hydroxy, Aminocarbonyloxy, 2-Tetrazolyl oder 3-Methyl-1,2,4-oxadiazol-5-yl repräsentiert;
R⁴ ausgewählt ist aus der Gruppe bestehend aus Heteroarylalkyl, wobei das Heteroaryl Benzofuran-2-yl ist und das Alkyl eine (C₁-C₂)Alkylgruppe ist, Heteroaryl-S(O)ₘ-alkyl, wobei m 0, das Heteroaryl 2-Thienyl und das Alkyl eine (C₁-C₂)Alkylgruppe ist, und CH₂-CH=CH-Aryl, wobei das Aryl Phenyl oder 2,5-Difluorphenyl ist;
n eine ganze Zahl von 0 bis 3 ist; und
ein Tautomer, ein optisch reines Enantiomer, ein Gemisch von Enantiomeren, ein Racemat, ein optisch reines Diastereoisomer, ein Gemisch von Diastereoisomeren, ein diastereoisomeres Racemat, ein Gemisch von diastereoisomeren Racematen, eine meso-Form, ein Salz oder ein Lösungsmittelkomplex einer solchen Verbindung.

2. Verbindung nach Anspruch 1, wobei U CH ist und V N ist.

3. Verbindung nach Anspruch 1, wobei M CH(OH)CH₂ ist.

4. Verbindung nach Anspruch 1, wobei R¹ Methoxy oder Cyano ist.

5. Verbindung nach Anspruch 4, wobei R¹ Methoxy ist.

6. Verbindung nach Anspruch 1, wobei R² Wasserstoff oder Fluor ist.

7. Verbindung nach Anspruch 1, wobei R³ Carboxy ist.

8. Verbindung nach Anspruch 1, wobei R⁴ Thiophen-2-ylsulfanylethyl, (2,5-Difluor-phenyl)-allyl oder Benzofuran-2-ylmethyl ist.

9. Verbindung nach Anspruch 8, wobei R⁴ Thiophen-2-ylsulfanylethyl ist.

10. Verbindung nach Anspruch 1, die ausgewählt ist aus der Gruppe bestehend aus:
• 3-{(*3R*,*4S*)-4-[2-(3-Methoxy-chinolin-5-yloxy)-ethyl]-1-[2-(thiophen-2-ylsulfanyl)-ethyl]-piperidin-3-yl}-propionsäure;
• 3-{(*3R*,*4S*)-4-[2-(3-Methoxy-chinolin-5-yloxy)-ethyl]-1-[2-(thiophen-2-ylsulfanyl)-ethyl]-piperidin-3-yl}-propan-1-ol;
• (*3R*,*4R*)-4-[3-(3-Methoxy-chinolin-5-yl)-propyl]-1-[2-(thiophen-2-ylsulfanyl)-ethyl]-piperidin-3-carbonsäure;
• (*3R*,*4S*)-1-Benzofuran-2-ylmethyl-4-[3-(3-methoxy-chinolin-5-yl)-propyl]-piperidin-3-carbonsäure;
• (*3R*,*4R*)-{4-[3-(3-Methoxy-chinolin-5-yl)-propyl]-1-[2-(thiophen-2-ylsulfanyl)-ethyl]-piperidin-3-yl}-essigsäure;
• 2-{(*3R*,*4S*)-4-[3-(3-Methoxy-chinolin-5-yl)-propyl]-1-[2-(thiophen-2-ylsulfanyl)-ethyl]-piperidin-3-yl}-ethanol;
• Carbaminsäure-2-{(*3R*,*4R*)-4-[3-(3-methoxy-chinolin-5-yl)-propyl]-1-[2-(thiophen-2-ylsulfanyl)-ethyl]-piperidin-3-yl}-ethylester;
• 4-[3-Hydroxy-3-(3-methoxy-chinolin-5-yl)-propyl]-1-[2-(thiophen-2-ylsulfanyl)-ethyl]-piperidin-3-carbonsäure;
• 1-Benzofuran-2-ylmethyl-(*3R*,*4R*)-4-[(*3RS*)-3-hydroxy-3-(3-methoxy-chinolin-5-yl)-propyl]-piperidin-3-carbonsäure;
• (*3R*,*4R*)-4-[(*3RS*)-3-Hydroxy-3-(3-methoxy-chinolin-5-yl)-propyl]-1-*trans*-(3-phenyl-allyl)-piperidin-3-carbonsäure;
• (*3R*,*4R*)-1-[3-(2,5-Difluor-phenyl)-allyl]-4-[(*3RS*)-3-hydroxy-3-(3-methoxy-chinolin-5-yl)-propyl]-piperidin-3-carbonsäure;
• (*3R*,*4R*)-4-[(*3RS*)-3-Hydroxy-3-(3-methoxy-chinolin-5-yl)-propyl]-1-(thiazol-2-ylcarbamoylmethyl)-piperidin-3-carbonsäure;
• {(*3R*,*4S*)-4-[(*2R*,*3R*)-2,3-Dihydroxy-3-(3-methoxy-chinolin-5-yl)-propyl]-1-[2-(thiophen-2-ylsulfanyl)-ethyl]-piperidin-3-yl}-essigsäure;
• (*1R*,*2R*)-[(*3R*,*4S*)-3-{3-(2-Hydroxy-ethyl)-1-[2-(thiophen-2-ylsulfanyl)-ethyl]-piperidin-4-yl}]-1-(3-methoxy-chinolin-5-yl)-propan-1,2-diol;
• (*1R*,*2R*)-{(*3R*,*4S*)-3-[1-[3-*trans*-(2,5-Difluor-phenyl)-allyl]-3-(2-hydroxy-ethyl)-piperidin-4-yl]}-1-(3-methoxy-chinolin-5-yl)-propan-1,2-diol;
• (*3R*,*4R*)-4-[(*3RS*)-3-Hydroxy-3-(3-methoxy-chinolin-5-yl)-propyl]-1-(3-phenyl-propyl)-piperidin-3-carbonsäure;
• (*3R*,*4R*)-4-[(*3RS*)-3-Hydroxy-3-(3-methoxy-chinolin-5-yl)-propyl]-1-(2-phenylsulfanyl-ethyl)-piperidin-3-carbonsäure;
• (*1R*,*2R*)-3-{(*3R*,*4S*)-3-(2-Hydroxy-ethyl)-1-[2-(thiophen-2-ylsulfanyl)-ethyl]-piperidin-4-yl}-1-(3-methoxy-chinoxalin-5-yl)-propan-1,2-diol;
und die pharmazeutisch akzeptablen Salze von Letzteren.

11. Verbindung nach Anspruch 10, die ausgewählt ist aus der Gruppe bestehend aus:
• 3-{(*3R*,*4S*)-4-[2-(3-Methoxy-chinolin-5-yloxy)-ethyl]-1-[2-(thiophen-2-ylsulfanyl)-ethyl]-piperidin-3-yl}-propionsäure;
• 3-{(*3R*,*4S*)-4-[2-(3-Methoxy-chinolin-5-yloxy)-ethyl]-1-[2-(thiophen-2-ylsulfanyl)-ethyl]-piperidin-3-yl}-propan-1-ol;
• (*3R*,*4R*)-4-[3-(3-Methoxy-chinolin-5-yl)-propyl]-1-[2-(thiophen-2-ylsulfanyl)-ethyl]-piperidin-3-carbonsäure;
und die pharmazeutisch akzeptablen Salze von Letzteren.

12. Als Medikament eine Verbindung der Formel I nach Anspruch 1 oder ein pharmazeutisch akzeptables Salz davon.

13. Pharmazeutische Zusammensetzung, die als Wirkstoff eine Verbindung der Formel I nach Anspruch 1 oder ein pharmazeutisch akzeptables Salz davon und wenigstens einen therapeutisch inerten Exzipienten enthält.

14. Verbindung der Formel I nach Anspruch 1 oder pharmazeutisch akzeptables Salz davon zur Vorbeugung gegen oder Behandlung von (einer) Infektion(en).

## Revendications

1. Composé sélectionné dans le groupe consistant en des composés de formule 1 : 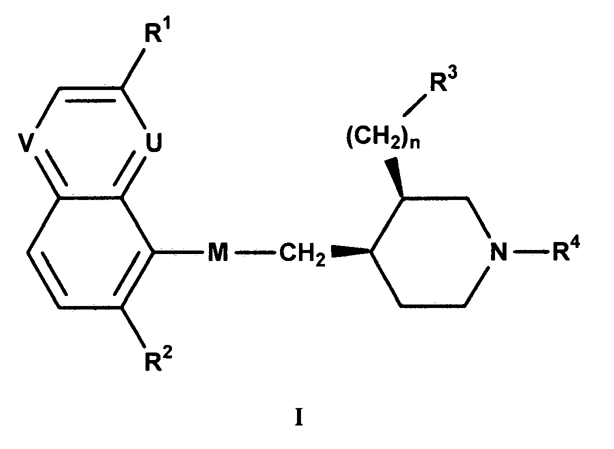 où
l'un des radicaux U et V représente N et l'autre représente N ou CH ;
M représente CH₂CH₂, CH(OH)CH(OH), CH(OH)CH₂ ou OCH₂ ;
R¹ représente un groupement alkyle à un à quatre atomes de carbone, haloalkyle à un à quatre atomes de carbone, alkoxy à un à quatre atomes de carbone ou haloalkoxy à un à quatre atomes de carbone ou un halogène ou un radical cyano ;
R² représente un hydrogène ou un halogène ;
R³ représente un groupement carboxy, carboxamido, alkylaminocarbonyle où l'alkyle est un groupement alkyle en (C₁-C₆), hydroxy, aminocarbonyloxy, 2-tétrazolyle ou 3-méthyl-1,2,4-oxadiazol-5-yle ;
R⁴ est sélectionné dans le groupe consistant en un groupement hétéroarylalkyle dans lequel l'hétéroaryle est un benzofuran-2-yle et l'alkyle un groupement alkyle en (C₁-C₂), un groupement hétéroaryl-S(O)ₘ-alkyle dans lequel m est égal à 0, l'hétéroaryle est un 2-thiényle et l'alkyle un groupement alkyle en (C₁-C₂) et un groupement CH₂-CH=CH-aryle dans lequel l'aryle est un phényle ou un 2,5-difluorophényle ;
n est un nombre entier de 0 à 3 ; et
tautomère, énantiomère optiquement pur, mélange d'énantiomères, racémate, diastéréoisomère optiquement pur, mélange de diastéréoisomères, racémate diastéréoisomère, mélange de racémates diastéréoisomères, forme méso, sel ou complexe solvaté d'un tel composé.

2. Composé selon la revendication 1, où U représente CH et V représente N.

3. Composé selon la revendication 1, où M représente CH(OH)CH₂.

4. Composé selon la revendication 1, où R¹ représente un radical méthoxy ou cyano.

5. Composé selon la revendication 4, où R¹ représente un radical méthoxy.

6. Composé selon la revendication 1, où R² représente un hydrogène ou un fluor.

7. Composé selon la revendication 1, où R³ représente un groupement carboxy.

8. Composé selon la revendication 1, où R⁴ représente un groupement thiophén-2-ylsulfanyléthyle, (2,5-difluoro-phényl)-allyle ou benzofuran-2-ylméthyle.

9. Composé selon la revendication 8, où R⁴ représente un groupement thiophén-2-ylsulfanyléthyle.

10. Composé selon la revendication 1, qui est sélectionné dans le groupe consistant en les composés suivants :
• acide 3-{(*3R*,*4S*)-4-[2-(3-méthoxy-quinolin-5-yloxy)-éthyl]-1-[2-(thiophén-2-ylsulfanyl)-éthyl]-pipéridin-3-yl}-propionique ;
• 3-{(*3R*,*4S*)-4-[2-(3-méthoxy-quinolin-5-yloxy)-éthyl]-1-[2-(thiophén-2-ylsulfanyl)-éthyl]-pipéridin-3-yl}-propan-1-ol ;
• acide (3R,4R)-4-[3-(3-méthoxy-quinolin-5-yl)-propyl]-1-[2-(thiophén-2-ylsulfanyl)-éthyl]-pipéridine-3-carboxylique ;
• acide (*3R*,*4S*)-1-benzofuran-2-ylméthyl-4-[3-(3-méthoxy-quinolin-5-yl)-propyl]-pipéridine-3-carboxylique ;
• acide (*3R*,*4R*)-{4-[3-(3-méthoxy-quinolin-5-yl)-propyl]-1-[2-(thiophén-2-ylsulfanyl)-éthyl]-pipéridin-3-yl}-acétique ;
• 2-{(*3R*,*4S*)-4-[3-(3-méthoxy-quinolin-5-yl)-propyl]-1-[2-(thiophén-2-ylsulfanyl)-éthyl]-pipéridin-3-yl}-éthanol ;
• ester 2-{(*3R*,*4R*)-4-[3-(3-méthoxy-quinolin-5-yl)-propyl]-1-[2-(thiophén-2-ylsulfanyl)-éthyl]-pipéridin-3-yl}-éthylique de l'acide carbamique ;
• acide 4-[3-hydroxy-3-(3-méthoxy-quinolin-5-yl)-propyl]-1-[2-(thiophén-2-ylsulfanyl)-éthyl]-pipéridine-3-carboxylique ;
• acide 1-benzofuran-2-ylméthyl-(*3R*,*4R*)-4-[(*3RS*)-3-hydroxy-3-(3-méthoxy-quinolin-5-yl)-propyl]-pipéridine-3-carboxylique ;
• acide (*3R*,*4R*)-4-[(*3RS*)-3-hydroxy-3-(3-méthoxy-quinolin-5-yl)-propyl]-1-*trans*-(3-phényl-allyl)-pipéridine-3-carboxylique ;
• acide (*3R*,*4R*)-1-[3-(2,5-difluoro-phényl)-allyl]-4-[(*3RS*)-3-hydroxy-3-(3-méthoxy-quinolin-5-yl)-propyl]-pipéridine-3-carboxylique ;
• acide (*3R*,*4R*)-4-[(*3RS*)-3-hydroxy-3-(3-méthoxy-quinolin-5-yl)-propyl]-1-(thiazol-2-ylcarbamoylméthyl)-pipéridine-3-carboxylique ;
• acide {(*3R*,*4S*)-4-[(*2R*,*3R*)-2,3-dihydroxy-3-(3-méthoxy-quinolin-5-yl)-propyl]-1-[2-(thiophén-2-ylsulfanyl)-éthyl]-pipéridin-3-yl}-acétique ;
• (*1R*,*2R*)-[(*3R*,*4S*)-3-{3-(2-hydroxy-éthyl)-1-[2-(thiophén-2-ylsulfanyl)-éthyl]-pipéridin-4-yl}]-1-(3-méthoxy-quinolin-5-yl)-propane-1,2-diol ;
• (*1R*,*2R*)-{(*3R*,*4S*)-3-[1-[3-*trans*-(2,5-difluoro-phényl)-allyl]-3-(2-hydroxy-éthyl)-pipéridin-4-yl]}-1-(3-méthoxy-quinolin-5-yl)-propane-1,2-diol ;
• acide (*3R*,*4R*)-4-[(*3RS*)-3-hydroxy-3-(3-méthoxy-quinolin-5-yl)-propyl]-1-(3-phényl-propyl)-pipéridine-3-carboxylique ;
• acide (*3R*,*4R*)-4-[(*3RS*)-3-hydroxy-3-(3-méthoxy-quinolin-5-yl)-propyl]-1-(2-phénylsulfanyl-éthyl)-pipéridine-3-carboxylique ;
• (*1R*,*2R*)-3-{(*3R*,*4S*)-3-(2-hydroxy-éthyl)-1-[2-(thiophén-2-ylsulfanyl)-éthyl]-pipéridin-4-yl}-1-(3-méthoxy-quinoxalin-5-yl)-propane-1,2-diol ;
et les sels pharmaceutiquement acceptables de ces derniers.

11. Composé selon la revendication 10, qui est sélectionné dans le groupe consistant en les composés suivants :
• acide 3-{(*3R*,*4S*)-4-[2-(3-méthoxy-quinolin-5-yloxy)-éthyl]-1-[2-(thiophén-2-ylsulfanyl)-éthyl]-pipéridin-3-yl}-propionique ;
• 3-{(*3R*,*4S*)-4-[2-(3-méthoxy-quinolin-5-yloxy)-éthyl]-1-[2-(thiophén-2-ylsulfanyl)-éthyl]-pipéridin-3-yl}-propan-1-ol ;
• acide (*3R*,*4R*)-4-[3-(3-méthoxy-quinolin-5-yl)-propyl]-1-[2-(thiophén-2-ylsulfanyl)-éthyl]-pipéridine-3-carboxylique ;
et les sels pharmaceutiquement acceptables de ces derniers.

12. En tant que médicament, composé de formule I tel que défini à la revendication 1 ou sel pharmaceutiquement acceptable de celui-ci.

13. Composition pharmaceutique contenant, comme principe actif, un composé de formule I tel que défini à la revendication 1 à ou un sel pharmaceutiquement acceptable de celui-ci et au moins un excipient inerte sur le plan thérapeutique.

14. Composé de formule I tel que défini à la revendication 1 ou sel pharmaceutiquement acceptable de celui-ci pour la prévention ou le traitement d'infections.
